(19) Europäisches Patentamt
European Patent Office
Office européen des brevets

(11) **EP 4 557 658 A1**

(12) **EUROPEAN PATENT APPLICATION**
published in accordance with Art. 153(4) EPC


(43) Date of publication:
**21.05.2025 Bulletin 2025/21**

(21) Application number: **23851615.7**

(22) Date of filing: **28.07.2023**

(51) International Patent Classification (IPC):
***H04L 5/00*** *(2006.01)*

(52) Cooperative Patent Classification (CPC):
**H04L 5/00**

(86) International application number:
**PCT/CN2023/109996**

(87) International publication number:
**WO 2024/032394 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210969483**



(71) Applicant: **Huawei Technologies Co., Ltd.**
**Shenzhen, Guangdong 518129 (CN)**

(72) Inventors:
- **DONG, Changzhao**
  **Shenzhen, Guangdong 518129 (CN)**
- **GAO, Xiang**
  **Shenzhen, Guangdong 518129 (CN)**
- **LIU, Xianda**
  **Shenzhen, Guangdong 518129 (CN)**
- **LIU, Kunpeng**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**


(54) **COMMUNICATION METHOD AND APPARATUS**


(57) This application discloses a communication method and apparatus. The method includes: A terminal device receives first indication information from a network device, to indicate a demodulation reference signal type. The terminal device receives second indication information from the network device, to indicate a first value in a plurality of values included in a first set, where each value corresponds to a group of port index values, a port corresponding to the group of port index values belongs to one or more of the following: a first port set, a second port set, and a third port set, and a time-frequency resource and a sequence corresponding to a port in the third port set are the same as time-frequency resources and sequences corresponding to a part or all of ports in the first port set. The terminal device receives a demodulation reference signal based on a time-frequency resource corresponding to a first group of port index values obtained based on the first value. According to this method, the network device can flexibly indicate a group of port index values to the terminal device, to ensure that the terminal device has a channel estimation capability and a maximum quantity of ports.


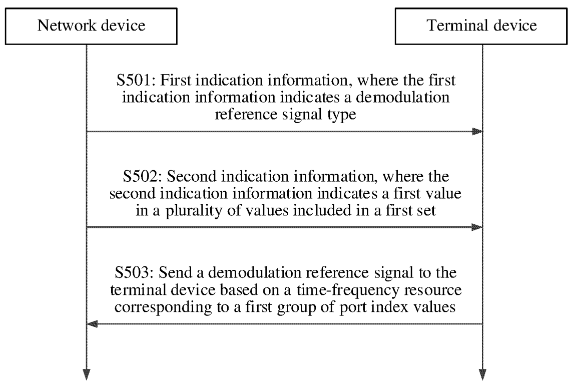


FIG. 5

EP 4 557 658 A1

## Description

### CROSS-REFERENCE TO RELATED APPLICATIONS

This application claims priority to Chinese Patent Application No. 202210969483.0, filed with the China National Intellectual Property Administration on August 12, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A demodulation reference signal (demodulation reference signal, DMRS) may be for estimating an equivalent channel of a data channel or a control channel. The data channel may be, for example, a physical uplink shared channel (physical uplink shared channel, PUSCH) or a physical downlink shared channel (physical downlink shared channel, PDSCH); and the control channel may be, for example, a physical downlink control channel (physical downlink control channel, PDCCH).

For example, in downlink data transmission, when sending data to a terminal device through the PDSCH, a network device may perform precoding on the data based on downlink channel state information (channel state information, CSI). Further, the network device may allocate a DMRS port to the terminal device, and send a DMRS to the terminal device through the PDSCH on a time-frequency resource corresponding to the DMRS port. Identical signal processing such as precoding is usually performed on the DMRS and the data. In this way, after receiving the DMRS corresponding to the DMRS port, the terminal device may obtain estimation on an equivalent channel according to a channel estimation algorithm, and then complete data demodulation based on the equivalent channel.

However, after DMRS port increasing, how the network device flexibly indicates, to the terminal device, the DMRS port allocated to the terminal device still needs to be further studied.

### SUMMARY

This application provides a communication method and apparatus, to flexibly indicate, to a terminal device after port increasing, a port allocated to the terminal device.

According to a first aspect, an embodiment of this application provides a communication method. The method may be applied to a terminal device or a component (for example, a processor, a chip, or a chip system) of the terminal device. For example, the method is applied to the terminal device. The method may specifically include the following steps: The terminal device receives first indication information from a network device, where the first indication information indicates a demodulation reference signal type. The terminal device receives second indication information from the network device, where the second indication information indicates a first value in a plurality of values included in a first set, each value in the first set corresponds to a group of port index values, the first set is associated with the demodulation reference signal type, a port corresponding to the group of port index values belongs to one or more of the following: a first port set, a second port set, and a third port set, and a time-frequency resource and a sequence corresponding to a port in the third port set are the same as time-frequency resources and sequences corresponding to a part or all of ports in the first port set. The terminal device receives a demodulation reference signal from the network device based on a time-frequency resource corresponding to a first group of port index values, where the first group of port index values is associated with the first value.

The first group of port index values may be associated with the first value according to a preset table. The preset table includes a plurality of values and a plurality of groups of port index values, each value corresponds to a group of port index values, and the first value corresponds to the first group of port index values. The terminal device may find, by looking up the table, the first group of port index values corresponding to the first value. Alternatively, the terminal device may obtain the first group of port index values based on an association with the first value according to a preset algorithm. Therefore, how to specifically associate the first group of port index values with the first value is not specifically limited in this application.

Optionally, each value in the first set further corresponds to any one or more of the following: a quantity of orthogonal multiplexing CDM groups without data and a quantity of symbols of the demodulation reference signal.

For example, the first indication information may be carried in an RRC message, or the first indication information is the RRC message. The second indication information may be carried in DCI signaling, or the second indication information is the DCI signaling. Alternatively, the first indication information and the second indication information are located in a same message. This is not specifically limited in this application.

In addition, in the solution of this application, the second port set and the third port set are port sets increased based on the first port set. A port in the third port set may reuse the time-frequency resource and the sequence corresponding to the first port set.

In the solution provided in this embodiment of this application, the network device sends the first indication information to the terminal device, to indicate the demodulation reference signal type. Then, the network device further sends the second indication information to the terminal device, to indicate the first value in the plurality of values included in the first set. Each value in the first set corresponds to a group of port index values, the first set is associated with the demodulation reference signal type, and a port corresponding to the group of port index values belongs to one or more of the first port set, the second port set, and the third port set. In addition, a time-frequency resource and a sequence corresponding to a port in the third port set are the same as a time-frequency resource and a sequence corresponding to a port in the first port set. The terminal device may receive the demodulation reference signal from the network device based on the time-frequency resource corresponding to the first group of port index values. The first group of port index values is obtained based on the first value. Therefore, it can be learned that, in the solution of this application, the network device may flexibly indicate a group of port index values to the terminal device. Because a port corresponding to the group of port index values may belong to a legacy port set, or may belong to an increased port set, and a port in the increased port set may reuse a time-frequency resource and a sequence corresponding to a port in the legacy port set, the network device flexibly indicates, to the terminal device, ports paired from different port sets, so that the terminal device can achieve a channel estimation capability, and a quantity of combination ports can also be maximized.

The following describes orthogonality of frequency domain cover codes corresponding to ports in the first port set, the second port set, and the third port set. An orthogonal manner of frequency domain cover code sequences corresponding to ports in the first port set, the second port set, and the third port set may include but is not limited to the following several manners:

First manner: Length 2 frequency domain cover code sequences corresponding to a first port and a fourth port are orthogonal, the first port and the fourth port belong to the first port set or the third port set, and the length 2 frequency domain cover code sequence includes corresponding frequency domain cover code sequences on two consecutive subcarriers in a CDM group.

It may be understood that the length 2 frequency domain cover code sequences corresponding to the first port and the fourth port are orthogonal, the first port and the fourth port belong to the first port set or the third port set, and the length 2 frequency domain cover code sequence includes corresponding frequency domain cover code sequences on two consecutive subcarriers in a CDM group.

Optionally, the length 2 frequency domain cover code sequences corresponding to the first port and the fourth port are orthogonal, and satisfy the following formula:

$$\boldsymbol{W}_{1,f}^{\mathrm{H}}\boldsymbol{W}_{4,f} = 0,$$

where $\boldsymbol{W}_{\mathbf{1},\boldsymbol{f}} = \begin{bmatrix} W_{1,1} \\ W_{1,2} \end{bmatrix}$ represents a first frequency domain cover code sequence corresponding to the first port, $\boldsymbol{W}_{\mathbf{4},\boldsymbol{f}} = \begin{bmatrix} W_{4,1} \\ W_{4,2} \end{bmatrix}$ represents a fourth frequency domain cover code sequence corresponding to the fourth port, and *f* represents a frequency domain location.

Second manner: Length 4 frequency domain cover code sequences corresponding to a second port and a third port are orthogonal, the second port and the third port belong to the second port set and/or the third port set, and the length 4 frequency domain cover code sequence includes corresponding frequency domain cover codes on four consecutive subcarriers in a CDM group.

Optionally, the length 4 frequency domain cover code sequences corresponding to the second port and the third port are orthogonal, and satisfy the following formula:

$$\boldsymbol{W}_{2,f}^{\mathrm{H}}\boldsymbol{W}_{3,f} = 0,$$

where $\boldsymbol{W}_{2,f}=\begin{bmatrix}W_{2,1}\\W_{2,2}\\W_{2,3}\\W_{2,4}\end{bmatrix}$ represents a second frequency domain cover code sequence corresponding to the second port, $\boldsymbol{W}_{3,f}=\begin{bmatrix}W_{3,1}\\W_{3,2}\\W_{3,3}\\W_{3,4}\end{bmatrix}$ represents a third frequency domain cover code sequence corresponding to the third port, and *f* represents a frequency domain location.

Third manner: Length 6 frequency domain cover code sequences corresponding to a second port and a third port are orthogonal, the second port and the third port belong to the second port set and/or the third port set, and the length 6 frequency domain cover code sequence includes corresponding frequency domain cover codes on six consecutive subcarriers in a CDM group.

Optionally, the length 6 frequency domain cover code sequences corresponding to the second port and the third port are orthogonal, and satisfy the following formula:

$$\boldsymbol{W}_{2,f}^{\mathrm{H}}\boldsymbol{W}_{3,f}=0,$$

where $\boldsymbol{W}_{2,f}=\begin{bmatrix}W_{2,1}\\W_{2,2}\\W_{2,3}\\W_{2,4}\\W_{2,5}\\W_{2,6}\end{bmatrix}$ represents a second frequency domain cover code sequence corresponding to the second port, $\boldsymbol{W}_{3,f}=\begin{bmatrix}W_{3,1}\\W_{3,2}\\W_{3,3}\\W_{3,4}\\W_{3,5}\\W_{3,6}\end{bmatrix}$ represents a third frequency domain cover code sequence corresponding to the third port, and *f* represents a frequency domain location.

In an implementation, the terminal device determines, based on the demodulation reference signal type indicated by the first indication information, the first value indicated by the second indication information, and a preset table (in the preset table, a plurality of values and corresponding port index values may be increased based on existing table content, the preset table may be public, and the network device and the terminal device know the table or have locally stored the table), the first group of port index values corresponding to the first value, and therefore can learn a port allocated by the network device to the terminal device.

In an implementation, the first group of port index values indicated by the network device to the terminal device by using the first value includes but is not limited to the following cases:

Case 1: The first group of port index values includes an index value of a fifth port, and frequency domain cover codes corresponding to the fifth port and a sixth port are non-orthogonal on adjacent subcarriers in a same CDM group.

The fifth port belongs to the first port set, and the sixth port belongs to the second port set.

Optionally, the frequency domain cover code sequences corresponding to the fifth port and the sixth port are non-orthogonal on adjacent subcarriers in a same CDM group, and satisfy the following formula:

$$\boldsymbol{W}_{5}^{\mathrm{H}}\boldsymbol{W}_{6}\neq 0,$$

where

$\boldsymbol{W_5}$ represents a fifth frequency domain cover code sequence corresponding to the fifth port, and $\boldsymbol{W_6}$ represents a sixth frequency domain cover code sequence corresponding to the sixth port.

In Case 1, if the network device indicates the index value of the fifth port in the first port set to the terminal device, the sixth port may be determined from the second port set, and the sixth port meets the foregoing condition (that is, the frequency domain cover codes corresponding to the fifth port and the sixth port are non-orthogonal on adjacent subcarriers in a same CDM group). It can be learned that the sixth port is not indicated to another port.

Case 2: The first group of port index values includes an index value of a seventh port, and frequency domain cover codes corresponding to the sixth port and the seventh port are non-orthogonal on adjacent subcarriers in a same CDM group.

The sixth port belongs to the second port set, and the seventh port belongs to the third port set.

It should be noted that, that the frequency domain cover codes corresponding to the sixth port and the seventh port are non-orthogonal on adjacent subcarriers in a same CDM group may be understood as follows: The sixth port and the seventh port are in a same CDM group, correspond to same frequency domain orthogonal cover codes on a group of adjacent subcarriers, and correspond to different frequency domain orthogonal cover codes on another group or other groups of adjacent subcarriers in a same RB.

Optionally, the frequency domain cover code sequences corresponding to the sixth port and the seventh port are non-orthogonal on adjacent subcarriers in a same CDM group, and satisfy the following formula:

$$\boldsymbol{W}_6^{\mathrm{H}}\boldsymbol{W}_7 \neq 0,$$

where

$\boldsymbol{W_6}$ represents a sixth frequency domain cover code sequence corresponding to the sixth port, and $\boldsymbol{W_7}$ represents a seventh frequency domain cover code sequence corresponding to the seventh port.

In Case 2, if the network device indicates the index value of the seventh port in the third port set to the terminal device, the sixth port may be determined from the second port set, and the sixth port meets the foregoing condition (that is, the frequency domain cover codes corresponding to the fifth port and the sixth port are non-orthogonal on adjacent subcarriers in a same CDM group). It can be learned that the sixth port is indicated to another port.

In addition, the fifth port in the first port set and the seventh port in the third port set correspond to same frequency domain orthogonal cover code sequences on all subcarriers, and a time-frequency resource and a sequence of the fifth port are the same as a time-frequency resource and a sequence of the seventh port.

Therefore, it can be learned that the fifth port in the first port set and the seventh port in the third port set correspond to same frequency domain orthogonal cover code sequences on all subcarriers, and the seventh port may reuse the time-frequency resource and the sequence of the fifth port, so that the terminal device can accurately determine, based on the time-frequency resource and the sequence corresponding to the fifth port, the time-frequency resource and the sequence corresponding to the seventh port.

Case 3: If the first group of port index values includes an index value of an eighth port and an index value of a ninth port, length 4 frequency domain cover code sequences or length 6 frequency domain cover code sequences corresponding to the eighth port and the ninth port are orthogonal, and length 2 frequency domain cover code sequences corresponding to the eighth port and the ninth port are non-orthogonal.

Length 2 frequency domain cover code sequences corresponding to the eighth port and a tenth port are orthogonal, and length 2 frequency domain cover code sequences corresponding to the ninth port and the tenth port are orthogonal.

The eighth port belongs to the second port set, the ninth port belongs to the third port set, the tenth port belongs to the first port set, and the eighth port, the ninth port, and the tenth port are all in a same CDM group.

It should be noted that, that the length 2 frequency domain cover codes corresponding to the eighth port and the ninth port are non-orthogonal may alternatively be understood as follows: The eighth port and the ninth port are in the same CDM group, correspond to same frequency domain orthogonal cover codes on a group of adjacent subcarriers, and correspond to different frequency domain orthogonal cover codes on another group or other groups of adjacent subcarriers in a same RB.

In addition, that the length 2 frequency domain cover codes corresponding to the eighth port and the tenth port are orthogonal, and the length 2 frequency domain cover codes corresponding to the ninth port and the tenth port are orthogonal may be understood as follows: The eighth port and the tenth port are orthogonal on two adjacent subcarriers in the same CDM group, and the ninth port and the tenth port are also orthogonal on two adjacent subcarriers in the same CDM group.

Optionally, the length 4 frequency domain cover code sequences corresponding to the eighth port and the ninth port are orthogonal, and satisfy the following formula:

$$\boldsymbol{W}_{8,f}^{\mathrm{H}}\boldsymbol{W}_{9,f} = 0,$$

where $\boldsymbol{W}_{8,f} = \begin{bmatrix} W_{8,1} \\ W_{8,2} \\ W_{8,3} \\ W_{8,4} \end{bmatrix}$ represents an eighth frequency domain cover code sequence corresponding to the eighth port, $\boldsymbol{W}_{9,f} = \begin{bmatrix} W_{9,1} \\ W_{9,2} \\ W_{9,3} \\ W_{9,4} \end{bmatrix}$ represents a ninth frequency domain cover code sequence corresponding to the ninth port, and *f* represents a frequency domain location.

Optionally, the length 6 frequency domain cover code sequences corresponding to the eighth port and the ninth port are orthogonal, and satisfy the following formula:

$$\boldsymbol{W}_{8,f}^{\mathrm{H}}\boldsymbol{W}_{9,f} = 0,$$

where $\boldsymbol{W}_{8,f} = \begin{bmatrix} W_{8,1} \\ W_{8,2} \\ W_{8,3} \\ W_{8,4} \\ W_{8,5} \\ W_{8,6} \end{bmatrix}$ represents an eighth frequency domain cover code sequence corresponding to the eighth port, $\boldsymbol{W}_{9,f} = \begin{bmatrix} W_{9,1} \\ W_{9,2} \\ W_{9,3} \\ W_{9,4} \\ W_{9,5} \\ W_{9,6} \end{bmatrix}$ represents a ninth frequency domain cover code sequence corresponding to the ninth port, and *f* represents a frequency domain location.

Optionally, the length 2 frequency domain cover code sequences corresponding to the eighth port and the ninth port are non-orthogonal, and satisfy the following formula:

$$\boldsymbol{W}_{8,f}^{\mathrm{H}}\boldsymbol{W}_{9,f} \neq 0,$$

where $\boldsymbol{W}_{8,f} = \begin{bmatrix} W_{8,1} \\ W_{8,2} \end{bmatrix}$ represents an eighth frequency domain cover code sequence corresponding to the eighth port, $\boldsymbol{W}_{9,f} = \begin{bmatrix} W_{9,1} \\ W_{9,2} \end{bmatrix}$ represents a ninth frequency domain cover code sequence corresponding to the ninth port, and *f* represents a frequency domain location.

Optionally, the length 2 frequency domain cover code sequences corresponding to the eighth port and the tenth port are orthogonal, and satisfy the following formula:

$$\boldsymbol{W}_{8,f}^{\mathrm{H}}\boldsymbol{W}_{10,f} = 0,$$

where $\begin{bmatrix} W_{8,1} \\ W_{8,2} \end{bmatrix}$ represents an eighth frequency domain cover code sequence corresponding to the eighth port, $\boldsymbol{W}_{10,f} = \begin{bmatrix} W_{10,1} \\ W_{10,2} \end{bmatrix}$ represents a tenth frequency domain cover code sequence corresponding to the tenth port, and *f* represents a frequency domain location.

Optionally, the length 2 frequency domain cover code sequences corresponding to the ninth port and the tenth port are orthogonal, and satisfy the following formula:

$$\boldsymbol{W}_{9,f}^{\mathrm{H}} \boldsymbol{W}_{10,f} = 0,$$

where $\boldsymbol{W}_{9,f} = \begin{bmatrix} W_{9,1} \\ W_{9,2} \end{bmatrix}$ represents a ninth frequency domain cover code sequence corresponding to the ninth port, $\boldsymbol{W}_{10,f} = \begin{bmatrix} W_{10,1} \\ W_{10,2} \end{bmatrix}$ represents a tenth frequency domain cover code sequence corresponding to the tenth port, and *f* represents a frequency domain location.

In Case 3, when the network device sends the second indication information to the terminal device, to indicate to the terminal device that the first group of port index values includes the eighth port and the ninth port, the length 4 frequency domain cover codes or the length 6 frequency domain cover codes corresponding to the eighth port and the ninth port are orthogonal, but the length 2 frequency domain cover codes corresponding to the eighth port and the ninth port are non-orthogonal. In this case, the network device may determine the tenth port. A length 2 frequency domain cover code corresponding to the tenth port is separately orthogonal to the length 2 frequency domain cover codes corresponding to the eighth port and the ninth port, or a length 4 frequency domain cover code corresponding to the tenth port is separately orthogonal to the length 4 frequency domain cover codes corresponding to the eighth port and the ninth port. In the solution of this embodiment of this application, the tenth port that meets the foregoing orthogonality condition may be preferentially selected from the first port set, so that the network device can indicate the tenth port to another terminal device for use, to ensure orthogonality of DMRS ports in a CDM group, and suppress interference between demodulation reference signals (which may be from different terminals) transmitted on different ports.

Case 4: If the first group of port index values includes an index value of an eleventh port and an index value of a twelfth port, length 4 frequency domain cover code sequences corresponding to the eleventh port and the twelfth port are orthogonal, and length 2 frequency domain cover code sequences corresponding to the eleventh port and the twelfth port are orthogonal.

A length 4 frequency domain cover code sequence corresponding to the eleventh port is separately orthogonal to length 4 frequency domain cover code sequences corresponding to a thirteenth port and a fourteenth port, and a length 4 frequency domain cover code sequence corresponding to the twelfth port is separately orthogonal to the length 4 frequency domain cover code sequences corresponding to the thirteenth port and the fourteenth port.

The eleventh port, the twelfth port, the thirteenth port, and the fourteenth port belong to the second port set or the third port set.

Optionally, the length 4 frequency domain cover code sequences corresponding to the eleventh port and the twelfth port are orthogonal, and satisfy the following formula:

$$\boldsymbol{W}_{11,f}^{\mathrm{H}} \boldsymbol{W}_{12,f} = 0,$$

where $\boldsymbol{W}_{11,f} = \begin{bmatrix} W_{11,1} \\ W_{11,2} \\ W_{11,3} \\ W_{11,4} \end{bmatrix}$ represents an eleventh frequency domain cover code sequence corresponding to the

eleventh port, $\boldsymbol{W}_{12,f}=\begin{bmatrix}W_{12,1}\\W_{12,2}\\W_{12,3}\\W_{12,4}\end{bmatrix}$ represents a twelfth frequency domain cover code sequence corresponding to the twelfth port, and *f* represents a frequency domain location.

The length 2 frequency domain cover code sequences corresponding to the eleventh port and the twelfth port are orthogonal, and satisfy the following formula:

$$\boldsymbol{W}_{11,f}^{\mathrm{H}}\boldsymbol{W}_{12,f}=0,$$

where $\boldsymbol{W}_{11,f}=\begin{bmatrix}W_{11,1}\\W_{11,2}\end{bmatrix}$ represents an eleventh frequency domain cover code sequence corresponding to the eleventh port, $\boldsymbol{W}_{12,f}=\begin{bmatrix}W_{12,1}\\W_{12,2}\end{bmatrix}$ represents a twelfth frequency domain cover code sequence corresponding to the twelfth port, and *f* represents a frequency domain location.

Optionally, the length 4 frequency domain cover code sequences corresponding to the eleventh port and the thirteenth port are orthogonal, and satisfy the following formula:

$$\boldsymbol{W}_{12,f}^{\mathrm{H}}\boldsymbol{W}_{13,f}=0,$$

where $\boldsymbol{W}_{12,f}=\begin{bmatrix}W_{12,1}\\W_{12,2}\\W_{12,3}\\W_{12,4}\end{bmatrix}$ represents a twelfth frequency domain cover code sequence corresponding to the twelfth port, $\boldsymbol{W}_{13,f}=\begin{bmatrix}W_{13,1}\\W_{13,2}\\W_{13,3}\\W_{13,4}\end{bmatrix}$ represents a thirteenth frequency domain cover code sequence corresponding to the thirteenth port, and *f* represents a frequency domain location.

Optionally, the length 4 frequency domain cover code sequences corresponding to the eleventh port and the fourteenth port are orthogonal, and satisfy the following formula:

$$\boldsymbol{W}_{11,f}^{\mathrm{H}}\boldsymbol{W}_{14,f}=0,$$

where $\boldsymbol{W}_{11,f}=\begin{bmatrix}W_{8,1}\\W_{8,2}\\W_{8,3}\\W_{8,4}\end{bmatrix}$ represents an eleventh frequency domain cover code sequence corresponding to the eleventh port, $\boldsymbol{W}_{14,f}=\begin{bmatrix}W_{14,1}\\W_{14,2}\\W_{14,3}\\W_{14,4}\end{bmatrix}$ represents a fourteenth frequency domain cover code sequence corresponding to the fourteenth port, and *f* represents a frequency domain location.

Optionally, the length 4 frequency domain cover code sequences corresponding to the twelfth port and the thirteenth port are orthogonal, and satisfy the following formula:

$$\boldsymbol{W}_{8,f}^{\mathrm{H}}\boldsymbol{W}_{9,f} = 0,$$

where $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the twelfth port, $\boldsymbol{W}_{13,f} = \begin{bmatrix} W_{13,1} \\ W_{13,2} \\ W_{13,3} \\ W_{13,4} \end{bmatrix}$ represents a thirteenth frequency domain cover code sequence corresponding to the thirteenth port, and *f* represents a frequency domain location.

Optionally, the length 4 frequency domain cover code sequences corresponding to the twelfth port and the fourteenth port are orthogonal, and satisfy the following formula:

$$\boldsymbol{W}_{12,f}^{\mathrm{H}}\boldsymbol{W}_{14,f} = 0,$$

where $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the twelfth port, $\boldsymbol{W}_{14,f} = \begin{bmatrix} W_{14,1} \\ W_{14,2} \\ W_{14,3} \\ W_{14,4} \end{bmatrix}$ represents a fourteenth frequency domain cover code sequence corresponding to the fourteenth port, and *f* represents a frequency domain location.

In Case 4, when the network device sends the second indication information to the terminal device, to indicate to the terminal device that the first group of port index values includes the index value of the eleventh port and the index value of the twelfth port, the length 4 frequency domain cover code sequences corresponding to the eleventh port and the twelfth port are orthogonal, and the length 2 frequency domain cover code sequences corresponding to the eleventh port and the twelfth port are orthogonal. In this case, the network device may find the thirteenth port and the fourteenth port from the second port set or the third port set, and both length 4 frequency domain cover code sequences corresponding to the thirteenth port and the fourteenth port may be orthogonal to the length 4 frequency domain cover code sequences corresponding to the eleventh port and the twelfth port, so that the network device indicates the thirteenth port and the fourteenth port to another terminal device for use, to ensure orthogonality of DMRS ports in a CDM group, and suppress interference between demodulation reference signals (which may be from different terminals) transmitted on different ports.

In a possible implementation, $W_{n,f}$ is $w_f(k')$ in a first time-frequency resource mapping formula, where n is a port index value. The first time-frequency resource mapping formula satisfies the following formula:

$$a_{k,l}^{(p,\mu)} = \beta_{PDSCH}^{DMRS} w_f(k') w_t(l') r(2n+k')$$
$$k = \begin{cases} 4n + 2k' + \Delta & Type1 \\ 6n + k' + \Delta & Type2 \end{cases};$$
$$k' = 0,1;$$
$$l = \bar{l} + l';$$
$$n = 0,1,...;$$
$$l' = 0,1;$$
,

where $p$ is a port index value, $\mu$ is a subcarrier spacing parameter, $a^{(p,\mu)}_{k,l}$ is a demodulation reference signal DMRS symbol corresponding to a demodulation reference signal DMRS port $p$ mapped to a resource element RE with an index $(k, l)_{p,\mu}$, $\beta_{PDSCH}^{DMRS}$ is a power scaling factor or a power control factor, $w_t(l')$ is a time domain cover code sequence element corresponding to a time domain symbol with an index $l'$, $w_f(k')$ is a frequency domain cover code sequence element corresponding to a subcarrier with an index $k'$, m = $2n + k'$, $n$ is the $n^{th}$ element in a reference signal sequence, $l$ represents an index of an O orthogonal frequency division multiplexing FDM symbol included in a slot, $\bar{l}$ is a symbol index of a start time domain symbol occupied by the DMRS symbol or a symbol index of a reference time domain symbol, and $\Delta$ is a subcarrier offset factor.

It can be learned from this embodiment that, $W_{n,f}$ may be $w_f(k')$ in the first time-frequency resource mapping formula (an existing time-frequency resource mapping rule). That is, f may be represented as a corresponding subcarrier location or sequence number.

According to a second aspect, an embodiment of this application provides a communication method. The method may be applied to a network device or a component (for example, a processor, a chip, or a chip system) of the network device. For example, the method is applied to the network device. The method may specifically include the following steps: The network device sends first indication information to a terminal device, where the first indication information indicates a demodulation reference signal type. The network device sends second indication information to the terminal device, where the second indication information indicates a first value in a plurality of values included in a first set, each value in the first set corresponds to a group of port index values, the first set is associated with the demodulation reference signal, a port corresponding to the group of port index values belongs to one or more of the following: a first port set, a second port set, and a third port set, and a time-frequency resource and a sequence corresponding to a port in the third port set are the same as time-frequency resources and sequences corresponding to a part or all of ports in the first port set. The network device sends a demodulation reference signal to the terminal device based on a time-frequency resource corresponding to a first group of port index values, where the first group of port index values is associated with the first value.

Optionally, each value in the first set further corresponds to any one or more of the following:
a quantity of orthogonal multiplexing CDM groups without data and a quantity of symbols of the demodulation reference signal.

For example, the first indication information may be carried in an RRC message, or the first indication information is the RRC message. The second indication information may be carried in DCI signaling, or the second indication information is the DCI signaling. Alternatively, the first indication information and the second indication information are located in a same message. This is not specifically limited in this application.

In addition, in the solution of this application, the second port set and the third port set are port sets increased based on the first port set. A port in the third port set may reuse the time-frequency resource and the sequence corresponding to the first port set.

In the solution provided in this embodiment of this application, the network device sends the first indication information to the terminal device, to indicate the demodulation reference signal type. The network device sends the second indication information to the terminal device, to indicate the first value in the plurality of values included in the first set. Each value in the first set corresponds to a group of port index values, the first set is associated with the demodulation reference signal, and a port corresponding to the group of port index values belongs to one or more of the first port set, the second port set, and the third port set. A time-frequency resource and a sequence corresponding to a port in the third port set are the same as time-frequency resources and sequences corresponding to a part or all of ports in the first port set. The network device sends the demodulation reference signal to the terminal device based on the time-frequency resource corresponding to the first group of port index values. The first group of port index values is obtained based on the first value. Therefore, it can be learned that, in the solution of this application, the network device may flexibly indicate a group of port index values to the terminal device. Because a port corresponding to the group of port index values may belong to a legacy port set, or may belong to an increased port set, and a port in the increased port set may reuse a time-frequency resource and a sequence corresponding to a port in the legacy port set, the network device flexibly indicates, to the terminal device, ports paired from different port sets, so that the terminal device can achieve a channel estimation capability, and a quantity of combination ports can also be maximized.

In a possible implementation, length 2 frequency domain cover code sequences corresponding to a first port and a fourth port are orthogonal, the first port and the fourth port belong to the first port set or the third port set, and the length 2 frequency domain cover code sequence includes corresponding frequency domain cover code sequences on two consecutive subcarriers in a CDM group.

In a possible implementation, the length 2 frequency domain cover code sequences corresponding to the first port and the fourth port are orthogonal, and satisfy the following formula:

$$\boldsymbol{W}_{1,f}^{\mathrm{H}}\boldsymbol{W}_{4,f} = 0,$$

where $\boldsymbol{W}_{\boldsymbol{1},f} = \begin{bmatrix} W_{1,1} \\ W_{1,2} \end{bmatrix}$ represents a first frequency domain cover code sequence corresponding to the first port, $\boldsymbol{W}_{\boldsymbol{4},\boldsymbol{f}} = \begin{bmatrix} W_{4,1} \\ W_{4,2} \end{bmatrix}$ represents a fourth frequency domain cover code sequence corresponding to the fourth port, and *f* represents a frequency domain location.

In a possible implementation, length 4 frequency domain cover code sequences corresponding to a second port and a third port are orthogonal, the second port and the third port belong to the second port set and/or the third port set, and the length 4 frequency domain cover code sequence includes corresponding frequency domain cover code sequences on four consecutive subcarriers in a CDM group.

In a possible implementation, the length 4 frequency domain cover code sequences corresponding to the second port and the third port are orthogonal, and satisfy the following formula:

$$\boldsymbol{W}_{2,f}^{\mathrm{H}}\boldsymbol{W}_{3,f} = 0,$$

where $\boldsymbol{W}_{2,f} = \begin{bmatrix} W_{2,1} \\ W_{2,2} \\ W_{2,3} \\ W_{2,4} \end{bmatrix}$ represents a second frequency domain cover code sequence corresponding to the second port, $\boldsymbol{W}_{3,f} = \begin{bmatrix} W_{3,1} \\ W_{3,2} \\ W_{3,3} \\ W_{3,4} \end{bmatrix}$ represents a third frequency domain cover code sequence corresponding to the third port, and *f* represents a frequency domain location.

In a possible implementation, length 6 frequency domain cover code sequences corresponding to a second port and a third port are orthogonal, the second port and the third port belong to the second port set and/or the third port set, and the length 6 frequency domain cover code sequence includes corresponding frequency domain cover code sequences on six consecutive subcarriers in a CDM group.

In a possible implementation, the length 6 frequency domain cover code sequences corresponding to the second port and the third port are orthogonal, and satisfy the following formula:

$$\boldsymbol{W}_{2,f}^{\mathrm{H}}\boldsymbol{W}_{3,f} = 0,$$

where $\boldsymbol{W}_{2,f} = \begin{bmatrix} W_{2,1} \\ W_{2,2} \\ W_{2,3} \\ W_{2,4} \\ W_{2,5} \\ W_{2,6} \end{bmatrix}$ represents a second frequency domain cover code sequence corresponding to the second port, $\boldsymbol{W}_{3,f} = \begin{bmatrix} W_{3,1} \\ W_{3,2} \\ W_{3,3} \\ W_{3,4} \\ W_{3,5} \\ W_{3,6} \end{bmatrix}$ represents a third frequency domain cover code sequence corresponding to the third port, and *f* represents a frequency domain location.

In a possible implementation, if the first group of port index values includes an index value of a fifth port, the network device determines that a sixth port is not indicated to another terminal device.

The fifth port belongs to the first port set, the sixth port belongs to the second port set, and frequency domain cover code sequences corresponding to the fifth port and the sixth port are non-orthogonal on adjacent subcarriers in a same CDM group.

In a possible implementation, the frequency domain cover code sequences corresponding to the fifth port and the sixth port are non-orthogonal on adjacent subcarriers in a same CDM group, and satisfy the following formula:

$$\boldsymbol{W}_5^{\mathrm{H}}\boldsymbol{W}_6 \neq 0,$$

where

$\boldsymbol{W}_5$ represents a fifth frequency domain cover code sequence corresponding to the fifth port, and $\boldsymbol{W}_6$ represents a sixth frequency domain cover code sequence corresponding to the sixth port.

In a possible implementation, if the first group of port index values includes an index value of a seventh port, the network device indicates a sixth port to another terminal device.

The sixth port belongs to the second port set, the seventh port belongs to the third port set, and frequency domain cover code sequences corresponding to the sixth port and the seventh port are non-orthogonal on adjacent subcarriers in a same CDM group.

In a possible implementation, the frequency domain cover code sequences corresponding to the sixth port and the seventh port are non-orthogonal on adjacent subcarriers in a same CDM group, and satisfy the following formula:

$$\boldsymbol{W}_6^{\mathrm{H}}\boldsymbol{W}_7 \neq 0,$$

where

$\boldsymbol{W}_6$ represents a sixth frequency domain cover code sequence corresponding to the sixth port, and $\boldsymbol{W}_7$ represents a seventh frequency domain cover code sequence corresponding to the seventh port.

In a possible implementation, the fifth port in the first port set and the seventh port in the third port set correspond to same frequency domain orthogonal cover codes on all subcarriers, and a time-frequency resource and a sequence of the fifth port are the same as a time-frequency resource and a sequence of the seventh port.

In a possible implementation, the first group of port index values includes an index value of an eighth port and an index value of a ninth port, length 4 frequency domain cover codes or length 6 frequency domain cover code sequences corresponding to the eighth port and the ninth port are orthogonal, and length 2 frequency domain cover code sequences corresponding to the eighth port and the ninth port are non-orthogonal.

Length 2 frequency domain cover code sequences corresponding to the eighth port and a tenth port are orthogonal, and length 2 frequency domain cover code sequences corresponding to the ninth port and the tenth port are orthogonal.

The eighth port belongs to the second port set, the ninth port belongs to the third port set, the tenth port belongs to the first port set, and the eighth port, the ninth port, and the tenth port are all in a same CDM group.

In a possible implementation, the length 4 frequency domain cover code sequences corresponding to the eighth port and the ninth port are orthogonal, and satisfy the following formula:

$$\boldsymbol{W}_{8,f}^{\mathrm{H}}\boldsymbol{W}_{9,f}=0,$$

where $\boldsymbol{W}_{8,f}=\begin{bmatrix}W_{8,1}\\W_{8,2}\\W_{8,3}\\W_{8,4}\end{bmatrix}$ represents an eighth frequency domain cover code sequence corresponding to the eighth port, $\boldsymbol{W}_{9,f}=\begin{bmatrix}W_{9,1}\\W_{9,2}\\W_{9,3}\\W_{9,4}\end{bmatrix}$ represents a ninth frequency domain cover code sequence corresponding to the ninth port, and $f$ represents a frequency domain location.

In a possible implementation, the length 6 frequency domain cover code sequences corresponding to the eighth port and the ninth port are orthogonal, and satisfy the following formula:

$$\boldsymbol{W}_{8,f}^{\mathrm{H}}\boldsymbol{W}_{9,f}=0,$$

where $\boldsymbol{W}_{8,f}=\begin{bmatrix}W_{8,1}\\W_{8,2}\\W_{8,3}\\W_{8,4}\\W_{8,5}\\W_{8,6}\end{bmatrix}$ represents an eighth frequency domain cover code sequence corresponding to the eighth port, $\boldsymbol{W}_{9,f}=\begin{bmatrix}W_{9,1}\\W_{9,2}\\W_{9,3}\\W_{9,4}\\W_{9,5}\\W_{9,6}\end{bmatrix}$ represents a ninth frequency domain cover code sequence corresponding to the ninth port, and $f$ represents a frequency domain location.

In a possible implementation, the length 2 frequency domain cover code sequences corresponding to the eighth port and the ninth port are non-orthogonal, and satisfy the following formula:

$$\boldsymbol{W}_{8,f}^{\mathrm{H}}\boldsymbol{W}_{9,f}\neq 0,$$

where $\boldsymbol{W}_{8,f}=\begin{bmatrix}W_{8,1}\\W_{8,2}\end{bmatrix}$ represents an eighth frequency domain cover code sequence corresponding to the eighth port, $\boldsymbol{W}_{9,f}=\begin{bmatrix}W_{9,1}\\W_{9,2}\end{bmatrix}$ represents a ninth frequency domain cover code sequence corresponding to the ninth port, and $f$ represents a frequency domain location.

In a possible implementation, the length 2 frequency domain cover code sequences corresponding to the eighth port and the tenth port are orthogonal, and satisfy the following formula:

$$\boldsymbol{W}_{8,f}^{\mathrm{H}}\boldsymbol{W}_{10,f}=0,$$

where $\boldsymbol{W}_{8,\boldsymbol{f}}=\begin{bmatrix}W_{8,1}\\W_{8,2}\end{bmatrix}$ represents an eighth frequency domain cover code sequence corresponding to the eighth port, $\boldsymbol{W}_{10,\boldsymbol{f}}=\begin{bmatrix}W_{10,1}\\W_{10,2}\end{bmatrix}$ represents a tenth frequency domain cover code sequence corresponding to the tenth port, and *f* represents a frequency domain location.

In a possible implementation, the length 2 frequency domain cover code sequences corresponding to the ninth port and the tenth port are orthogonal, and satisfy the following formula:

$$\boldsymbol{W}_{9,f}^{\mathrm{H}}\boldsymbol{W}_{10,f}=0,$$

where $\boldsymbol{W}_{9,\boldsymbol{f}}=\begin{bmatrix}W_{9,1}\\W_{9,2}\end{bmatrix}$ represents a ninth frequency domain cover code sequence corresponding to the ninth port, $\boldsymbol{W}_{10,\boldsymbol{f}}=\begin{bmatrix}W_{10,1}\\W_{10,2}\end{bmatrix}$ represents a tenth frequency domain cover code sequence corresponding to the tenth port, and *f* represents a frequency domain location.

In a possible implementation, the first group of port index values includes an index value of an eleventh port and an index value of a twelfth port, length 4 frequency domain cover code sequences corresponding to the eleventh port and the twelfth port are orthogonal, and length 2 frequency domain cover code sequences corresponding to the eleventh port and the twelfth port are orthogonal.

A length 4 frequency domain cover code sequence corresponding to the eleventh port is separately orthogonal to length 4 frequency domain cover code sequences corresponding to a thirteenth port and a fourteenth port, and a length 4 frequency domain cover code sequence corresponding to the twelfth port is separately orthogonal to the length 4 frequency domain cover code sequences corresponding to the thirteenth port and the fourteenth port.

The eleventh port, the twelfth port, the thirteenth port, and the fourteenth port belong to the second port set or the third port set.

In a possible implementation, the length 4 frequency domain cover code sequences corresponding to the eleventh port and the twelfth port are orthogonal, and satisfy the following formula:

$$\boldsymbol{W}_{11,f}^{\mathrm{H}}\boldsymbol{W}_{12,f}=0,$$

where $\boldsymbol{W}_{11,f}=\begin{bmatrix}W_{11,1}\\W_{11,2}\\W_{11,3}\\W_{11,4}\end{bmatrix}$ represents an eleventh frequency domain cover code sequence corresponding to the eleventh port, $\boldsymbol{W}_{12,f}=\begin{bmatrix}W_{12,1}\\W_{12,2}\\W_{12,3}\\W_{12,4}\end{bmatrix}$ represents a twelfth frequency domain cover code sequence corresponding to the twelfth port, and *f* represents a frequency domain location.

In a possible implementation, the length 2 frequency domain cover codes corresponding to the eleventh port and the twelfth port are orthogonal, and satisfy the following formula:

$$\boldsymbol{W}_{11,f}^{\mathrm{H}}\boldsymbol{W}_{12,f}=0,$$

where $\boldsymbol{W}_{11,\boldsymbol{f}} = \begin{bmatrix} W_{11,1} \\ W_{11,2} \end{bmatrix}$ represents an eleventh frequency domain cover code sequence corresponding to the eleventh port, $\boldsymbol{W}_{12,\boldsymbol{f}} = \begin{bmatrix} W_{12,1} \\ W_{12,2} \end{bmatrix}$ represents a twelfth frequency domain cover code sequence corresponding to the twelfth port, and *f* represents a frequency domain location.

In a possible implementation, the length 4 frequency domain cover code sequences corresponding to the eleventh port and the thirteenth port are orthogonal, and satisfy the following formula:

$$\boldsymbol{W}_{12,f}^{\mathrm{H}} \boldsymbol{W}_{13,f} = 0,$$

where $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the twelfth port, $\boldsymbol{W}_{13,f} = \begin{bmatrix} W_{13,1} \\ W_{13,2} \\ W_{13,3} \\ W_{13,4} \end{bmatrix}$ represents a thirteenth frequency domain cover code sequence corresponding to the thirteenth port, and *f* represents a frequency domain location.

In a possible implementation, the length 4 frequency domain cover code sequences corresponding to the eleventh port and the fourteenth port are orthogonal, and satisfy the following formula:

$$\boldsymbol{W}_{11,f}^{\mathrm{H}} \boldsymbol{W}_{14,f} = 0,$$

where $\boldsymbol{W}_{11,f} = \begin{bmatrix} W_{8,1} \\ W_{8,2} \\ W_{8,3} \\ W_{8,4} \end{bmatrix}$ represents an eleventh frequency domain cover code sequence corresponding to the eleventh port, $\boldsymbol{W}_{14,f} = \begin{bmatrix} W_{14,1} \\ W_{14,2} \\ W_{14,3} \\ W_{14,4} \end{bmatrix}$ represents a fourteenth frequency domain cover code sequence corresponding to the fourteenth port, and *f* represents a frequency domain location.

In a possible implementation, the length 4 frequency domain cover code sequences corresponding to the twelfth port and the thirteenth port are orthogonal, and satisfy the following formula:

$$\boldsymbol{W}_{8,f}^{\mathrm{H}} \boldsymbol{W}_{9,f} = 0,$$

where $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the twelfth

port, $$\boldsymbol{W}_{13,f} = \begin{bmatrix} W_{13,1} \\ W_{13,2} \\ W_{13,3} \\ W_{13,4} \end{bmatrix}$$ represents a thirteenth frequency domain cover code sequence corresponding to the thirteenth port, and *f* represents a frequency domain location.

In a possible implementation, the length 4 frequency domain cover code sequences corresponding to the twelfth port and the fourteenth port are orthogonal, and satisfy the following formula:

$$\boldsymbol{W}_{12,f}^{\mathrm{H}} \boldsymbol{W}_{14,f} = 0,$$

where $$\boldsymbol{W}_{12,f} = \begin{bmatrix} W_{12,1} \\ W_{12,2} \\ W_{12,3} \\ W_{12,4} \end{bmatrix}$$ represents a twelfth frequency domain cover code sequence corresponding to the twelfth port, $$\boldsymbol{W}_{14,f} = \begin{bmatrix} W_{14,1} \\ W_{14,2} \\ W_{14,3} \\ W_{14,4} \end{bmatrix}$$ represents a fourteenth frequency domain cover code sequence corresponding to the fourteenth port, and *f* represents a frequency domain location.

In a possible implementation, $W_{n,f}$ is $w_f(k')$ in a first time-frequency resource mapping formula, where n is a port index value. The first time-frequency resource mapping formula satisfies the following formula:

$$\begin{aligned} & a_{k,l}^{(p,\mu)} = \beta_{PDSCH}^{DMRS} w_{\mathrm{f}}(k') w_{\mathrm{t}}(l') r(2n+k') \\ & k = \begin{cases} 4n+2k'+\Delta & Type1 \\ 6n+k'+\Delta & Type2 \end{cases}; \\ & k' = 0,1; \\ & l = \bar{l} + l'; \\ & n = 0,1,...; \\ & l' = 0,1; \end{aligned},$$

where

*p* is a port index value, $\mu$ is a subcarrier spacing parameter, $a_{k,l}^{(p,\mu)}$ is a demodulation reference signal DMRS symbol corresponding to a demodulation reference signal DMRS port *p* mapped to a resource element RE with an index $(k,l)_{p,\mu}$, $\beta_{PDSCH}^{DMRS}$ is a power scaling factor or a power control factor, $w_t(l')$ is a time domain cover code sequence element corresponding to a time domain symbol with an index $l'$, $w_f(k')$ is a frequency domain cover code sequence element corresponding to a subcarrier with an index $k'$, $m = 2n + k'$, *n* is the $n^{th}$ element in a reference signal sequence, *l* represents an index of an O orthogonal frequency division multiplexing FDM symbol included in a slot, $\bar{l}$ is a symbol index of a start time domain symbol occupied by the DMRS symbol or a symbol index of a reference time domain symbol, and $\Delta$ is a subcarrier offset factor.

It should be noted that for a technical effect achieved by any possible implementation of the second aspect, refer to the technical effect achieved by the possible implementation of the first aspect. Details are not described herein again.

According to a third aspect, this application provides a communication apparatus. The communication apparatus can implement a function in the first aspect. For example, the communication apparatus includes a corresponding module, unit, or means (means) for performing an operation in the first aspect. The module, unit, or means may be implemented by software, or implemented by hardware, or implemented by hardware executing corresponding software.

In a possible design, the communication apparatus includes a processing unit and a communication unit. The communication unit may be configured to receive/send a signal, to implement communication between the communication apparatus and another apparatus. The processing unit may be configured to perform some internal operations of the communication apparatus. Functions performed by the processing unit and the communication unit may correspond to the operations in the first aspect.

In a possible design, the communication apparatus includes a processor. The processor may be configured to be coupled to a memory. The memory may store a computer program or instructions necessary for implementing the functions in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and a memory. The memory may store a computer program or instructions necessary for implementing the functions in the first aspect. The processor may execute the computer program or the instructions stored in the memory. When the computer program or the instructions are executed, the communication apparatus is enabled to implement the method according to any one of the possible designs or implementations of the first aspect.

In a possible design, the communication apparatus includes a processor and an interface circuit, and the processor is configured to: communicate with another apparatus through the interface circuit, and perform the method according to any one of the possible designs or implementations of the first aspect.

According to a fourth aspect, this application provides a communication apparatus. The communication apparatus can implement a function in the second aspect. For example, the communication apparatus includes a corresponding module, unit, or means for performing an operation in the second aspect. The function, unit, or means may be implemented by software, or implemented by hardware, or implemented by hardware executing corresponding software.

In a possible design, the communication apparatus includes a processing unit and a communication unit. The communication unit may be configured to receive/send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the operations in the second aspect.

In a possible design, the communication apparatus includes a processor. The processor may be configured to be coupled to a memory. The memory may store a computer program or instructions necessary for implementing the functions in the second aspect. The processor may execute the computer program or the instructions stored in the memory. When the computer program or the instructions are executed, the communication apparatus is enabled to implement the method according to any one of the possible designs or implementations of the second aspect.

In a possible design, the communication apparatus includes a processor and a memory. The memory may store a computer program or instructions necessary for implementing the functions in the second aspect. The processor may execute the computer program or the instructions stored in the memory. When the computer program or the instructions are executed, the communication apparatus is enabled to implement the method according to any one of the possible designs or implementations of the second aspect.

In a possible design, the communication apparatus includes a processor and an interface circuit, and the processor is configured to: communicate with another apparatus through the interface circuit, and perform the method according to any one of the possible designs or implementations of the second aspect.

It may be understood that in the third aspect or the fourth aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, this application provides a communication system. The communication system may include the communication apparatus in the third aspect and the communication apparatus in the fourth aspect.

According to a sixth aspect, this application provides a computer-readable storage medium. The computer storage medium stores computer-readable instructions. When a computer reads and executes the computer-readable instructions, the computer is enabled to perform the method according to any one of the first aspect and the possible designs of the first aspect or any one of the second aspect and the possible designs of the second aspect.

According to a seventh aspect, this application provides a computer program product. When a computer reads and executes the computer program product, the computer is enabled to perform the method according to any one of the first aspect and the possible designs of the first aspect or any one of the second aspect and the possible designs of the second aspect.

According to an eighth aspect, this application provides a chip. The chip includes a processor. The processor is coupled to a memory to read and execute a software program stored in the memory, to implement the method according to any one of the first aspect and the possible designs of the first aspect or any one of the second aspect and the possible designs of the second aspect.

BRIEF DESCRIPTION OF DRAWINGS

FIG. 1 is a diagram of a network architecture to which an embodiment of this application is applicable;
FIG. 2 is a diagram of DMRS resource mapping according to an embodiment of this application;
FIG. 3 is a diagram of DMRS port increasing according to an embodiment of this application;
FIG. 4 is another diagram of DMRS port increasing according to an embodiment of this application;
FIG. 5 is a schematic flowchart corresponding to a communication method according to an embodiment of this application;
FIG. 6 is a possible example block diagram of an apparatus according to an embodiment of this application;
FIG. 7 is a diagram of a structure of a network device according to an embodiment of this application; and
FIG. 8 is a diagram of a structure of a terminal device according to an embodiment of this application.

DESCRIPTION OF EMBODIMENTS

The following describes the technical solutions in embodiments of this application with reference to the accompanying drawings in embodiments of this application.

FIG. 1 is a diagram of an architecture of a communication system to which an embodiment of this application is applied. As shown in FIG. 1, a communication system 1000 includes a network device 100 and a core network 200. Optionally, the communication system 1000 may further include an internet 300. The network device 100 may include at least one network device, for example, 110a and 110b in FIG. 1, and at least one terminal device may be further included, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle.

In FIG. 1, the terminal device may be connected to the network device, and the network device may be connected to a core network device in the core network. The core network device and the network device may be different physical devices independent of each other; functions of the core network device and logical functions of the network device may be integrated into a same physical device; or some functions of the core network device and some functions of the radio network device may be integrated into one physical device. Terminal devices may be connected to each other and network devices may be connected to each other in a wired or wireless manner. FIG. 1 is merely a diagram. The communication system may further include another device, for example, a wireless relay device and a wireless backhaul device, which are not drawn in FIG. 1.

The following describes the network device and the terminal device.

(1) Network device

The network device is a node in a radio access network (radio access network, RAN), and may also be referred to as a base station, or may be referred to as a RAN node (or device). Examples of some network devices are: a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a base band unit (base band unit, BBU), and a wireless fidelity (wireless fidelity, Wi-Fi) access point (access point, AP). The network device may alternatively be a satellite, and the satellite may also be referred to as a high-altitude platform, a high-altitude aircraft, or a satellite base station. Alternatively, the network device may be another device that has a network device function. For example, the network device may be a device that functions as a network device in device-to-device (device-to-device, D2D) communication. The network device may alternatively be a network device in a possible future communication system.

In some deployments, the network device may include a central unit (central unit, CU) and a distributed unit (distributed unit, DU). The network device may further include an active antenna unit (active antenna unit, AAU). The CU implements some functions of the network device, and the DU implements some other functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in the RAN, or a network device in a core network (core network, CN). This is not limited in this application.

In embodiments of this application, an apparatus configured to implement a function of a network device may be a network device, or may be an apparatus, for example, a chip system, that can support the network device in implementing the function. The apparatus may be installed in the network device. The chip system may include a chip, or may include a chip and another discrete device. In the technical solutions provided in embodiments of this application, the technical solutions provided in embodiments of this application are described by using an example in which the apparatus configured to implement the function of the network device is the network device.

(2) Terminal device

The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific device form used by the terminal device are not limited in embodiments of this application.

In embodiments of this application, an apparatus configured to implement a function of a terminal device may be a terminal device, or may be an apparatus, for example, a chip system, that can support the terminal device in implementing the function. The apparatus may be installed in the terminal device. In the technical solutions provided in embodiments of this application, the technical solutions provided in embodiments of this application are described by using an example in which the apparatus configured to implement the function of the terminal device is the terminal device.

In addition, a same terminal device or network device may provide different functions in different application scenarios. For example, the mobile phones in FIG. 1 include 120a, 120e, 120f, and 120j. The mobile phone 120a may access the base station 110a, connect to the vehicle 120b, directly communicate with the mobile phone 120e, and access the HAP. The mobile phone 120e may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

Roles of the network device and the terminal device may be relative. For example, the helicopter or the uncrewed aerial vehicle 120i in FIG. 1 may be configured as a mobile base station. For the terminal device 120j that accesses the network device 100 through 120i, the terminal device 120i is a base station. However, for the base station 110a, 120i is a terminal device. In other words, 110a communicates with 120i by using a wireless air interface protocol. Certainly, 110a and 120i may alternatively communicate with each other by using an interface protocol between base stations. In this case, for 110a, 120i is also a base station. Therefore, both the network device and the terminal device may be collectively referred to as communication apparatuses. 110a and 110b in FIG. 1 may be referred to as communication apparatuses having a function of a base station, and 120a to 120j in FIG. 1 may be referred to as communication apparatuses having a function of a terminal device.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on an airplane, a balloon, and a satellite in the air. An application scenario of the network device and the terminal device is not limited in embodiments of this application.

Communication may be performed between the network device and the terminal device, between the network devices, and between the terminal devices by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource for wireless communication is not limited in embodiments of this application.

The communication system shown in FIG. 1 may support various radio access technologies (radio access technologies, RATs). For example, the communication system shown in FIG. 1 may be a 4th generation (4th generation, 4G) communication system (which may also be referred to as a long term evolution (long term evolution, LTE) communication system), a 5G communication system (which may also be referred to as a new radio (new radio, NR) communication system), or a future-oriented evolved system. The communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the communication system evolves and a new service scenario emerges.

The following first describes related technical features in embodiments of this application. It should be noted that these explanations are intended to make embodiments of this application easier to understand, but should not be considered as a limitation on the protection scope claimed in this application.

## 1. DMRS

In the communication system shown in FIG. 1, a network device may send control information to a terminal device through a control channel (for example, a PDCCH), to allocate a transmission parameter of a data channel to the terminal device. The data channel may be, for example, a PDSCH or a PUSCH. For example, the control information may indicate a time domain symbol and/or a frequency domain resource block (resource block, RB) to which the data channel is mapped, so that the network device and the terminal device can transmit downlink data (for example, data carried on the PDSCH) and/or uplink data (for example, data carried on the PUSCH) on the allocated time-frequency resources through the data channel. In embodiments of this application, a time domain symbol may be an orthogonal frequency division multiplexing (orthogonal frequency division multiplexing, OFDM) symbol, or a discrete Fourier transform spread spectrum OFDM (discrete Fourier transform-spread-OFDM, DFT-s-OFDM) symbol.

Further, the control channel (for example, the PDCCH) or the data channel (for example, the PDSCH or the PUSCH) may carry a reference signal, for example, a demodulation reference signal (demodulation reference signal, DMRS). The data channel is used as an example. The DMRS may be used to estimate an equivalent channel of a data signal carried on the data channel, to detect and demodulate data on the data channel. Signal processing such as precoding the same as that on the data is usually performed on the DMRS, to ensure that the DMRS and the data pass through a same equivalent channel.

It is assumed that a vector of a DMRS sent by a transmitting end is s, a vector of a sent data signal (or referred to as a data symbol) is x, same precoding (for example, multiplying by a same precoding matrix P) is performed on the DMRS and the data, and a precoded data signal and DMRS are simultaneously transmitted and pass through a same channel. Corresponding signal vectors received by a receiving end may be represented as:

Data:

$$\boldsymbol{y} = \boldsymbol{HPx} + \boldsymbol{n} = \widetilde{\boldsymbol{H}}\boldsymbol{x} + \boldsymbol{n};$$

and

DMRS:

$$\boldsymbol{r} = \boldsymbol{HPs} + \boldsymbol{n} = \widetilde{\boldsymbol{H}}\boldsymbol{s} + \boldsymbol{n}.$$

$\boldsymbol{y}$ represents a data signal vector received by the receiving end, $\boldsymbol{r}$ represents a DMRS vector received by the receiving end, $\boldsymbol{H}$ represents a channel through which the data signal and the DMRS actually pass, $\boldsymbol{P}$ represents a precoding matrix, and $\boldsymbol{n}$ represents a noise signal vector.

Because both the data and the DMRS pass through an equivalent channel $\tilde{\boldsymbol{H}}$, the receiving end may obtain, based on a known DMRS vector $\boldsymbol{s}$ and according to a channel estimation algorithm, estimation of the equivalent channel. The DMRS vector includes DMRS symbols corresponding to a plurality of DMRS ports. Further, the receiving end may complete data detection and demodulation based on the equivalent channel. The channel estimation algorithm may be, for example, a least square (least square, LS) channel estimation algorithm, a minimum mean square error (minimum mean square error, MMSE) channel estimation algorithm, or a delay domain channel estimation algorithm based on discrete Fourier transform (discrete Fourier transform, DFT)/inverse discrete Fourier transform (inverse DFT, IDFT).

## 2. DMRS port

The port may be an antenna port (antenna port), and the port may be understood as a transmit antenna identified by a receiving end, or a transmit antenna that can be distinguished in space. One port may be configured for each virtual antenna, and each virtual antenna may be a weighted combination of a plurality of physical antennas. A port used to send a reference signal may be referred to as a reference signal port. The reference signal may be, for example, a DMRS, a channel state information-reference signal (channel state information-reference signal, CSI-RS), or a sounding reference signal (sounding reference signal, SRS). This is not specifically limited.

A DMRS port is used as an example. Different DMRS ports may be distinguished by using different indexes (or port numbers). For example, an index of a DMRS port may be 1000+X, and a value of X may be an integer greater than or equal to 0. 1000+X may also be denoted as X. When the index of the DMRS port may be 1000+X, the DMRS port may be referred to as a DMRS port 1000+X, or may be referred to as a DMRS port X. In other words, in embodiments of this application, 1000+X and X may be understood as indexes of a same DMRS port.

The following provides descriptions by using an example in which a port is a DMRS port. It may be understood that, in addition to the DMRS port, the method provided in embodiments of this application may also be applicable to another possible reference signal port, for example, a CSI-RS port or an SRS port.

## 3. Time-frequency resource mapping of a DMRS port

One DMRS port may correspond to one or more DMRS signal symbols (which may also be referred to as a DMRS modulation symbol, or referred to as a DMRS symbol for short). To perform channel estimation on different time-frequency resources, a plurality of DMRS symbols corresponding to the DMRS port may be sent on the plurality of time-frequency resources. In addition, to ensure channel estimation quality, different DMRS ports are usually orthogonal ports, to avoid interference between the different DMRS ports.

A plurality of DMRS symbols corresponding to one DMRS port may correspond to one DMRS sequence, and one DMRS sequence includes a plurality of DMRS sequence elements. A DMRS sequence corresponding to one DMRS port may be mapped to a corresponding time-frequency resource according to a time-frequency resource mapping rule after being multiplied by a corresponding cover code sequence. For example, the $m^{th}$ DMRS sequence element *r(m)* in a DMRS sequence corresponding to a DMRS port p may be mapped, according to a time-frequency resource mapping rule, to a resource element (resource element, RE) with an index $(k,l)_{p,\mu}$. The RE with an index $(k,l)_{p,\mu}$ may correspond to a time domain symbol with an index *l* in a slot in time domain, and correspond to a subcarrier with an index *k* in frequency domain. The time-frequency resource mapping rule may meet the following formula 1:

$$
\begin{aligned}
&a_{k,l}^{(p,\mu)} = \beta_{PDSCH}^{DMRS} w_f(k') w_t(l') r(2n+k') \\
&k = \begin{cases} 4n+2k'+\Delta & Type1 \\ 6n+k'+\Delta & Type2 \end{cases}; \\
&k' = 0,1; \\
&l = \bar{l} + l'; \\
&n = 0,1,...; \\
&l' = 0,1;
\end{aligned}
\qquad \text{Formula 1}
$$

*p* is a DMRS port index (that is, a port index value), $\mu$ is a subcarrier spacing parameter, $a_{k,l}^{(p,\mu)}$ is a DMRS symbol corresponding to the DMRS port p mapped to the RE with an index $(k,l)_{p,\mu}$, $\beta_{PDSCH}^{DMRS}$ is a power scaling factor or a power control factor, $w_t(l')$ is a time domain cover code sequence element corresponding to a time domain symbol with an index *l'*, $w_f(k')$ is a frequency domain cover code sequence element corresponding to a subcarrier with an index *k'*, m = 2*n* + *k'*, $\Delta$ is a subcarrier offset factor, and $\bar{l}$ is a symbol index of a start time domain symbol occupied by the DMRS symbol or a symbol index of a reference time domain symbol.

Further, values of $w_f(k')$, $w_t(l')$, and $\Delta$ corresponding to the DMRS port *p* are related to a DMRS configuration type. For details, refer to descriptions about a DMRS configuration type.

## 4. DMRS configuration type

The DMRS configuration type may include a configuration type 1 (type 1) and a configuration type 2 (type 2). Different configuration types support different quantities of orthogonal DMRS ports and different time-frequency resource mapping rules. The following separately describes the configuration type 1 and the configuration type 2.

### (1) Configuration type 1

For the configuration type 1, values of $w_f(k')$, $w_t(l')$, and $\Delta$ corresponding to the DMRS port *p* may be determined according to Table 1.

Table 1: Parameter values corresponding to different DMRS ports (type 1)

| *p* | $\lambda$ | $\Delta$ | $w_f(k')$ | | $w_t(l')$ | |
|---|---|---|---|---|---|---|
| | | | *k'* = 0 | *k'* =1 | *l'* = 0 | *l'* = 1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

$\lambda$ is an index of a code division multiplexing (code divide multiplexing, CDM) group (which may also be referred to as an orthogonal multiplexing group) including the DMRS port*p*, and time-frequency resources occupied by DMRS ports in a same CDM group are the same. The "time-frequency resources occupied by the DMRS ports" may also be replaced with "time-frequency resources corresponding to the DMRS ports" or "time-frequency resources to which the DMRS ports are mapped".

Time-frequency resources to which DMRS sequences corresponding to different DMRS ports are mapped may be determined based on the foregoing time-frequency resource mapping rule (that is, the formula 1) and values of parameters in Table 1, as shown in (a) in FIG. 2. A time domain symbol length occupied by a DMRS port (or a quantity of time domain symbols occupied by the DMRS port) may be 1 or 2. When the time domain symbol length occupied by the DMRS port is 1, a DMRS may be referred to as a single-symbol DMRS. When the time domain symbol length occupied by the DMRS port is 2, a DMRS may be referred to as a double-symbol DMRS. The following separately describes a single-symbol DMRS and a double-symbol DMRS.

### (1.1) Single-symbol DMRS

A single-symbol DMRS (corresponding to *l'*=0) supports a maximum of four orthogonal DMRS ports. The four orthogonal DMRS ports may be divided into two CDM groups: a CDM group 0 and a CDM group 1. The CDM group 0 includes a DMRS port 0 and a DMRS port 1, and the CDM group 1 includes a DMRS port 2 and a DMRS port 3. The CDM group 0 and the CDM group 1 are frequency division multiplexed (mapped to different frequency domain resources). DMRS ports included in a CDM group are mapped to a same time-frequency resource. DMRS sequences corresponding to the DMRS ports included in the CDM group are distinguished by using cover code sequences, to ensure orthogonality of the DMRS ports in the CDM group, and suppress interference between DMRSs transmitted on different DMRS ports. The cover code sequence may be an orthogonal cover code (orthogonal cover code, OCC) sequence.

Specifically, the DMRS port 0 and the DMRS port 1 are located in a same RE, and resource mapping is performed in a comb manner in frequency domain. To be specific, adjacent frequency domain resources occupied by the DMRS port 0 and the DMRS port 1 are separated by one subcarrier. Two adjacent subcarriers occupied by a DMRS port in frequency domain correspond to a frequency domain cover code sequence whose length is 2, for example, (+1, +1) or (+1, -1). One time domain symbol occupied by the DMRS port in time domain corresponds to a time domain cover code sequence whose length is 1, for example, (+1). It may be obtained, based on the frequency domain cover code sequence and the time domain cover code sequence, that a length of a cover code sequence corresponding to the DMRS port is 2 (a cover code sequence corresponding to the DMRS port may be formed by a Kronecker product of the frequency domain cover code sequence and the time domain cover code sequence). For example, for a subcarrier 0 and a subcarrier 2 corresponding to a time domain symbol 0, the DMRS port 0 and the DMRS port 1 may be code division multiplexed by using a cover code sequence whose length is 2. A cover code sequence corresponding to the DMRS port 0 is (+1, +1), and a cover code sequence corresponding to the DMRS port 1 is (+1, -1).

Similarly, the DMRS port 2 and the DMRS port 3 are located in a same RE, and are mapped, in a comb manner in frequency domain, to REs that are not occupied by the DMRS port 0 and the DMRS port 1. For example, for a subcarrier 1 and a subcarrier 3 corresponding to the time domain symbol 0, the DMRS port 2 and the DMRS port 3 may be code division multiplexed by using a cover code sequence whose length is 2. A cover code sequence corresponding to the DMRS port 2 is (+1, +1), and a cover code sequence corresponding to the DMRS port 3 is (+1, -1).

**(1.2) Double-symbol DMRS**

A double-symbol DMRS (corresponding to $l'$=0 or 1) supports a maximum of eight orthogonal DMRS ports. The eight orthogonal DMRS ports are divided into two CDM groups: a CDM group 0 and a CDM group 1. The CDM group 0 includes a DMRS port 0, a DMRS port 1, a DMRS port 4, and a DMRS port 5. The CDM group 1 includes a DMRS port 2, a DMRS port 3, a DMRS port 6, and a DMRS port 7. The CDM group 0 and the CDM group 1 are frequency division multiplexed, DMRS ports included in a CDM group are mapped to a same time-frequency resource, and DMRS sequences corresponding to the DMRS ports included in the CDM group are distinguished by using cover code sequences.

Specifically, the DMRS port 0, the DMRS port 1, the DMRS port 4, and the DMRS port 5 are located in a same RE, and resource mapping is performed in a comb manner in frequency domain. To be specific, adjacent frequency domain resources occupied by the DMRS port 0, the DMRS port 1, the DMRS port 4, and the DMRS port 5 are separated by one subcarrier. Two adjacent subcarriers occupied by a DMRS port in frequency domain correspond to a frequency domain cover code sequence whose length is 2, for example, (+1, +1) or (+1, -1). Two adjacent time domain symbols occupied by the DMRS port in time domain correspond to a time domain cover code sequence whose length is 2, for example, (+1, +1) or (+1, -1). It may be obtained, based on the frequency domain cover code sequence and the time domain cover code sequence, that a length of a cover code sequence corresponding to the DMRS port is 4 (a cover code sequence corresponding to the DMRS port may be formed by a Kronecker product of the frequency domain cover code sequence and the time domain cover code sequence). For example, for a subcarrier 0 and a subcarrier 2 corresponding to a time domain symbol 0 and a time domain symbol 1, the DMRS port 0, the DMRS port 1, the DMRS port 4, and the DMRS port 5 may be code division multiplexed by using a cover code sequence whose length is 4. A cover code sequence corresponding to the DMRS port 0 is (+1, +1, +1, +1), a cover code sequence corresponding to the DMRS port 1 is (+1, +1, -1, -1), a cover code sequence corresponding to the DMRS port 4 is (+1, -1, +1, -1), and a cover code sequence corresponding to the DMRS port 5 is (+1, -1, -1, +1).

Similarly, the DMRS port 2, the DMRS port 3, the DMRS port 6, and the DMRS port 7 are located in a same RE, and are mapped, in a comb manner in frequency domain, to subcarriers that are not occupied by the DMRS port 0, the DMRS port 1, the DMRS port 4, and the DMRS port 5. For a subcarrier 1 and a subcarrier 3 corresponding to the time domain symbol 0 and the time domain symbol 1, the DMRS port 2, the DMRS port 3, the DMRS port 6, and the DMRS port 7 may be code division multiplexed by using a cover code sequence whose length is 4. A cover code sequence corresponding to the DMRS port 2 is (+1, +1, +1, +1), a cover code sequence corresponding to the DMRS port 3 is (+1, +1, -1, -1), a cover code sequence corresponding to the DMRS port 6 is (+1, -1, +1, -1), and a cover code sequence corresponding to the DMRS port 7 is (+1, -1, -1, +1).

**(2) Configuration type 2**

For the configuration type 2, values of $w_f(k')$, $w_t(l')$, and $\Delta$ corresponding to the DMRS port $p$ may be determined according to Table 2.

Table 2: Parameter values corresponding to different DMRS ports (type 2)

| $p$ | $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |

(continued)

| *p* | $\lambda$ | $\Delta$ | $w_f(k')$ | | $w_t(l')$ | |
|---|---|---|---|---|---|---|
| | | | *k'* = 0 | *k'* =1 | *l'* =0 | *l'* = 1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

$\lambda$ is an index of a CDM group including the DMRS port *p*, and DMRS ports in a same CDM group occupy a same time-frequency resource.

Time-frequency resources to which DMRS sequences corresponding to different DMRS ports are mapped may be determined based on the foregoing time-frequency resource mapping rule (that is, the formula 1) and values of parameters in Table 1, as shown in (b) in FIG. 2. A time domain symbol length occupied by a DMRS port may be 1 or 2. When the time domain symbol length occupied by the DMRS port is 1, a DMRS may be referred to as a single-symbol DMRS. When the time domain symbol length occupied by the DMRS port is 2, a DMRS may be referred to as a double-symbol DMRS. The following separately describes a single-symbol DMRS and a double-symbol DMRS.

**(2.1) Single-symbol DMRS**

A single-symbol DMRS supports a maximum of six orthogonal DMRS ports. The six orthogonal DMRS ports are divided into three CDM groups: a CDM group 0, a CDM group 1, and a CDM group 2. The CDM group 0 includes a DMRS port 0 and a DMRS port 1, the CDM group 1 includes a DMRS port 2 and a DMRS port 3, and the CDM group 2 includes a DMRS port 4 and a DMRS port 5. CDM groups are frequency division multiplexed, and DMRSs corresponding to DMRS ports included in a CDM group are mapped to a same time-frequency resource. DMRS sequences corresponding to the DMRS ports included in the CDM group are distinguished by using cover code sequences. A DMRS sequence corresponding to a DMRS port is mapped to a plurality of resource sub-blocks including two consecutive subcarriers in frequency domain, and adjacent resource sub-blocks are separated by four subcarriers in frequency domain.

Specifically, the DMRS port 0 and the DMRS port 1 are located in a same RE, and resource mapping is performed in a comb manner in frequency domain. For example, a frequency domain resource granularity is 1 RB, and the DMRS port 0 and the DMRS port 1 occupy a subcarrier 0, a subcarrier 1, a subcarrier 6, and a subcarrier 7. The DMRS port 2 and the DMRS port 3 occupy a subcarrier 2, a subcarrier 3, a subcarrier 8, and a subcarrier 9. The DMRS port 4 and the DMRS port 5 occupy a subcarrier 4, a subcarrier 5, a subcarrier 10, and a subcarrier 11. Two DMRS ports included in a CDM group are code division multiplexed in two adjacent subcarriers by using a cover code sequence whose length is 2. For example, cover code sequences corresponding to the two DMRS ports are respectively (+1, +1) and (+1, -1).

**(2.2) Double-symbol DMRS**

A double-symbol DMRS supports a maximum of 12 orthogonal DMRS ports. The 12 orthogonal DMRS ports are divided into three CDM groups. A CDM group 0 includes a DMRS port 0, a DMRS port 1, a DMRS port 6, and a DMRS port 7. A CDM group 1 includes a DMRS port 2, a DMRS port 3, a DMRS port 8, and a DMRS port 9. A CDM group 2 includes a DMRS port 4, a DMRS port 5, a DMRS port 10, and a DMRS port 11. CDM groups are frequency division multiplexed, and DMRSs corresponding to DMRS ports included in a CDM group are mapped to a same time-frequency resource. DMRS sequences corresponding to the DMRS ports included in the CDM group are distinguished by using cover code sequences. A DMRS sequence corresponding to a DMRS port is mapped to a plurality of resource sub-blocks including two consecutive subcarriers in frequency domain, and adjacent resource sub-blocks are separated by four subcarriers in frequency domain.

Specifically, the DMRS port 0, the DMRS port 1, the DMRS port 6, and the DMRS port 7 are located in a same RE, and resource mapping is performed in a comb manner in frequency domain. For example, a frequency domain resource granularity is 1 RB. The DMRS port 0, the DMRS port 1, the DMRS port 6, and the DMRS port 7 occupy a subcarrier 0, a subcarrier 1, a subcarrier 6, and a subcarrier 7 corresponding to a time domain symbol 0 and a time domain symbol 1. The DMRS port 2, the DMRS port 3, the DMRS port 8, and the DMRS port 9 occupy a subcarrier 2, a subcarrier 3, a subcarrier 8, and a subcarrier 9 corresponding to the time domain symbol 1 and a time domain symbol 2. The DMRS port 4, the DMRS port 5, the DMRS port 10, and the DMRS port 11 occupy a subcarrier 4, a subcarrier 5, a subcarrier 10, and a subcarrier 11 corresponding to the time domain symbol 1 and the time domain symbol 2. Four DMRS ports included in a CDM group are code division multiplexed in two adjacent subcarriers corresponding to two time domain symbols by using a cover code sequence whose length is 4. For example, cover code sequences corresponding to the four DMRS ports are respectively (+1, + 1, +1, +1), (+1, +1, -1, -1), (+1, -1, +1, -1), and (+1, -1, -1, +1).

## 5. DMRS port increasing

It can be learned from the foregoing descriptions that a maximum quantity of orthogonal DMRS ports supported by the configuration type 1 is 8, and a maximum quantity of orthogonal DMRS ports supported by the configuration type 2 is 12. When a plurality of parallel data streams are simultaneously transmitted on a same time-frequency resource, each data stream may be referred to as a spatial layer, a spatial stream, or a transmission stream, and one DMRS port may correspond to one spatial layer or transmission stream. DMRS port indexes corresponding to V spatial layers may be determined based on a sequence of DMRS port indexes in Table 9A to Table 12B. For example, the V spatial layers include a spatial layer 0 and a spatial layer 1. When DMRS port indexes allocated by a network device to a terminal device are "0, 1", the spatial layer 0 corresponds to the DMRS port 0, and the spatial layer 1 corresponds to the DMRS port 1. When DMRS port indexes allocated by the network device to the terminal device are "2, 3", the spatial layer 0 corresponds to the DMRS port 2, and the spatial layer 1 corresponds to the DMRS port 3.

However, as wireless communication devices are deployed more densely, and a quantity of terminal devices further increases, a higher requirement is imposed on a quantity of MIMO transmission streams (more than 12 transmission streams). However, a maximum of 12 DMRS ports cannot ensure good transmission performance of more than 12 transmission streams. Therefore, to support more transmission streams, DMRS ports need to be increased.

There may be a plurality of methods for increasing the DMRS ports. For example, DMRS ports may be increased through code division multiplexing, or DMRS ports may be increased through frequency division multiplexing. The following describes related content of DMRS port increasing by using an example in which the DMRS ports are increased through code division multiplexing.

### (1) A new DMRS port is described for the configuration type 1

A double-symbol DMRS of the configuration type 1 is used as an example. A DMRS port 0 to a DMRS port 7 may be referred to as legacy DMRS ports (that is, R15 ports), and a DMRS port 8 to a DMRS port 15 are increased DMRS ports and may be referred to as new DMRS ports. Time-frequency resources corresponding to the legacy DMRS ports and the new DMRS ports are the same. The following provides descriptions with reference to FIG. 3. In FIG. 3, a vertical direction represents frequency domain, a horizontal direction represents time domain, one grid represents one RE, and one RE corresponds to one subcarrier in frequency domain and corresponds to one time domain symbol in time domain. In addition, the time-frequency resources corresponding to the legacy DMRS ports and the new DMRS ports are the same. Therefore, a plurality of REs shown in (1) and a plurality of REs shown in (2) in FIG. 3 may be same REs. In FIG. 3, for ease of description, the legacy DMRS ports and the new DMRS ports are separately shown. FIG. 3 shows only a case of one RB. For a case of a plurality of RBs, refer to FIG. 3.

For the legacy DMRS ports, as described above, one CDM group includes four DMRS ports that are mapped to two subcarriers and two time domain symbols (that is, four REs). As shown in (1) in FIG. 3, one CDM group is used as an example. The CDM group corresponds to the legacy DMRS port 0, DMRS port 1, DMRS port 4, and DMRS port 5, and occupies subcarriers with indexes 0/2/4/6/8/10 in one RB. The four DMRS ports in the CDM group may be code division multiplexed by using an inner cover code sequence whose length is 4. Specifically, each DMRS port may correspond to an inner frequency domain cover code sequence whose length is 2 and an inner time domain cover code sequence whose length is 2. That is, each DMRS port may correspond to an inner cover code sequence whose length is 4 (represented as ($w_1$, $w_2$, $w_3$, $w_4$)), and elements in each inner cover code sequence one-to-one correspond to four REs. The inner cover code sequence whose length is 4 may be formed by a Kronecker product of the corresponding inner frequency domain cover code sequence and the inner time domain cover code sequence. Inner cover code sequences corresponding to any two DMRS ports in four DMRS ports of one CDM group are orthogonal.

For example, an inner cover code sequence ($w_1$, $w_2$, $w_3$, $w_4$) corresponding to the DMRS port 0 is (+1+1+1+1), an inner cover code sequence ($w_1$, $w_2$, $w_3$, $w_4$) corresponding to the DMRS port 1 may be (+1+1-1-1), an inner cover code sequence ($w_1$, $w_2$, $w_3$, $w_4$) corresponding to the DMRS port 4 may be (+1-1+1-1), and an inner cover code sequence ( $w_1$, $w_2$, $w_3$, $w_4$ ) corresponding to the DMRS port 5 may be (+1-1-1+1).

A new DMRS port may also correspond to two CDM groups, and each CDM group corresponds to four DMRS ports. One CDM group corresponds to four DMRS ports that are mapped to two subcarriers and two time domain symbols (that is, four REs). As shown in (2) in FIG. 3, one CDM group is used as an example. The CDM group corresponds to the new DMRS port 8, DMRS port 9, DMRS port 12, and DMRS port 13, and occupies subcarriers with indexes 0/2/4/6/8/10 in one RB. The four DMRS ports in the CDM group may be code division multiplexed by using an inner cover code sequence whose length is 4. Specifically, each DMRS port may correspond to an inner frequency domain cover code sequence whose length is 2 and an inner time domain cover code sequence whose length is 2. That is, each DMRS port may correspond to an inner cover code sequence whose length is 4 (represented as ($c_1$, $c_2$, $c_3$, $c_4$)), and elements in each inner cover code sequence one-to-one correspond to four REs. The inner cover code sequence whose length is 4 may be formed by a Kronecker product of the corresponding inner frequency domain cover code sequence and the inner time domain cover code sequence. Inner cover code sequences corresponding to any two DMRS ports in four DMRS ports of one CDM group are orthogonal. The following describes two possible implementations of the inner cover code sequence with reference to an example a1 and an example a2.

Example a1: An inner cover code sequence ($c_1$, $c_2$, $c_3$, $c_4$) corresponding to the DMRS port 8 may be (+1, +1, +1, +1), an inner cover code sequence ($c_1$, $c_2$, $c_3$, $c_4$) corresponding to the DMRS port 9 may be (+1, +1, -1, -1), an inner cover code sequence ($c_1$, $c_2$, $c_3$, $c_4$) corresponding to the DMRS port 12 may be (+1, -1, +1, -1), and an inner cover code sequence ( $c_1$, $c_2$, $c_3$, $c_4$ ) corresponding to the DMRS port 13 may be (+1, -1, -1, +1).

Example a2: The inner cover code sequence ($c_1$, $c_2$, $c_3$, $c_4$) corresponding to the DMRS port 8 may be (+1, +j, +j, -1), the inner cover code sequence ($c_1$, $c_2$, $c_3$, $c_4$) corresponding to the DMRS port 9 may be (+1, +j, -j, +1), the inner cover code sequence ($c_1$, $c_2$, $c_3$, $c_4$) corresponding to the DMRS port 12 may be (+1, -j, +j, +1), and the inner cover code sequence ($c_1$, $c_2$, $c_3$, $c_4$) corresponding to the DMRS port 13 may be (+1, -j, -j, -1).

Further, for four consecutive subcarriers (the four subcarriers may be referred to as a group of subcarriers) mapped to a DMRS port, the four legacy DMRS ports (for example, the DMRS port 0, the DMRS port 1, the DMRS port 4, and the DMRS port 5) and the four new DMRS ports (for example, the DMRS port 8, the DMRS port 9, the DMRS port 12, and the DMRS port 13) may be code division multiplexed by using an outer cover code sequence ($b_1$, $b_2$, $b_3$, $b_4$) whose length is 4. For example, for a subcarrier 0, a subcarrier 2, a subcarrier 4, and a subcarrier 6, the four legacy DMRS ports (for example, the DMRS port 0, the DMRS port 1, the DMRS port 4, and the DMRS port 5) and the four new DMRS ports (for example, the DMRS port 8, the DMRS port 9, the DMRS port 12, and the DMRS port 13) may be code division multiplexed by using an outer cover code sequence ($b_1$, $b_2$, $b_3$, $b_4$) whose length is 4. An outer cover code sequence ($b_1$, $b_2$, $b_3$, $b_4$) corresponding to the four legacy DMRS ports is, for example, (+1, +1, +1, +1), and an outer cover code sequence ($b_1$, $b_2$, $b_3$, $b_4$) corresponding to the four new DMRS ports is, for example, (+1, +1, -1, -1). The two outer cover code sequences are orthogonal. One element in the outer cover code sequence ($b_1$, $b_2$, $b_3$, $b_4$) corresponds to one subcarrier in a group of subcarriers. For example, the subcarrier 0 corresponds to a sequence element $b_1$, the subcarrier 2 corresponds to a sequence element $b_2$, the subcarrier 4 corresponds to a sequence element $b_3$, and the subcarrier 6 corresponds to a sequence element $b_4$.

**(2) A new DMRS port is described for the configuration type 2**

A double-symbol DMRS of the configuration type 2 is used as an example. A DMRS port 0 to a DMRS port 11 may be referred to as legacy DMRS ports (or R15 ports), and a DMRS port 12 to a DMRS port 23 are increased DMRS ports and may be referred to as new DMRS ports (or R18 ports). Time-frequency resources corresponding to the legacy DMRS ports and the new DMRS ports are the same. The following provides descriptions with reference to FIG. 4. A plurality of REs shown in (1) and a plurality of REs shown in (2) in FIG. 4 may be same REs. For other cases, refer to the descriptions in FIG. 3.

For the legacy DMRS ports, as described above, one CDM group includes four DMRS ports that are mapped to two subcarriers and two time domain symbols (that is, four REs). As shown in (1) in FIG. 4, one CDM group is used as an example. The CDM group corresponds to the legacy DMRS port 0, DMRS port 1, DMRS port 6, and DMRS port 7, and occupies subcarriers with indexes 0/1//6/7 in one RB. The four DMRS ports in the CDM group may be code division multiplexed by using an inner cover code sequence whose length is 4. Specifically, each DMRS port may correspond to an inner frequency domain cover code sequence whose length is 2 and an inner time domain cover code sequence whose length is 2. That is, each DMRS port may correspond to an inner cover code sequence whose length is 4 (represented as ($w_1$, $w_2$, $w_3$, $w_4$)), and elements in each inner cover code sequence one-to-one correspond to four REs. The inner cover code sequence whose length is 4 may be formed by a Kronecker product of the corresponding inner frequency domain cover code sequence and the inner time domain cover code sequence. Inner cover code sequences corresponding to any two DMRS ports in four DMRS ports of one CDM group are orthogonal.

For example, an inner cover code sequence ($w_1$, $w_2$, $w_3$, $w_4$) corresponding to the DMRS port 0 is (+1, +1. +1, +1), an inner cover code sequence ($w_1$, $w_2$, $w_3$, $w_4$) corresponding to the DMRS port 1 may be (+1, +1, -1, -1), an inner cover code sequence ( $w_1$, $w_2$, $w_3$, $w_4$ ) corresponding to the DMRS port 6 may be (+1, -1, +1, -1), and an inner cover code

sequence ($w_1$, $w_2$, $w_3$, $w_4$) corresponding to the DMRS port 7 may be (+1, -1, -1, +1).

A new DMRS port may also correspond to two CDM groups, and each CDM group corresponds to four DMRS ports. One CDM group corresponds to four DMRS ports that are mapped to two subcarriers and two time domain symbols (that is, four REs). As shown in (2) in FIG. 4, one CDM group is used as an example. The CDM group corresponds to the new DMRS port 12, DMRS port 13, DMRS port 18, and DMRS port 19, and occupies subcarriers with indexes 0/1//6/7 in one RB. The four DMRS ports in the CDM group may be code division multiplexed by using an inner cover code sequence whose length is 4. Specifically, each DMRS port may correspond to an inner frequency domain cover code sequence whose length is 2 and an inner time domain cover code sequence whose length is 2. That is, each DMRS port may correspond to an inner cover code sequence whose length is 4 (represented as ($c_1$, $c_2$, $c_3$, $c_4$)), and elements in each inner cover code sequence one-to-one correspond to four REs. The inner cover code sequence whose length is 4 may be formed by a Kronecker product of the corresponding inner frequency domain cover code sequence and the inner time domain cover code sequence. Inner cover code sequences corresponding to any two DMRS ports in four DMRS ports of one CDM group are orthogonal. The following describes two possible implementations of the inner cover code sequence with reference to an example b1 and an example b2.

Example b1: An inner cover code sequence ($c_1$, $c_2$, $c_3$, $c_4$) corresponding to the DMRS port 12 may be (+1, +1, +1, +1), an inner cover code sequence ($c_1$, $c_2$, $c_3$, $c_4$) corresponding to the DMRS port 13 may be (+1, +1, -1, -1), an inner cover code sequence ($c_1$, $c_2$, $c_3$, $c_4$) corresponding to the DMRS port 18 may be (+1, -1, +1, -1), and an inner cover code sequence ($c_1$, $c_2$, $c_3$, $c_4$) corresponding to the DMRS port 19 may be (+1, -1, -1, +1).

Example b2: The inner cover code sequence ($c_1$, $c_2$, $c_3$, $c_4$) corresponding to the DMRS port 12 may be (+1, +j, +j, -1), the inner cover code sequence ($c_1$, $c_2$, $c_3$, $c_4$) corresponding to the DMRS port 13 may be (+1, +j, -j, +1), the inner cover code sequence ($c_1$, $c_2$, $c_3$, $c_4$) corresponding to the DMRS port 18 may be (+1, -j, +j, +1), and the inner cover code sequence ($c_1$, $c_2$, $c_3$, $c_4$) corresponding to the DMRS port 19 may be (+1, -j, -j, -1).

Further, for four consecutive subcarriers (the four subcarriers may be referred to as a group of subcarriers) mapped to a DMRS port, the four legacy DMRS ports (for example, the DMRS port 0, the DMRS port 1, the DMRS port 6, and the DMRS port 7) and the four new DMRS ports (for example, the DMRS port 12, the DMRS port 13, the DMRS port 18, and the DMRS port 19) may be code division multiplexed by using an outer cover code sequence ($b_1$, $b_2$, $b_3$, $b_4$) whose length is 4. For example, for a subcarrier 0, a subcarrier 1, a subcarrier 6, and a subcarrier 7, the four legacy DMRS ports (for example, the DMRS port 0, the DMRS port 1, the DMRS port 6, and the DMRS port 7) and the four new DMRS ports (for example, the DMRS port 12, the DMRS port 13, the DMRS port 18, and the DMRS port 19) may be code division multiplexed by using an outer cover code sequence ($b_1$, $b_2$, $b_3$, $b_4$) whose length is 4. An outer cover code sequence ($b_1$, $b_2$, $b_3$, $b_4$) corresponding to the four legacy DMRS ports is, for example, (+1, +1, +1, +1), and an outer cover code sequence ($b_1$, $b_2$, $b_3$, $b_4$) corresponding to the four new DMRS ports is, for example, (+1, +1, -1, -1). The two outer cover code sequences are orthogonal. One element in the outer cover code sequence ($b_1$, $b_2$, $b_3$, $b_4$) corresponds to one subcarrier in a group of subcarriers. For example, the subcarrier 0 corresponds to a sequence element $b_1$, the subcarrier 1 corresponds to a sequence element $b_2$, the subcarrier 6 corresponds to a sequence element $b_3$, and the subcarrier 7 corresponds to a sequence element $b_4$.

Based on the foregoing descriptions in (1) and (2), after DMRS ports are increased in a code division multiplexing manner, as shown in Table 3, a single-symbol DMRS of the configuration type 1 can support a maximum of eight ports, a double-symbol DMRS of the configuration type 1 may support a maximum of 16 ports, a single-symbol DMRS of the configuration type 2 may support a maximum of 12 ports, and a double-symbol DMRS of the configuration type 2 may support a maximum of 24 ports.

Table 3: Legacy DMRS ports and new DMRS ports corresponding to different configuration types

| Configuration type | | Legacy DMRS port index | New DMRS port index |
|---|---|---|---|
| Configuration type 1 | Single-symbol | 0,1,2,3 | 4,5,6,7 |
| | Double-symbol | 0,1,2,3,4,5,6,7 | 8,9,10,11,12,13,14,15 |
| Configuration type 2 | Single-symbol | 0,1,2,3,4,5 | 6,7,8,9,10,11 |
| | Double-symbol | 0,1,2,3,4,5,6,7,8,9,10,11 | 12,13,14,15,16,17,18,19,20,21,22,23 |

**(3) Time-frequency resource mapping rule after DMRS port increasing**

A DMRS sequence corresponding to a legacy DMRS port may be mapped to a corresponding time-frequency resource according to a time-frequency resource mapping rule after being multiplied by a corresponding inner cover code sequence and an outer cover code sequence. A DMRS sequence corresponding to a new DMRS port may be mapped to a corresponding time-frequency resource according to a time-frequency resource mapping rule after being multiplied by a corresponding inner cover code sequence and an outer cover code sequence.

Therefore, after DMRS port increasing, the time-frequency resource mapping rule may satisfy the following formula 2:

$$a_{k,l}^{(p,\mu)} = \beta_{PDSCH}^{DMRS} c_f(k') c_t(l') b(n \bmod 2) r(2n+k')$$
$$k = \begin{cases} 4n+2k'+\Delta & Type1 \\ 6n+k'+\Delta & Type2 \end{cases};$$
$$k' = 0,1; \qquad \text{Formula 2}$$
$$l = \bar{l} + l';$$
$$n = 0,1,...;$$
$$l' = 0,1;$$

$p$ is a DMRS port index, $\mu$ is a subcarrier spacing parameter, $a_{k,l}^{(p,\mu)}$ is a DMRS symbol corresponding to the DMRS port $p$ mapped to an RE with an index $(k,l)_{p,\mu}$, $\beta_{PDSCH}^{DMRS}$ is a power scaling factor or a power control factor, $c_t(l')$ is an inner time domain cover code sequence element corresponding to a time domain symbol with an index $l'$, and $c_f(k')$ is an inner frequency domain cover code sequence element corresponding to a subcarrier with an index $k'$. b(nmod2) is an outer cover code sequence. For a legacy DMRS port, b(0)=1, and b(1)=1. For a new DMRS port, b(0)=1, and b(1)=-1, or b(0)=-1, and b(1)=1. m = $2n + k'$, $\Delta$ is a subcarrier offset factor, and $\bar{l}$ is a symbol index of a start time domain symbol occupied by the DMRS symbol or a symbol index of a reference time domain symbol.

It may be understood that, with reference to a form of the formula 1, the formula 2 may be equivalently described as the following formula 3:

$$a_{k,l}^{(p,\mu)} = \beta_{PDSCH}^{DMRS} s_f(k') s_t(l') r(2n+k')$$
$$s_f(k') = c_f(k') b(n \bmod 2) \qquad \text{Formula 3}$$
$$s_t(l') = c_t(l')$$

$s_f(k')$ is a frequency domain cover code sequence element corresponding to a subcarrier with an index $k'$, and $s_t(l')$ is a time domain cover code sequence element corresponding to a time domain symbol with an index $l'$.

It can be learned from the formula 3 that, after DMRS port increasing, a frequency domain cover code sequence corresponding to each DMRS port may be equivalently represented as a product of an inner frequency domain cover code sequence $c_f(k')$ and an outer cover code sequence $\{b(0), b(1)\}$. An outer cover code sequence element $b(0)$ corresponds to two adjacent subcarriers in a group of subcarriers occupied by the DMRS port. That is, the outer cover code sequence element b(0) corresponds to $c_f(0)$ and $c_f(1)$. Similarly, an outer cover code sequence element b(1) corresponds to the other two adjacent subcarriers in the group of subcarriers occupied by the DMRS port. That is, the outer cover code sequence element b(1) corresponds to $c_f(0)$ and $c_f(1)$. Therefore, a length of the frequency domain cover code sequence corresponding to each DMRS port is 4, and may be represented as $(c_f(0)b(0), c_f(1)b(0), c_f(0)b(1), c_f(1)b(1))$. However, when a DMRS port is not increased (refer to the foregoing descriptions), a length of a frequency domain cover code sequence corresponding to each DMRS port is 2.

Further, in the formula 2 or formula 3, values of $c_f(k')$, $c_t(l')$, and $\Delta$ corresponding to the DMRS port $p$ are related to a DMRS configuration type. For details, refer to the following descriptions in (3.1) and (3.2).

### (3.1) Configuration type 1

For the configuration type 1, values of $c_f(k')$, $c_t(l')$, and $\Delta$ corresponding to the DMRS port $p$ may be determined according to Table 4A or Table 4B. When the inner cover code sequence described in the foregoing example a1 is used, the values of $c_f(k')$, $c_t(l')$, and $\Delta$ may be determined according to Table 4A. When the inner cover code sequence described in the foregoing example a2 is used, the values of $c_f(k')$, $c_t(l')$, and $\Delta$ may be determined according to Table 4B.

Table 4A: Parameter values corresponding to different DMRS ports (type 1)

| $p$ | $\lambda$ | $\Delta$ | $c_f(k')$ | | $c_t(l')$ | |
|---|---|---|---|---|---|---|
| | | | $k'=0$ | $k'=1$ | $l'=0$ | $l'=1$ |
| 1008 | 0 | 0 | +1 | +1 | +1 | +1 |
| 1009 | 0 | 0 | +1 | -1 | +1 | +1 |
| 1010 | 1 | 1 | +1 | +1 | +1 | +1 |
| 1011 | 1 | 1 | +1 | -1 | +1 | +1 |
| 1012 | 0 | 0 | +1 | +1 | +1 | -1 |
| 1013 | 0 | 0 | +1 | -1 | +1 | -1 |
| 1014 | 1 | 1 | +1 | +1 | +1 | -1 |
| 1015 | 1 | 1 | +1 | -1 | +1 | -1 |

Table 4B: Parameter values corresponding to different DMRS ports (type 1)

| $p$ | $\lambda$ | $\Delta$ | $c_f(k')$ | | $c_t(l')$ | |
|---|---|---|---|---|---|---|
| | | | $k'=0$ | $k'=1$ | $l'=0$ | $l'=1$ |
| 1008 | 0 | 0 | +1 | $j$ | +1 | $j$ |
| 1009 | 0 | 0 | +1 | $-j$ | +1 | $j$ |
| 1010 | 1 | 1 | +1 | $j$ | +1 | $j$ |
| 1011 | 1 | 1 | +1 | $-j$ | +1 | $j$ |
| 1012 | 0 | 0 | +1 | $j$ | +1 | $-j$ |
| 1013 | 0 | 0 | +1 | $-j$ | +1 | $-j$ |
| 1014 | 1 | 1 | +1 | $j$ | +1 | $-j$ |
| 1015 | 1 | 1 | +1 | $-j$ | +1 | $-j$ |

**(3.2) Configuration type 2**

For the configuration type 2, values of $c_f(k')$, $c_t(l')$, and $\Delta$ corresponding to the DMRS port $p$ may be determined according to Table 5A or Table 5B. When the inner cover code sequence described in the foregoing example b1 is used, the values of $c_f(k')$, $c_t(l')$, and $\Delta$ may be determined according to Table 5A. When the inner cover code sequence described in the foregoing example b2 is used, the values of $c_f(k')$, $c_t(l')$, and $\Delta$ may be determined according to Table 5B.

Table 5A: Parameter values corresponding to different DMRS ports (type 2)

| $p$ | $\lambda$ | $\Delta$ | $c_f(k')$ | | $c_t(l')$ | |
|---|---|---|---|---|---|---|
| | | | $k'=0$ | $k'=1$ | $l'=0$ | $l'=1$ |
| 1012 | 0 | 0 | +1 | +1 | +1 | +1 |
| 1013 | 0 | 0 | +1 | -1 | +1 | +1 |
| 1014 | 1 | 2 | +1 | +1 | +1 | +1 |
| 1015 | 1 | 2 | +1 | -1 | +1 | +1 |
| 1016 | 2 | 4 | +1 | +1 | +1 | +1 |
| 1017 | 2 | 4 | +1 | -1 | +1 | +1 |
| 1018 | 0 | 0 | +1 | +1 | +1 | -1 |
| 1019 | 0 | 0 | +1 | -1 | +1 | -1 |
| 1020 | 1 | 2 | +1 | +1 | +1 | -1 |
| 1021 | 1 | 2 | +1 | -1 | +1 | -1 |

(continued)

| *p* | $\lambda$ | $\Delta$ | $c_f(k')$ | | $c_t(l')$ | |
|---|---|---|---|---|---|---|
| | | | $k'=0$ | $k'=1$ | $l'=0$ | $l'=1$ |
| 1022 | 2 | 4 | +1 | +1 | +1 | -1 |
| 1023 | 2 | 4 | +1 | -1 | +1 | -1 |

Table 5B: Parameter values corresponding to different DMRS ports (type 2)

| *p* | $\lambda$ | $\Delta$ | $c_f(k')$ | | $c_t(l')$ | |
|---|---|---|---|---|---|---|
| | | | $k'=0$ | $k'=1$ | $l'=0$ | $l'=1$ |
| 1012 | 0 | 0 | +1 | *j* | +1 | *j* |
| 1013 | 0 | 0 | +1 | *-j* | +1 | *j* |
| 1014 | 1 | 2 | +1 | *j* | +1 | *j* |
| 1015 | 1 | 2 | +1 | *-j* | +1 | *j* |
| 1016 | 2 | 4 | +1 | *j* | +1 | *j* |
| 1017 | 2 | 4 | +1 | *-j* | +1 | *j* |
| 1018 | 0 | 0 | +1 | *j* | +1 | *-j* |
| 1019 | 0 | 0 | +1 | *-j* | +1 | *-j* |
| 1020 | 1 | 2 | +1 | *j* | +1 | *-j* |
| 1021 | 1 | 2 | +1 | *-j* | +1 | *-j* |
| 1022 | 2 | 4 | +1 | *j* | +1 | *-j* |
| 1023 | 2 | 4 | +1 | *-j* | +1 | *-j* |

## 6. (DMRS) port indication

Based on the descriptions of the foregoing related technical features, when a network device communicates with a terminal device through a control channel or a data channel, the network device needs to indicate, to the terminal device, a port allocated to the terminal device. In embodiments of this application, how the network device flexibly indicates, to the terminal device, a port allocated to the terminal device for an increased port (for example, a DMRS port) is studied.

The method provided in embodiments of this application is not only applicable to DMRS port indication, but also applicable to indication of another reference signal port. In embodiments of this application, an example in which the network device indicates a DMRS port to the terminal device is used for detailed description.

It should be noted that "port n", "Pn", and "Port n" in embodiments of this application are all a port with a port number n or with a port index value n, where n is an integer greater than 0, and a maximum value of n may depend on a total quantity of ports. In addition, if a demodulation reference signal sent by the network device to the terminal device in embodiments of this application is a DMRS, all ports indicated by the network device to the terminal device may be understood as DMRS ports.

FIG. 5 is a schematic flowchart corresponding to a communication method according to an embodiment of this application. As shown in FIG. 5, a procedure of the method may include the following steps.

S501: A network device sends first indication information to a terminal device, where the first indication information indicates a demodulation reference signal type. Correspondingly, the terminal device may receive the first indication information.

For example, the demodulation reference signal is a DMRS. The first indication information may be an RRC message, or the first indication information is carried in the RRC message. For example, the first indication information may be a dmrs-Type field in the RRC message. A first value indicates a legacy DMRS port corresponding to a configuration type 1, and a second value indicates a new DMRS port corresponding to the configuration type 1. For example, the first value may be "type1", and the second value may be "type1-E". Alternatively, the first value indicates a legacy DMRS port corresponding to a configuration type 2, and the second value indicates a new DMRS port corresponding to the configuration type 2. For example, the first value may be "type2", and the second value may be "type2-E". In other words, the first indication information may indicate any one of type1, type2, type1-E, and type2-E.

Optionally, the first indication information further indicates a quantity of symbols occupied by a DMRS port.

It should be understood that the quantity of symbols occupied by the DMRS is a maximum symbol length occupied by the DMRS port, that is, a maximum symbol length (or quantity) that can be occupied by a DMRS. In one transmission scheduling, a symbol length actually occupied by a DMRS sent by a transmitting end (for example, the network device or the terminal device) may be less than or equal to the maximum symbol length. For example, when the maximum symbol length is 2, a symbol length actually occupied by a DMRS sent by the transmitting end may be 1 or 2 in one transmission scheduling. For another example, when the maximum symbol length is 1, a symbol length actually occupied by a DMRS sent by the transmitting end may be 1 in one transmission scheduling.

In addition, the network device may further indicate, to the terminal device by using other indication information (for example, third indication information), the quantity of symbols occupied by the DMRS port. The third indication information that indicates the quantity of symbols occupied by the DMRS port and the first indication information that indicates the DMRS configuration type may be carried in a same message (for example, an RRC message), or may be carried in different messages. When the third indication information and the first indication information are carried in different messages, a sequence of sending different messages by the network device is not limited in this embodiment of this application.

If the network device does not indicate, to the terminal device, the maximum symbol length occupied by the DMRS port, the terminal device may consider by default that the maximum symbol length occupied by the DMRS port is 1.

S502: The network device sends second indication information to the terminal device, where the second indication information indicates a first value in a plurality of values included in a first set. Correspondingly, the terminal device may receive the second indication information.

For example, the network device may send the second indication information to the terminal device by using a media access control (media access control, MAC) layer message (for example, a MAC control element (control element, CE)) or a physical layer message (for example, downlink control information (Downlink control information, DCI)). The second indication information may be a media access control MAC layer message (for example, a CE) or a physical layer message (for example, DCI); or the second indication information may be carried in a media access control MAC layer message (for example, a CE) or a physical layer message (for example, DCI). This is not specifically limited in this application.

The first set is associated with the demodulation reference signal (DMRS) type. Each value in the first set corresponds to a group of port index values. A port corresponding to the group of port index values belongs to one or more of a first port set, a second port set, and a third port set. A time-frequency resource and a sequence corresponding to a port in the third port set are the same as time-frequency resources and sequences corresponding to a part or all of ports in the first port set. Optionally, the group of port index values corresponding to each value includes index values of one or more ports.

A double-symbol DMRS of a configuration type 2 is used as an example. The first port set may be understood as a legacy DMRS port set, and the first port set includes 12 DMRS ports (R15 ports): a DMRS port 0 to a DMRS port 11. The second port set may be understood as new DMRS ports (R18 ports), and the second port set includes 12 DMRS ports: a DMRS port 12 to a DMRS port 23. For features of DMRS ports in the first port set and the second port set, refer to the related descriptions of increased DMRS ports in 5 above.

The third port set may also be understood as a DMRS port that is further increased after the second port set. A quantity of DMRS ports included in the third port set may be greater than or equal to 12. For example, the third port set includes a DMRS port 24 and a DMRS port 25, or the third port set includes a DMRS port 24 to a DMRS port 35.

A DMRS port in the third port set and a DMRS port in the first port set correspond to same frequency domain orthogonal cover codes on all subcarriers. For example, the third port set includes the DMRS port 24 and the DMRS port 25, the DMRS port 24 and the DMRS port 0 in the first port set correspond to the same frequency domain orthogonal cover codes on all subcarriers, and the DMRS port 25 and the DMRS port 1 in the first port set correspond to same frequency domain orthogonal cover codes on all subcarriers. For another example, the third port set includes the DMRS port 24 to the DMRS port 35, the DMRS port 24 and the DMRS port 0 in the first port set correspond to same frequency domain orthogonal cover codes on all subcarriers, the DMRS port 25 and the DMRS port 1 in the first port set correspond to same frequency domain orthogonal cover codes on all subcarriers, the DMRS port 26 and the DMRS port 2 in the first port set correspond to same frequency domain orthogonal cover codes on all subcarriers, and so on. The DMRS port 35 and the DMRS port 11 in the first port set correspond to same frequency domain orthogonal cover codes on all subcarriers.

In an implementation, each value in the first set further corresponds to any one or more of the following: a quantity of orthogonal multiplexing CDM groups without data and a quantity of symbols of the demodulation reference signal.

In an implementation, before the network device sends the second indication information to the terminal device (that is, before step S501 is performed), the method further includes: The network device determines, in the first set, a first value corresponding to a first group of port index values. The first group of port index values is determined by the network device based on scheduling information of the terminal device in a current slot.

The following describes orthogonality of frequency domain cover codes corresponding to ports in the first port set, the second port set, and the third port set. An orthogonal manner of frequency domain cover code sequences corresponding to ports in the first port set, the second port set, and the third port set may include but is not limited to the following several manners:

**First orthogonal case (a case for the first port set and the third port set):**

When the first port set and the third port set are used to receive a single-symbol demodulation reference signal, length 2 frequency domain cover code sequences corresponding to two ports in a same CDM group are orthogonal.

When the four ports that are in the first port set and the third port set and that are used to receive double-symbol demodulation reference signals are divided into a first group and a second group, length 2 frequency domain cover code sequences of two ports in each group are orthogonal, and length 2 time domain cover code sequences corresponding to any port in the first group and any port in the second group in two adjacent OFDM symbols are orthogonal.

It may be understood that length 2 frequency domain cover code sequences corresponding to a first port and a fourth port are orthogonal, the first port and the fourth port belong to the first port set or the third port set, and the length 2 frequency domain cover code sequence includes corresponding frequency domain cover code sequences on two consecutive subcarriers in a CDM group.

The length 2 frequency domain cover code sequences corresponding to the first port and the fourth port are orthogonal, and satisfy the following formula:

$$\boldsymbol{W}_{1,f}^{\mathrm{H}}\boldsymbol{W}_{4,f} = 0,$$

where $\boldsymbol{W}_{\boldsymbol{1},\boldsymbol{f}} = \begin{bmatrix} W_{1,1} \\ W_{1,2} \end{bmatrix}$ represents a first frequency domain cover code sequence corresponding to the first port, $\boldsymbol{W}_{\boldsymbol{4},\boldsymbol{f}} = \begin{bmatrix} W_{4,1} \\ W_{4,2} \end{bmatrix}$ represents a fourth frequency domain cover code sequence corresponding to the fourth port, and *f* represents a frequency domain location.

**Second orthogonal case (a case for the second port set and the third port set):**

Length 4 frequency domain cover code sequences corresponding to a second port and a third port are orthogonal, the second port and the third port belong to the second port set and/or the third port set, and the length 4 frequency domain cover code sequence includes corresponding frequency domain cover code sequences on four consecutive subcarriers in a CDM group.

In an example, the length 4 frequency domain cover code sequences corresponding to the second port and the third port are orthogonal, and satisfy the following formula:

$$\boldsymbol{W}_{2,f}^{\mathrm{H}}\boldsymbol{W}_{3,f} = 0,$$

where $\boldsymbol{W}_{2,f} = \begin{bmatrix} W_{2,1} \\ W_{2,2} \\ W_{2,3} \\ W_{2,4} \end{bmatrix}$ represents a second frequency domain cover code corresponding to the second port, $\boldsymbol{W}_{3,f} = \begin{bmatrix} W_{3,1} \\ W_{3,2} \\ W_{3,3} \\ W_{3,4} \end{bmatrix}$ represents a third frequency domain cover code corresponding to the third port, and *f* represents a frequency domain location.

**Third orthogonal case (another case for the second port set and the third port set):**

Length 6 frequency domain cover code sequences corresponding to a second port and a third port are orthogonal, the second port and the third port belong to the second port set and/or the third port set, and the length 6 frequency domain cover code sequence includes corresponding frequency domain cover code sequences on six consecutive subcarriers in a CDM group.

The length 6 frequency domain cover code sequences corresponding to the second port and the third port are orthogonal, and satisfy the following formula:

$$\boldsymbol{W}_{2,f}^{\mathrm{H}}\boldsymbol{W}_{3,f} = 0,$$

where $\boldsymbol{W}_{2,f} = \begin{bmatrix} W_{2,1} \\ W_{2,2} \\ W_{2,3} \\ W_{2,4} \\ W_{2,5} \\ W_{2,6} \end{bmatrix}$ represents a second frequency domain cover code sequence corresponding to the second port, $\boldsymbol{W}_{3,f} = \begin{bmatrix} W_{3,1} \\ W_{3,2} \\ W_{3,3} \\ W_{3,4} \\ W_{3,5} \\ W_{3,6} \end{bmatrix}$ represents a third frequency domain cover code sequence corresponding to the third port, and *f* represents a frequency domain location.

In an implementation, the terminal device determines, based on the demodulation reference signal type indicated by the first indication information, the first value indicated by the second indication information, and a preset table (in the preset table, a plurality of values and corresponding port index values may be increased based on existing table content, the preset table may be public, and the network device and the terminal device know the table or have locally stored the table), the first group of port index values corresponding to the first value, and therefore can learn a port allocated by the network device to the terminal device.

For example, in the preset table, as shown in Table 6 (the configuration type 2 is used as an example), values (value) 4, 5, 7, 9, and 10, and quantities of CDM groups without data and port index values corresponding to the values are increased based on an existing port indication table.

Table 6

| Value (Value) | Quantity of code division multiplexing groups without data (Number of DMRS CDM group(s) without data) | Port index value (DMRS port(s)) |
|---|---|---|
| 0 | 3 | 0 |
| 1 | 3 | 1 |
| 2 | 3 | 12 |
| 3 | 3 | 13 |
| 4 | 3 | 24 |
| 5 | 3 | 25 |
| 6 | 3 | 0,1 |
| 7 | **3** | **13,25** |
| 8 | 3 | 12,13 |
| **9** | **3** | **24,25** |
| **10** | **3** | **13,24,25** |

For example, the first group of port index values indicated by the network device to the terminal device by using the first value includes but is not limited to the following cases:

**Case 1:** The first group of port index values includes an index value of a fifth port, and frequency domain cover codes corresponding to the fifth port and a sixth port are non-orthogonal on adjacent subcarriers in a same CDM group. The fifth port belongs to the first port set, and the sixth port belongs to the second port set.

In Case 1, if the network device indicates the fifth port in the first port set to the terminal device, and may further determine that the sixth port from the second port set meets the foregoing condition, that is, the frequency domain cover codes corresponding to the fifth port and the sixth port are non-orthogonal on adjacent subcarriers in a same CDM group, it can be determined that the sixth port is not indicated to another terminal device.

The frequency domain cover code sequences corresponding to the fifth port and the sixth port are non-orthogonal on adjacent subcarriers in a same CDM group, and satisfy the following formula:

$$\boldsymbol{W}_5^{\mathrm{H}}\boldsymbol{W}_6 \neq 0,$$

where

$\boldsymbol{W_5}$ represents a fifth frequency domain cover code sequence corresponding to the fifth port, and $\boldsymbol{W_6}$ represents a sixth frequency domain cover code sequence corresponding to the sixth port.

**Case 2:** The first group of port index values includes a seventh port index value, and the terminal device determines that a sixth port is indicated to another terminal device.

The sixth port belongs to the second port set, the seventh port belongs to the third port set, and frequency domain cover codes corresponding to the sixth port and the seventh port are non-orthogonal on adjacent subcarriers in a same CDM group.

**It should be noted that,** that the frequency domain cover codes corresponding to the sixth port and the seventh port are non-orthogonal on adjacent subcarriers in a same CDM group may be understood as follows: The sixth port and the seventh port are in a same CDM group, correspond to same frequency domain orthogonal cover codes on a group of adjacent subcarriers, and correspond to different frequency domain orthogonal cover codes on another group or other groups of adjacent subcarriers in a same RB.

In Case 2, if the network device indicates the seventh port in the third port set to the terminal device, and may further determine that the sixth port from the second port set meets the foregoing condition, that is, the frequency domain cover codes corresponding to the sixth port and the seventh port are non-orthogonal on adjacent subcarriers in a same CDM group, it can be determined that the sixth port is indicated to another terminal device.

The frequency domain cover code sequences corresponding to the sixth port and the seventh port are non-orthogonal on adjacent subcarriers in a same CDM group, and satisfy the following formula:

$$\boldsymbol{W}_6^{\mathrm{H}}\boldsymbol{W}_7 \neq 0,$$

where

$\boldsymbol{W_6}$ represents a sixth frequency domain cover code sequence corresponding to the sixth port, and $\boldsymbol{W_7}$ represents a seventh frequency domain cover code sequence corresponding to the seventh port.

For Case 1 and Case 2, it may be further understood that, based on the port index value included in the first group of port index values, the sixth port that may be determined by the network device or the terminal device should meet the following condition: The sixth port and the fifth port are in a same CDM group, correspond to same frequency domain orthogonal cover codes on a group of adjacent subcarriers, and correspond to different frequency domain orthogonal cover codes on another group or other groups of adjacent subcarriers in a same RB; and the sixth port and the seventh port are in a same CDM group, correspond to same frequency domain orthogonal cover codes on a group of adjacent subcarriers, and correspond to different frequency domain orthogonal cover codes on another group or other groups of adjacent subcarriers in a same RB.

In an implementation, the fifth port in the first port set and the seventh port in the third port set correspond to same frequency domain orthogonal cover codes on all subcarriers, and a time-frequency resource and a sequence of the fifth port are the same as a time-frequency resource and a sequence of the seventh port.

Therefore, the terminal device may use the time-frequency resource and the sequence of the fifth port in the first port set as the time-frequency resource and the sequence of the seventh port in the third port set, and receive a demodulation reference signal from the network device based on the time-frequency resource and the sequence of the seventh port.

Case 1 and Case 2 are described by using the following specific examples.

Example 1: A double-symbol DMRS of a configuration type 2 is used as an example. As shown in Table 7(a), three CDM groups are included. Port numbers 0, 1, 12, and 13 are in a same CDM group (that is, a first CDM group), port numbers 2, 3, 14, and 15 are in a same CDM group (that is, a second CDM group), and port numbers 4, 5, 16, and 17 are in a same CDM group (that is, a third CDM group).

As shown in Table 7(a), a resource block RB includes 12 subcarriers (that is, subcarriers 0 to 11) in total. In an RB, each CDM group occupies two groups of adjacent subcarriers, and one group of adjacent subcarriers may be understood as two adjacent subcarriers. For example, in an RB, two groups of adjacent subcarriers occupied by the first CDM group (P0, P1, P12, and P13) are: a subcarrier 0 and a subcarrier 1 (which belong to one group of adjacent subcarriers), and a subcarrier 6 and a subcarrier 7 (which belong to the other group of adjacent subcarriers).

Refer to Table 7(b). P12 (equivalent to the sixth port) and P0 (equivalent to the fifth port) correspond to the same frequency domain orthogonal cover codes on the subcarrier 0 and the subcarrier 1, and correspond to different frequency domain orthogonal cover codes on the subcarrier 6 and the subcarrier 7 (that is, frequency domain locations represented by *f* in the frequency domain cover code sequences corresponding to the fifth port and the sixth port are the carrier 0 and the subcarrier 2, or the subcarrier 6 and the subcarrier 7). It is evident that P12 and P0 are non-orthogonal. P12 (equivalent to the sixth port) and P24 (equivalent to the seventh port) correspond to the same frequency domain orthogonal cover codes on the subcarrier 0 and the subcarrier 1, and correspond to different frequency domain orthogonal cover codes on the subcarrier 6 and the subcarrier 7 (that is, frequency domain locations represented by *f* in the frequency domain cover code sequences corresponding to the sixth port and the seventh port are the subcarrier 0 and the subcarrier 1, or the carrier 6 and the subcarrier 7). It is evident that P12 and P24 are non-orthogonal, either.

For example, if the terminal device determines that the first value (Value) indicated by the second indication information is 0, it can be learned from Table 6 that a port index value corresponding to the first value 0 is 0. That is, the terminal device can learn that the network device indicates the port P0 to the terminal device for use. In addition, the terminal device can also learn that the port P12 has not been indicated to another terminal device.

If the terminal device determines that the first value (Value) indicated by the second indication information is 4, it can be learned from Table 6 that a port index value corresponding to the first value 4 is 24. That is, the terminal device can learn that the network device indicates the port P24 to the terminal device for use. In addition, the terminal device can also learn that the port P12 is indicated to another terminal device.

In addition, when the network device indicates the port P24 to the terminal device by using the second indication information, the terminal device may determine that a time-frequency resource and a sequence corresponding to the port P24 are the same as a time-frequency resource and a sequence corresponding to the port P0.

Table 7(a): Configuration type 2

| Subcarrier sequence number | DMRS port index value (port number) |
|---|---|
| 0 | 0 1 12 13 |
| 1 | 0 1 12 13 |
| 2 | 2 3 14 15 |
| 3 | 2 3 14 15 |
| 4 | 4 5 16 17 |
| 5 | 4 5 16 17 |
| 6 | 0 1 12 13 |
| 7 | 0 1 12 13 |
| 9 | 2 3 14 15 |
| 10 | 2 3 14 15 |
| 11 | 4 5 16 17 |
| 12 | 4 5 16 17 |

Table 7(b): Configuration type 2

| Re | P0/P24 | P1/P25 | P12 | P13 |
|---|---|---|---|---|
| 0 | +1 | +1 | +1 | +1 |
| 1 | +1 | -1 | +1 | -1 |
| 6 | +1 | +1 | -1 | -1 |

(continued)

| Re | P0/P24 | P1/P25 | P12 | P13 |
|---|---|---|---|---|
| 7 | +1 | -1 | -1 | +1 |

Example 2: A double-symbol DMRS of a configuration type 1 is used as an example. As shown in Table 8(a), two CDM groups are included. Port numbers 0, 1, 8, and 9 are in a same CDM group (that is, a first CDM group), and port numbers 2, 3, 10, and 11 are in a same CDM group (that is, a second CDM group). As shown in 9(a), a resource block RB includes 12 subcarriers (that is, subcarriers 0 to 11). In an RB, each CDM group occupies six subcarriers, and a group of adjacent subcarriers may be understood as two adjacent subcarriers (two adjacent subcarriers with closest subcarrier sequence numbers) occupied by a same CDM2.

For example, the first CDM group (port numbers are 0, 1, 8, 9, Pn1, and Pn2) occupies the subcarrier 0, the subcarrier 2, the subcarrier 4, the subcarrier 6, the subcarrier 8, the subcarrier 10, and the subcarrier 12. That is, the subcarrier 0 and the subcarrier 2 may be considered as a group of adjacent subcarriers, the subcarrier 4 and the subcarrier 6 may be considered as a group of adjacent subcarriers, and the subcarrier 8 and the subcarrier 10 may be considered as a group of adjacent subcarriers.

As shown in Table 8(b), P0 (equivalent to the fifth port) and P24 (equivalent to the seventh port) correspond to same frequency domain orthogonal cover code on all subcarriers. P0 and Pn1 (equivalent to the sixth port) are in a same CDM group, correspond to same time-frequency cover codes on the subcarrier 0 and the subcarrier 2 (that is, a group of adjacent subcarriers), correspond to different time-frequency cover codes on the subcarrier 4 and the subcarrier 6, and correspond to different time-frequency cover codes on the subcarrier 8 and the subcarrier 10 (that is, two other groups of adjacent subcarriers in the same RB). That is, it may be considered that Pn1 and P0 are non-orthogonal on adjacent subcarriers in a same CDM group (that is, frequency domain locations represented by *f* in the frequency domain cover code sequences corresponding to the sixth port and the seventh port are the subcarrier 0 and the subcarrier 2, or the carrier 4 and the subcarrier 6, or the subcarrier 8 and the subcarrier 10).

If the first group of port index values includes P0 (equivalent to the fifth port), it is implicitly indicated that Pn1 (equivalent to the sixth port) is not indicated to another terminal device. That is, the network device (or the terminal device) may determine that Pn1 is not indicated to the another terminal device.

If the first group of port index values includes P24 (equivalent to the seventh port), it is implicitly indicated that Pn1 (equivalent to the sixth port) is indicated to another terminal device. That is, the network device (or the terminal device) may determine that Pn1 is indicated to the another terminal device.

Table 8(a) Configuration type 1

| Subcarrier sequence number | DMRS port index value (port number) |
|---|---|
| 0 | 0 1 8 9 |
| 1 | 2 3 10 11 |
| 2 | 0 1 8 9 |
| 3 | 2 3 10 11 |
| 4 | 0 1 8 9 |
| 5 | 2 3 10 11 |
| 6 | 0 1 8 9 |
| 7 | 2 3 10 11 |
| 8 | 0 1 8 9 |
| 9 | 2 3 10 11 |
| 10 | 0 1 8 9 |
| 11 | 2 3 10 11 |
| 12 | 0 1 8 9 |

Table 8(b) Configuration type 1

| Re | P0/P24 | P1/P25 | P8 | P9 | Pn1 | Pn2 |
|---|---|---|---|---|---|---|
| 0 | +1 | +1 | +1 | +1 | +1 | +1 |
| 2 | +1 | -1 | -1 | -1 | +1 | +1 |
| 4 | +1 | +1 | $e^{-\frac{2}{3}\pi j}$ | $e^{\frac{2}{3}\pi j}$ | $e^{-\frac{2}{3}\pi j}$ | $e^{\frac{2}{3}\pi j}$ |
| 6 | +1 | -1 | $e^{\frac{1}{3}\pi j}$ | $e^{-\frac{1}{3}\pi j}$ | $e^{-\frac{2}{3}\pi j}$ | $e^{\frac{2}{3}\pi j}$ |
| 8 | +1 | +1 | $e^{\frac{2}{3}\pi j}$ | $e^{-\frac{2}{3}\pi j}$ | $e^{\frac{2}{3}\pi j}$ | $e^{-\frac{2}{3}\pi j}$ |
| 10 | +1 | -1 | $e^{-\frac{1}{3}\pi j}$ | $e^{\frac{1}{3}\pi j}$ | $e^{\frac{2}{3}\pi j}$ | $e^{-\frac{2}{3}\pi j}$ |

**Case 3:** The first group of port index values includes an index value of an eighth port and an index value of a ninth port, length 4 frequency domain cover codes or length 6 frequency domain cover code sequences corresponding to the eighth port and the ninth port are orthogonal, and length 2 frequency domain cover code sequences corresponding to the eighth port and the ninth port are non-orthogonal.

Length 2 frequency domain cover code sequences corresponding to the eighth port and a tenth port are orthogonal, and length 2 frequency domain cover code sequences corresponding to the ninth port and the tenth port are orthogonal.

The eighth port belongs to the second port set, the ninth port belongs to the third port set, the tenth port belongs to the first port set, and the eighth port, the ninth port, and the tenth port are all in a same CDM group.

It should be noted that, that the length 2 frequency domain cover codes corresponding to the eighth port and the ninth port are non-orthogonal may alternatively be understood as follows: The eighth port and the ninth port are in the same CDM group, correspond to same frequency domain orthogonal cover codes on a group of adjacent subcarriers, and correspond to different frequency domain orthogonal cover codes on another group or other groups of adjacent subcarriers in a same RB.

In addition, that the length 2 frequency domain cover codes corresponding to the eighth port and the tenth port are orthogonal, and the length 2 frequency domain cover codes corresponding to the ninth port and the tenth port are orthogonal may be understood as follows: The eighth port and the tenth port are orthogonal on two adjacent subcarriers in the same CDM group, and the ninth port and the tenth port are also orthogonal on two adjacent subcarriers in the same CDM group.

In an example, the length 4 frequency domain cover code sequences corresponding to the eighth port and the ninth port are orthogonal, and satisfy the following formula:

$$\boldsymbol{W}_{8,f}^{\mathrm{H}}\boldsymbol{W}_{9,f} = 0,$$

where $\boldsymbol{W}_{8,f} = \begin{bmatrix} W_{8,1} \\ W_{8,2} \\ W_{8,3} \\ W_{8,4} \end{bmatrix}$ represents an eighth frequency domain cover code sequence corresponding to the eighth port, $\boldsymbol{W}_{9,f} = \begin{bmatrix} W_{9,1} \\ W_{9,2} \\ W_{9,3} \\ W_{9,4} \end{bmatrix}$ represents a ninth frequency domain cover code sequence corresponding to the ninth port, and $f$ represents a frequency domain location.

The length 6 frequency domain cover code sequences corresponding to the eighth port and the ninth port are orthogonal, and satisfy the following formula:

$$W_{8,f}^{\mathrm{H}} W_{9,f} = 0,$$

where $W_{8,f} = \begin{bmatrix} W_{8,1} \\ W_{8,2} \\ W_{8,3} \\ W_{8,4} \\ W_{8,5} \\ W_{8,6} \end{bmatrix}$ represents an eighth frequency domain cover code sequence corresponding to the eighth port, $W_{9,f} = \begin{bmatrix} W_{9,1} \\ W_{9,2} \\ W_{9,3} \\ W_{9,4} \\ W_{9,5} \\ W_{9,6} \end{bmatrix}$ represents a ninth frequency domain cover code sequence corresponding to the ninth port, and *f* represents a frequency domain location.

The length 2 frequency domain cover code sequences corresponding to the eighth port and the ninth port are non-orthogonal, and satisfy the following formula:

$$\boldsymbol{W_{8,f}^{H} W_{9,f}} \neq \boldsymbol{0},$$

where $W_{8,f} = \begin{bmatrix} W_{8,1} \\ W_{8,2} \end{bmatrix}$ represents an eighth frequency domain cover code sequence corresponding to the eighth port, $W_{9,f} = \begin{bmatrix} W_{9,1} \\ W_{9,2} \end{bmatrix}$ represents a ninth frequency domain cover code sequence corresponding to the ninth port, and *f* represents a frequency domain location.

The length 2 frequency domain cover code sequences corresponding to the eighth port and the tenth port are orthogonal, and satisfy the following formula:

$$W_{8,f}^{\mathrm{H}} W_{10,f} = 0,$$

where $W_{8,f} = \begin{bmatrix} W_{8,1} \\ W_{8,2} \end{bmatrix}$ represents an eighth frequency domain cover code sequence corresponding to the eighth port, $W_{10,f} = \begin{bmatrix} W_{10,1} \\ W_{10,2} \end{bmatrix}$ represents a tenth frequency domain cover code sequence corresponding to the tenth port, and *f* represents a frequency domain location.

The length 2 frequency domain cover code sequences corresponding to the ninth port and the tenth port are orthogonal, and satisfy the following formula:

$$W_{9,f}^{\mathrm{H}} W_{10,f} = 0,$$

where $W_{9,f} = \begin{bmatrix} W_{9,1} \\ W_{9,2} \end{bmatrix}$ represents a ninth frequency domain cover code sequence corresponding to the ninth port,

$$W_{10,f} = \begin{bmatrix} W_{10,1} \\ W_{10,2} \end{bmatrix}$$ represents a tenth frequency domain cover code sequence corresponding to the tenth port, and *f* represents a frequency domain location.

In an implementation, based on Case 3, the following case is further included: Length 4 frequency domain cover codes corresponding to the eighth port and the tenth port are orthogonal, and length 4 frequency domain cover codes corresponding to the ninth port and the tenth port are orthogonal. That is, the eighth port and the tenth port are orthogonal on four adjacent subcarriers in the same CDM group, and the ninth port and the tenth port are orthogonal on four adjacent subcarriers in the same CDM group.

In Case 3, when the network device sends the second indication information to the terminal device, to indicate to the terminal device that the first group of port index values includes the eighth port and the ninth port, the length 4 frequency domain cover codes or the length 6 frequency domain cover codes corresponding to the eighth port and the ninth port are orthogonal, but the length 2 frequency domain cover codes corresponding to the eighth port and the ninth port are non-orthogonal. In this case, the network device may determine the tenth port. The length 2 frequency domain cover code corresponding to the tenth port is separately orthogonal to the length 2 frequency domain cover codes corresponding to the eighth port and the ninth port, or the length 4 frequency domain cover code corresponding to the tenth port is separately orthogonal to the length 4 frequency domain cover codes corresponding to the eighth port and the ninth port. In the solution of this embodiment of this application, the tenth port that meets the foregoing orthogonality condition may be preferentially selected from the first port set, so that the network device can indicate the tenth port to another terminal device for use, to ensure orthogonality of DMRS ports in a CDM group, and suppress interference between demodulation reference signals (which may be from different terminals) transmitted on different ports.

The following further describes Case 3 by using the following specific Example 3.

Example 3: A double-symbol DMRS of the configuration type 2 is used as an example. If the network device indicates the first value (the value is 7) to the terminal device by using the second indication information, it can be learned from Table 6 that when the first group of port index values corresponding to the first value includes P13 (equivalent to the eighth port) and P25 (equivalent to the ninth port), as shown in Table 7(b), P13 and P25 are in a same CDM group, P13 and P25 correspond to same time-frequency orthogonal cover codes on the adjacent subcarrier 0 and subcarrier 1 (that is, one group of adjacent subcarriers), and the time-frequency orthogonal cover codes are +1 and +1. P13 and P25 correspond to different orthogonal time-frequency cover codes on the adjacent subcarrier 6 and subcarrier 7 (that is, the other group of adjacent subcarriers in a same RB). It is evident that P13 (equivalent to the eighth port) and P25 (equivalent to the ninth port) are non-orthogonal on two adjacent subcarriers in the same CDM group.

Therefore, the terminal device may determine that the sixth port is P0 (equivalent to preferentially selecting the tenth port from the first port set), time-frequency cover codes corresponding to P0 and P13 on two adjacent subcarriers (that is, the subcarrier 0 and the subcarrier 1, or the subcarrier 6 and the subcarrier 7) in the same CDM group are orthogonal, and time-frequency cover codes corresponding to P0 and P25 on two adjacent subcarriers (that is, subcarrier 0 and subcarrier 1, or subcarrier 6 and subcarrier 7) in the same CDM group are also orthogonal.

Case 4: The first group of port index values includes an index value of an eleventh port and an index value of a twelfth port, length 4 frequency domain cover codes corresponding to the eleventh port and the twelfth port are orthogonal, and length 2 frequency domain cover codes corresponding to the eleventh port and the twelfth port are orthogonal.

A length 4 frequency domain cover code sequence corresponding to the eleventh port is separately orthogonal to length 4 frequency domain cover code sequences corresponding to a thirteenth port and a fourteenth port, and a length 4 frequency domain cover code sequence corresponding to the twelfth port is separately orthogonal to the length 4 frequency domain cover code sequences corresponding to the thirteenth port and the fourteenth port.

The eleventh port, the twelfth port, the thirteenth port, and the fourteenth port belong to the second port set or the third port set.

In an example, the length 4 frequency domain cover code sequences corresponding to the eleventh port and the twelfth port are orthogonal, and satisfy the following formula:

$$\boldsymbol{W}_{11,f}^{\mathrm{H}} \boldsymbol{W}_{12,f} = 0,$$

where $$\boldsymbol{W}_{11,f} = \begin{bmatrix} W_{11,1} \\ W_{11,2} \\ W_{11,3} \\ W_{11,4} \end{bmatrix}$$ represents an eleventh frequency domain cover code sequence corresponding to the

eleventh port, $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the twelfth port, and $f$ represents a frequency domain location.

The length 2 frequency domain cover code sequences corresponding to the eleventh port and the twelfth port are orthogonal, and satisfy the following formula:

$$\boldsymbol{W}_{11,f}^{\mathrm{H}} \boldsymbol{W}_{12,f} = 0,$$

where $\boldsymbol{W}_{11,f} = \begin{bmatrix} W_{11,1} \\ W_{11,2} \end{bmatrix}$ represents an eleventh frequency domain cover code sequence corresponding to the eleventh port, $\boldsymbol{W}_{12,f} = \begin{bmatrix} W_{12,1} \\ W_{12,2} \end{bmatrix}$ represents a twelfth frequency domain cover code sequence corresponding to the twelfth port, and $f$ represents a frequency domain location.

In an example, the length 4 frequency domain cover code sequences corresponding to the eleventh port and the thirteenth port are orthogonal, and satisfy the following formula:

$$\boldsymbol{W}_{12,f}^{\mathrm{H}} \boldsymbol{W}_{13,f} = 0,$$

where $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the twelfth port, $\boldsymbol{W}_{13,f} = \begin{bmatrix} W_{13,1} \\ W_{13,2} \\ W_{13,3} \\ W_{13,4} \end{bmatrix}$ represents a thirteenth frequency domain cover code sequence corresponding to the thirteenth port, and $f$ represents a frequency domain location.

In an example, the length 4 frequency domain cover code sequences corresponding to the eleventh port and the fourteenth port are orthogonal, and satisfy the following formula:

$$\boldsymbol{W}_{11,f}^{\mathrm{H}} \boldsymbol{W}_{14,f} = 0,$$

where $\boldsymbol{W}_{11,f} = \begin{bmatrix} W_{8,1} \\ W_{8,2} \\ W_{8,3} \\ W_{8,4} \end{bmatrix}$ represents an eleventh frequency domain cover code sequence corresponding to the eleventh port, $\boldsymbol{W}_{14,f} = \begin{bmatrix} W_{14,1} \\ W_{14,2} \\ W_{14,3} \\ W_{14,4} \end{bmatrix}$ represents a fourteenth frequency domain cover code sequence corresponding to the fourteenth port, and $f$ represents a frequency domain location.

In an example, the length 4 frequency domain cover code sequences corresponding to the twelfth port and the thirteenth port are orthogonal, and satisfy the following formula:

$$\boldsymbol{W}_{8,f}^{\mathrm{H}}\boldsymbol{W}_{9,f} = 0,$$

where $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the twelfth port, $\boldsymbol{W}_{13,f} = \begin{bmatrix} W_{13,1} \\ W_{13,2} \\ W_{13,3} \\ W_{13,4} \end{bmatrix}$ represents a thirteenth frequency domain cover code sequence corresponding to the thirteenth port, and *f* represents a frequency domain location.

In an example, the length 4 frequency domain cover code sequences corresponding to the twelfth port and the fourteenth port are orthogonal, and satisfy the following formula:

$$\boldsymbol{W}_{12,f}^{\mathrm{H}}\boldsymbol{W}_{14,f} = 0,$$

where $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the twelfth port, $\boldsymbol{W}_{14,f} = \begin{bmatrix} W_{14,1} \\ W_{14,2} \\ W_{14,3} \\ W_{14,4} \end{bmatrix}$ represents a fourteenth frequency domain cover code sequence corresponding to the fourteenth port, and *f* represents a frequency domain location.

Example 4: A double-symbol DMRS of the configuration type 2 is used as an example. If the network device indicates the first value (the value is 9) to the terminal device by using the second indication information, it can be learned from Table 6 that when the first group of port index values corresponding to the first value includes P24 (equivalent to the eleventh port) and P25 (equivalent to the twelfth port), as shown in Table 7(b), P24 and P25 are in a same CDM group, time-frequency cover code sequences corresponding to P24 and P25 on the adjacent subcarrier 0 and subcarrier 1 are orthogonal (that is, corresponding time-frequency cover code sequences on two adjacent subcarriers are orthogonal), and time-frequency cover code sequences corresponding to P24 and P25 on the subcarrier 0, the subcarrier 1, the subcarrier 6, and subcarrier 7 are also orthogonal (that is, corresponding time-frequency cover code sequences on four adjacent subcarriers are orthogonal).

Therefore, the thirteenth port and the fourteenth end may be found from the first port set or the third port set. Time-frequency cover code sequences corresponding to the thirteenth port and P24 on four adjacent subcarriers may be orthogonal, and time-frequency cover code sequences corresponding to the thirteenth port and P25 on four adjacent subcarriers may be orthogonal. Time-frequency cover code sequences corresponding to the fourteenth port and P24 on four adjacent subcarriers may be orthogonal, and time-frequency cover code sequences corresponding to the fourteenth port and P25 on four adjacent subcarriers may be orthogonal, for example, P13.

S503: The network device sends a demodulation reference signal to the terminal device based on a time-frequency resource corresponding to the first group of port index values.

Correspondingly, the terminal device receives the demodulation reference signal from the network device based on the time-frequency resource corresponding to the first group of port index values. The first group of port index values is associated with the first value.

The association between the first group of port index values and the first value may be based on a preset table (for example, the foregoing table). The preset table includes a plurality of values and a plurality of groups of port index values, each value corresponds to a group of port index values, and the first value corresponds to the first group of port index values. The terminal device may find, by looking up the table, the first group of port index values corresponding to the first value. Alternatively,

the terminal device may obtain the first group of port index values based on an association with the first value according to a preset algorithm. Therefore, how to specifically associate the first group of port index values with the first value is not specifically limited in this application.

Because a plurality of DMRS symbols corresponding to one DMRS port may correspond to one DMRS sequence, one DMRS sequence includes a plurality of DMRS sequence elements. A DMRS sequence corresponding to a DMRS port may be mapped to a corresponding time-frequency resource according to a time-frequency resource mapping rule after being multiplied by a corresponding cover code sequence. That is, the plurality of DMRS symbols corresponding to the DMRS port may be sent on the plurality of time-frequency resources.

The network device may map a DMRS sequence corresponding to a port in the first group of port index values to a corresponding time-frequency resource according to a time-frequency resource mapping rule after multiplying the DMRS sequence by a corresponding cover code sequence. In this way, a plurality of DMRS symbols corresponding to the DMRS can be sent on the plurality of time-frequency resources (that is, the demodulation reference signal is sent).

For example, when the first group of port index values includes a port in the first port set or the third port set, a DMRS sequence corresponding to a DMRS port in the first port set may be mapped to a time-frequency resource according to the time-frequency resource mapping rule in the formula 1.

When the first group of port index values includes a port in the second port set, a DMRS sequence corresponding to a DMRS port in the second port set may be mapped to a time-frequency resource according to a time-frequency resource mapping rule (that is, the formula 2) of increased DMRS ports.

## 6.1 For a specific DMRS port indication, refer to the following:

With reference to Table 9A and Table 9B, the following describes some possible implementations in which the terminal device determines a DMRS port.

(1) When the first indication information indicates the configuration type 1, and indicates that a maximum symbol length occupied by the DMRS port is 1, the terminal device may determine, based on Table 9A or Table 9B and an index value indicated by indication information 3, a DMRS port allocated by the network device to the terminal device. Whether the terminal device specifically uses Table 9A or Table 9B may be defined in a protocol. For example, when the terminal device receives DCI, and at least one field value (codepoint) in a "Transmission Configuration Indication" field in the DCI corresponds to two transmission configuration indication (transmission configuration indication, TCI) states, the terminal device may use Table 9B; otherwise, the terminal device may use Table 9A.

Table 9A: Configuration type 1, a maximum symbol length 1 occupied by a DMRS port

| One codeword: Codeword 0 enabled, and Codeword 1 disabled | | |
|---|---|---|
| Index value (value) | Quantity of CDM groups without data | DMRS port index |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12-15 | Reserved | Reserved |

Table 9B: Configuration type 1, a maximum symbol length occupied by a DMRS port is 1

| One codeword: Codeword 0 enabled, Codeword 1 disabled | | |
|---|---|---|
| Index value | Quantity of CDM groups without data | DMRS port index |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 2 | 0,2,3 |
| 13-15 | Reserved | Reserved |

Table 9A is used as an example. For example, when the index value indicated by the indication information 3 is "1", because a DMRS port index associated with the index value "1" in Table 9A is 1, the terminal device may determine that the DMRS port allocated by the network device to the terminal device is a DMRS port 1 in a DMRS port 0 to a DMRS port 3 corresponding to a type1 single-symbol DMRS. For another example, when the index value indicated by the indication information 3 is "2", because DMRS port indexes associated with the index value "2" in Table 9A are 0 and 1, the terminal device may determine that DMRS ports allocated by the network device to the terminal device include the DMRS port 0 and the DMRS port 1 in the DMRS port 0 to the DMRS port 3 corresponding to the type1 single-symbol DMRS.

In addition, in Table 9A and Table 9B, when the quantity of CDM groups without data is 1, the CDM group without data may be a CDM group 0. When the quantity of CDM groups without data is 2, the CDM groups without data may include a CDM group 0 and a CDM group 1. When the quantity of CDM groups without data is 3, the CDM groups without data may include a CDM group 0, a CDM group 1, and a CDM group 3. For "a quantity of CDM groups without data" in another table in this embodiment of this application, refer to the descriptions herein.

(2) When the first indication information indicates the configuration type 1, and indicates that a maximum symbol length occupied by the DMRS port is 2, the terminal device may determine, based on Table 10A or Table 10B and an index value indicated by indication information 3, a DMRS port allocated by the network device to the terminal device. For whether the terminal device specifically uses Table 10A or Table 10B, refer to the foregoing descriptions about whether the terminal device uses Table 9A or Table 9B.

Table 10A: Configuration type 1, a maximum symbol length occupied by a DMRS port is 2

| One codeword: Codeword 0 enabled, Codeword 1 disabled | | | | Two codewords: Codeword 0 enabled, Codeword 1 enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4-31 | Reserved | Reserved | Reserved |

(continued)

| One codeword: Codeword 0 enabled, Codeword 1 disabled | | | | Two codewords: Codeword 0 enabled, Codeword 1 enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2,3,6,7 | 2 | | | | |
| 30 | 2 | 0,2,4,6 | 2 | | | | |
| 31 | Reserved | Reserved | Reserved | | | | |

Table 10B: Configuration type 1, a maximum symbol length occupied by a DMRS port is 2

| One codeword: Codeword 0 enabled, and Codeword 1 disabled | | | | Two codewords: Codeword 0 enabled, Codeword 1 enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |

(continued)

| One codeword: Codeword 0 enabled, and Codeword 1 disabled | | | | Two codewords: Codeword 0 enabled, Codeword 1 enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 3 | 2 | 0 | 1 | 3 | 2 | 0,1,2,3,4,5,6,7 | 2 |
| 4 | 2 | 1 | 1 | 4-31 | Reserved | Reserved | Reserved |
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2,3,6,7 | 2 | | | | |
| 30 | 2 | 0,2,4,6 | 2 | | | | |
| 31 | 2 | 0,2,3 | 1 | | | | |

A case of one codeword in Table 10A is used as an example. For example, when the index value indicated by the indication information 3 is "1", because a DMRS port index associated with the index value "1" in Table 10A is 1 and a symbol length occupied by the DMRS port associated with the index value "1" in Table 10A is 1, the terminal device may determine that the DMRS port allocated by the network device to the terminal device is a DMRS port 1 in a DMRS port 0 to a DMRS port 3 corresponding to a type1 single-symbol DMRS. For another example, when the index value indicated by the indication information 3 is "12", because the DMRS port index associated with the index value "12" in Table 4Ais 0 and the symbol length occupied by the DMRS port associated with the index value "12" in Table 10A is 2, the terminal device may determine that the DMRS port allocated by the network device to the terminal device is the DMRS port 0 in a DMRS port 0 to a DMRS port 7 corresponding to a type1 double-symbol DMRS.

(3) When the first indication information indicates the configuration type 2, and indicates that a maximum symbol length occupied by the DMRS port is 1, the terminal device may determine, based on Table 11A or Table 11B and an index value indicated by indication information 3, a DMRS port allocated by the network device to the terminal device. For whether the terminal device specifically uses Table 11A or Table 11B, refer to the foregoing descriptions about whether the terminal device uses Table 9A or Table 9B.

Table 11A: Configuration type 2, a maximum symbol length occupied by a DMRS port is 1

| One codeword: Codeword 0 enabled, and Codeword 1 disabled | | | Two codewords: Codeword 0 enabled, Codeword 1 enabled | | |
|---|---|---|---|---|---|
| Index value | Quantity of CDM groups without data | DMRS port index | Index value | Quantity of CDM groups without data | DMRS port index |
| 0 | 1 | 0 | 0 | 3 | 0-4 |
| 1 | 1 | 1 | 1 | 3 | 0-5 |
| 2 | 1 | 0,1 | 2-31 | Reserved | Reserved |
| 3 | 2 | 0 | | | |
| 4 | 2 | 1 | | | |
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24-31 | Reserved | Reserved | | | |

Table 11B: Configuration type 2, a maximum symbol length occupied by a DMRS port is 1

| One codeword: Codeword 0 enabled, Codeword 1 disabled | | | Two codewords: Codeword 0 enabled, Codeword 1 enabled | | |
|---|---|---|---|---|---|
| Index value | Quantity of CDM groups without data | DMRS port index | Index value | Quantity of CDM groups without data | DMRS port index |
| 0 | 1 | 0 | 0 | 3 | 0-4 |
| 1 | 1 | 1 | 1 | 3 | 0-5 |

(continued)

| One codeword: Codeword 0 enabled, Codeword 1 disabled | | | Two codewords: Codeword 0 enabled, Codeword 1 enabled | | |
|---|---|---|---|---|---|
| Index value | Quantity of CDM groups without data | DMRS port index | Index value | Quantity of CDM groups without data | DMRS port index |
| 2 | 1 | 0,1 | 2-31 | Reserved | Reserved |
| 3 | 2 | 0 | | | |
| 4 | 2 | 1 | | | |
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24 | 2 | 0,2,3 | | | |
| 25-31 | Reserved | Reserved | | | |

A case of one codeword in Table 11A is used as an example. For example, when the index value indicated by the indication information 3 is "1", because a DMRS port index associated with the index value "1" in Table 11A is 1, the terminal device may determine that the DMRS port allocated by the network device to the terminal device is a DMRS port 1 in a DMRS port 0 to a DMRS port 5 corresponding to a type2 single-symbol DMRS.

(4) When the first indication information 1 indicates the configuration type 2, and indicates that a maximum symbol length occupied by the DMRS port is 2, the terminal device may determine, based on Table 12A or Table 12B and an index value indicated by indication information 3, a DMRS port allocated by the network device to the terminal device. For whether the terminal device specifically uses Table 12A or Table 12B, refer to the foregoing descriptions about whether the terminal device uses Table 9A or Table 9B.

Table 12A: Configuration type 2, a maximum symbol length occupied by a DMRS port is 2

| One codeword: Codeword 0 enabled, Codeword 1 disabled | | | | Two codewords: Codeword 0 enabled, Codeword 1 enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6-63 | Reserved | Reserved | Reserved |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0,1 | 1 | | | | |
| 18 | 3 | 2,3 | 1 | | | | |
| 19 | 3 | 4,5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0,2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |

(continued)

| One codeword: Codeword 0 enabled, Codeword 1 disabled | | | | Two codewords: Codeword 0 enabled, Codeword 1 enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 36 | 3 | 0,1 | 2 | | | | |
| 37 | 3 | 2,3 | 2 | | | | |
| 38 | 3 | 4,5 | 2 | | | | |
| 39 | 3 | 6,7 | 2 | | | | |
| 40 | 3 | 8,9 | 2 | | | | |
| 41 | 3 | 10,11 | 2 | | | | |
| 42 | 3 | 0,1,6 | 2 | | | | |
| 43 | 3 | 2,3,8 | 2 | | | | |
| 44 | 3 | 4,5,10 | 2 | | | | |
| 45 | 3 | 0,1,6,7 | 2 | | | | |
| 46 | 3 | 2,3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6,7 | 2 | | | | |
| 57 | 2 | 8,9 | 2 | | | | |
| 58-63 | Reserved | Reserved | Reserved | | | | |

Table 12B: Configuration type 2, a maximum symbol length occupied by a DMRS port is 2

| One codeword: Codeword 0 enabled, Codeword 1 disabled | | | | Two codewords: Codeword 0 enabled, Codeword 1 enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6-63 | Reserved | Reserved | Reserved |

(continued)

| One codeword: Codeword 0 enabled, Codeword 1 disabled | | | | Two codewords: Codeword 0 enabled, Codeword 1 enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0,1 | 1 | | | | |
| 18 | 3 | 2,3 | 1 | | | | |
| 19 | 3 | 4,5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0,2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0,1 | 2 | | | | |
| 37 | 3 | 2,3 | 2 | | | | |
| 38 | 3 | 4,5 | 2 | | | | |
| 39 | 3 | 6,7 | 2 | | | | |
| 40 | 3 | 8,9 | 2 | | | | |
| 41 | 3 | 10,11 | 2 | | | | |
| 42 | 3 | 0,1,6 | 2 | | | | |

(continued)

| One codeword: Codeword 0 enabled, Codeword 1 disabled | | | | Two codewords: Codeword 0 enabled, Codeword 1 enabled | | | |
|---|---|---|---|---|---|---|---|
| Index value | Quantity of CDM groups without data | DMRS port index | Symbol length occupied by the DMRS port | Index value | Quantity of CDM groups without data | DMRS port index | Symbol length occupied by the DMRS port |
| 43 | 3 | 2,3,8 | 2 | | | | |
| 44 | 3 | 4,5,10 | 2 | | | | |
| 45 | 3 | 0,1,6,7 | 2 | | | | |
| 46 | 3 | 2,3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6,7 | 2 | | | | |
| 57 | 2 | 8,9 | 2 | | | | |
| 58 | 2 | 0,2,3 | 1 | | | | |
| 59-63 | Reserved | Reserved | Reserved | | | | |

A case of one codeword in Table 12A is used as an example. For example, when the index value indicated by the indication information 3 is "1", because a DMRS port index associated with the index value "1" in Table 12A is 1 and a symbol length occupied by the DMRS port associated with the index value "1" in Table 12A is 1, the terminal device may determine that the DMRS port allocated by the network device to the terminal device is a DMRS port 1 in a DMRS port 0 to a DMRS port 5 corresponding to a type2 single-symbol DMRS. For another example, when the index value indicated by the indication information 3 is "25", because the DMRS port index associated with the index value "25" in Table 12A is 1 and the symbol length occupied by the DMRS port associated with the index value "25" in Table 12A is 2, the terminal device may determine that the DMRS port allocated by the network device to the terminal device is a DMRS port 1 in a DMRS port 0 to a DMRS port 11 corresponding to a type2 double-symbol DMRS.

It may be understood that all tables (for example, Table 1 to Table 12B) in embodiments of this application may be defined by a protocol.

For example, for the configuration type 1 (Type 1 DMRS), refer to the port numbers in Table 8(a) and Table 8(b), a corresponding time-frequency resource mapping rule is as follows:

For a port p, the mth reference sequence element r(m) in a corresponding reference signal sequence is mapped, according to the following rule, to a resource element RE with an index $(k,l)_{p,\mu}$. The RE with the index $(k,l)_{p,\mu}$ corresponds to an OFDM symbol with an index 1 in a slot in time domain, and corresponds to a subcarrier with an index k in frequency domain. A mapping rule meets the following:

$$a_{k.l}^{(p,\mu)} = \beta_{PDSCH}^{DMRS} w_f(k') w_t(l') b(n \bmod 3) r(2n + k')$$

$$k = \begin{cases} 4n + 2k' + \Delta, & \text{configuration type1} \\ 6n + k' + \Delta, & \text{configuration type2} \end{cases};$$

$$k' = 0,1;$$

$$l = \bar{l} + l';$$

$$n = 0,1, \ldots$$

$$l' = 0,1.$$

$\mu$ is a subcarrier spacing parameter, $a_{k.l}^{(p,\mu)}$ is a DMRS modulation symbol corresponding to a *port p* mapped to an RE with an index $(k,l)_{p,\mu}$, and $\bar{l}$ is a symbol index of a start OFDM symbol occupied by the DMRS modulation symbol or a symbol index of a reference OFDM symbol. $\beta_{PDSCH}^{DMRS}$ is a power scaling factor, $w_t(l')$ is a time domain cover code element corresponding to an OFDM symbol with an index *l'*, $w_f(k')$ is a frequency domain cover code element corresponding to a subcarrier with an index *k'*, *m* = *2n* + *k'*, and Δ is a subcarrier offset factor. A value of *b*(*n mod* 3) is shown in Table 13A (corresponding to the port numbers in Table 8(a) and Table 8(b)).

Table 13A

| | P0 to P7 (legacy ports) | P8 to P15 (new ports) | Pn0 to Pn7 (new ports) |
|---|---|---|---|
| b(0) | 1 | 1 | 1 |
| b(2) | 1 | $e^{-\frac{2\pi j}{3}}$ | $e^{\frac{2\pi j}{3}}$ |
| b(2) | 1 | $e^{\frac{2\pi j}{3}}$ | $e^{-\frac{2\pi j}{3}}$ |

In the foregoing configuration type 1 (Type 1 DMRS) mapping rule, values of $w_f(k')$, $w_t(l')$, and Δ corresponding to the DMRS port *p* may be determined according to Table 9B.

Table 13B: Type 1 DMRS parameter values

| p | $\lambda$ | Δ | $w_f(k')$ | | $w_t(l')$ | |
|---|---|---|---|---|---|---|
| | | | *k'* = 0 | *k'* = 1 | *l'* = 0 | *l'* = 1 |
| 1008 | 0 | 0 | +1 | +1 | +1 | +1 |
| 1009 | 0 | 0 | +1 | -1 | +1 | +1 |
| 1010 | 1 | 1 | +1 | +1 | +1 | +1 |
| 1011 | 1 | 1 | +1 | -1 | +1 | +1 |
| 1012 | 0 | 0 | +1 | +1 | +1 | -1 |
| 1013 | 0 | 0 | +1 | -1 | +1 | -1 |
| 1014 | 1 | 1 | +1 | +1 | +1 | -1 |
| 1015 | 1 | 1 | +1 | -1 | +1 | -1 |

It should be noted that, after the terminal device determines the DMRS port allocated by the network device to the terminal device, for downlink transmission, the terminal device may receive a DMRS from the network device on a corresponding time-frequency resource based on the allocated DMRS port according to a DMRS symbol generation method and a time-frequency resource mapping rule that are defined in a protocol, and perform a corresponding channel estimation procedure. For uplink transmission, the terminal device may send a DMRS to the network device on a corresponding time-frequency resource based on the allocated DMRS port according to a DMRS symbol generation method and a time-frequency resource mapping rule that are defined in a protocol.

In this embodiment of this application, downlink transmission is used as an example. For uplink transmission, refer to a manner of downlink transmission. Details are not described herein again.

### 6.2. In this embodiment of this application, a design of a DCI indication table is further added.

In an implementation, for step S601 in this embodiment of this application, the network device may indicate a port to the terminal device by using DCI. Details may be as follows:

**For the configuration type 1 (Type1, maxlength=1)**

Table 14

| One codeword: Codeword 0 enabled, Codeword 1 disabled (one codeword: | | |
|---|---|---|
| Codeword 0 enabled, | | |
| Codeword 1 disabled) | | |
| Value (Value) | Quantity of CDM groups without data (Number of DMRS CDM group(s) without data) | DMRS port index DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 1 | 0,1,8 |
| 13 | 1 | 0,1,8,9 |
| 14 | 2 | 0,1,8 |
| 15 | 2 | 0,1,8,9 |
| 16 | 2 | 2,3,10 |
| 17 | 2 | 2,3,10,11 |
| 18 | 1 | 8 |
| 19 | 1 | 9 |
| 20 | 2 | 8 |
| 21 | 2 | 9 |
| 22 | 2 | 10 |
| 23 | 2 | 11 |
| 24 | 1 | 8,9 |
| 25 | 2 | 8,9 |

(continued)

| One codeword: Codeword 0 enabled, Codeword 1 disabled (one codeword: | | |
|---|---|---|
| Codeword 0 enabled, | | |
| Codeword 1 disabled) | | |
| Value (Value) | Quantity of CDM groups without data (Number of DMRS CDM group(s) without data) | DMRS port index DMRS port(s) |
| 26 | 2 | 10,11 |
| 27-31 | Reserved | Reserved |

**For the configuration type 2 (Type1, maxlength=2)**

Table 15: (Type1, maxlength=2)

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 enabled) | | | |
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4-31 | reserved | reserved | reserved |
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 1 | 0,1,8 | 1 | | | | |
| 13 | 1 | 0,1,8,9 | 1 | | | | |
| 14 | 2 | 0,1,8 | 1 | | | | |
| 15 | 2 | 0,1,8,9 | 1 | | | | |
| 16 | 2 | 2,3,10 | 1 | | | | |
| 17 | 2 | 2,3,10,11 | 1 | | | | |
| 18 | 1 | 8 | 1 | | | | |
| 19 | 1 | 9 | 1 | | | | |
| 20 | 2 | 8 | 1 | | | | |
| 21 | 2 | 9 | 1 | | | | |
| 22 | 2 | 10 | 1 | | | | |

(continued)

| One codeword (One Codeword): Codeword 0 enabled (Codeword 0 enabled), Codeword 1 disabled (Codeword 1 disabled) | | | | Two codewords (Two Codewords): Codeword 0 enabled (Codeword 0 enabled), Codeword 1 disabled (Codeword 1 enabled) | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 23 | 2 | 11 | 1 | | | | |
| 24 | 1 | 8,9 | 1 | | | | |
| 25 | 2 | 8,9 | 1 | | | | |
| 26 | 2 | 10,11 | 1 | | | | |
| 27 | 2 | 0 | 2 | | | | |
| 28 | 2 | 1 | 2 | | | | |
| 29 | 2 | 2 | 2 | | | | |
| 30 | 2 | 3 | 2 | | | | |
| 31 | 2 | 4 | 2 | | | | |
| 32 | 2 | 5 | 2 | | | | |
| 33 | 2 | 6 | 2 | | | | |
| 34 | 2 | 7 | 2 | | | | |
| 35 | 2 | 0,1 | 2 | | | | |
| 36 | 2 | 2,3 | 2 | | | | |
| 37 | 2 | 4,5 | 2 | | | | |
| 38 | 2 | 6,7 | 2 | | | | |
| 39 | 2 | 0,4 | 2 | | | | |
| 40 | 2 | 2,6 | 2 | | | | |
| 41 | 2 | 0,1,4 | 2 | | | | |
| 42 | 2 | 2,3,6 | 2 | | | | |
| 43 | 2 | 0,1,4,5 | 2 | | | | |
| 44 | 2 | 2,3,6,7 | 2 | | | | |
| 45 | 2 | 0,2,4,6 | 2 | | | | |
| 46 | 1 | 0,1,8 | 2 | | | | |
| 47 | 1 | 0,1,8,9 | 2 | | | | |
| 48 | 2 | 0,1,8 | 2 | | | | |
| 49 | 2 | 0,1,8,9 | 2 | | | | |
| 50 | 2 | 2,3,10 | 2 | | | | |
| 51 | 2 | 2,3,10,11 | 2 | | | | |
| 52 | 1 | 8 | 2 | | | | |
| 53 | 1 | 9 | 2 | | | | |
| 54 | 2 | 8 | 2 | | | | |
| 55 | 2 | 9 | 2 | | | | |
| 56 | 2 | 10 | 2 | | | | |

(continued)

| One codeword (One Codeword): | | | | Two codewords (Two Codewords): | | | |
|---|---|---|---|---|---|---|---|
| Codeword 0 enabled (Codeword 0 enabled), | | | | Codeword 0 enabled (Codeword 0 enabled), | | | |
| Codeword 1 disabled (Codeword 1 disabled) | | | | Codeword 1 disabled (Codeword 1 enabled) | | | |
| Value | Number of DMRS CDM group(s) without data | DMRS port(s) | Number of front-load symbols | Value | Number of DMRS CDM group(s) without data | DMRS port(s) | Number of front-load symbols |
| 57 | 2 | 11 | 2 | | | | |
| 58 | 1 | 8,9 | 2 | | | | |
| 59 | 2 | 8,9 | 2 | | | | |
| 60 | 2 | 10,11 | 2 | | | | |
| 61-63 | Reserved | Reserved | | | | | |

**For the configuration type 2 (Type2, maxlength=1)**

Implementation 1:

Table 16: **Antenna port(s) (1000+DMRS port), dmrs-Type=2, maxLength=1**

| One codeword: Codeword 0 enabled, Codeword 1 disabled (one codeword: Codeword 0 enabled, Codeword 1 disabled) | | | Two codewords: Codeword 0 enabled, Codeword 1 disabled (two codewords: Codeword 0 enabled, Codeword 1 enabled) | | |
|---|---|---|---|---|---|
| Value | Number of DMRS CDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2-31 | reserved | reserved |
| 3 | 2 | 0 | | | |
| 4 | 2 | 1 | | | |
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |

(continued)

| One codeword: Codeword 0 enabled, Codeword 1 disabled (one codeword: Codeword 0 enabled, Codeword 1 disabled) | | | Two codewords: Codeword 0 enabled, Codeword 1 disabled (two codewords: Codeword 0 enabled, Codeword 1 enabled) | | |
|---|---|---|---|---|---|
| Value | Number of DMRS CDM group(s) without data | DMRS port(s) | Value | Number of DMRS CDM group(s) without data | DMRS port(s) |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 1 | 13 | | | |
| 24 | 1 | 25 | | | |
| 25 | 1 | 13,25 | | | |
| 26 | 1 | 0,13,25 | | | |
| 27 | 1 | 12,13,24,25 | | | |
| 28 | 2 | 13 | | | |
| 29 | 2 | 25 | | | |
| 30 | 2 | 13,25 | | | |
| 31 | 2 | 0,13,25 | | | |
| 32 | 2 | 12,13,24,25 | | | |
| 33 | 2 | 15 | | | |
| 34 | 2 | 27 | | | |
| 35 | 2 | 15,27 | | | |
| 36 | 2 | 2,15,27 | | | |
| 37 | 2 | 14,15,26,27 | | | |
| 38 | 3 | 13 | | | |
| 39 | 3 | 25 | | | |
| 40 | 3 | 13,25 | | | |
| 41 | 3 | 0,13,25 | | | |
| 42 | 3 | 12,13,24,25 | | | |
| 43 | 3 | 15 | | | |
| 44 | 3 | 27 | | | |
| 45 | 3 | 15,27 | | | |
| 46 | 3 | 2,15,27 | | | |
| 47 | 3 | 14,15,26,27 | | | |
| 48 | 3 | 17 | | | |
| 49 | 3 | 29 | | | |
| 50 | 3 | 17,29 | | | |
| 51 | 3 | 4,17,29 | | | |
| 52 | 3 | 16,17,28,29 | | | |

(continued)

| One codeword: Codeword 0 enabled, Codeword 1 disabled (one codeword: Codeword 0 enabled, Codeword 1 disabled) | | | Two codewords: Codeword 0 enabled, Codeword 1 disabled (two codewords: Codeword 0 enabled, Codeword 1 enabled) | | |
|---|---|---|---|---|---|
| Value | Number of DMRS CDM group(s) without data | DMRS port(s) | Value | Number of DMRS CDM group(s) without data | DMRS port(s) |
| 53 | 3 | 12 | | | |
| 54 | 3 | 14 | | | |
| 55 | 3 | 16 | | | |
| 56 | 3 | 26 | | | |
| 57 | 3 | 28 | | | |
| 58 | 3 | 12,13 | | | |
| 59 | 3 | 14,15 | | | |
| 60 | 3 | 16,17 | | | |
| 61 | 3 | 24,25 | | | |
| 62 | 3 | 26,27 | | | |
| 63 | 3 | 28,29 | | | |

Implementation 2:

Table 17

| One codeword (one codeword): | | | Two codewords (two codewords): | | |
|---|---|---|---|---|---|
| Value | Number of DMRS CDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2-31 | reserved | reserved |
| 3 | 2 | 0 | | | |
| 4 | 2 | 1 | | | |
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |

(continued)

| One codeword (one codeword): | | | Two codewords (two codewords): | | |
|---|---|---|---|---|---|
| Value | Number of DMRS CDM group(s) without data | DMRS port(s) | Value | Number of DMRS CDM group(s) without data | DMRS port(s) |
| 17 | 3 | 0,1 | | | |
| 18 | 3 | 2,3 | | | |
| 19 | 3 | 4,5 | | | |
| 20 | 3 | 0-2 | | | |
| 21 | 3 | 3~5 | | | |
| 22 | 3 | 0-3 | | | |
| 23 | 3 | 13 | | | |
| 24 | 3 | 25 | | | |
| 25 | 3 | 13,25 | | | |
| 26 | 3 | 0,13,25 | | | |
| 27 | 3 | 12,13,24,25 | | | |
| 28 | 3 | 15 | | | |
| 29 | 3 | 27 | | | |
| 30 | 3 | 15,27 | | | |
| 31 | 3 | 2,15,27 | | | |
| 32 | 3 | 14,15,26,27 | | | |
| 33 | 3 | 17 | | | |
| 34 | 3 | 29 | | | |
| 35 | 3 | 17,29 | | | |
| 36 | 3 | 4,17,29 | | | |
| 37 | 3 | 16,17,28,29 | | | |
| 38 | 3 | 12 | | | |
| 39 | 3 | 14 | | | |
| 40 | 3 | 16 | | | |
| 41 | 3 | 26 | | | |
| 42 | 3 | 28 | | | |
| 43 | 3 | 12,13 | | | |
| 44 | 3 | 14,15 | | | |
| 45 | 3 | 16,17 | | | |
| 46 | 3 | 24,25 | | | |
| 47 | 3 | 26,27 | | | |
| 48 | 3 | 28,29 | | | |
| 49-63 | Reserved | Reserved | | | |

**For the configuration type 2 (Type2, maxlength=2)**

**Implementation 1:**

Table 18

| One codeword (one codeword): | | | | Two codewords (two codewords) | | | |
|---|---|---|---|---|---|---|---|
| Codeword 0 enabled, | | | | Codeword 0 enabled, | | | |
| Codeword 1 disabled | | | | Codeword 1 enabled | | | |
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6-63 | Reserved | Reserved | Reserved |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0,1 | 1 | | | | |
| 18 | 3 | 2,3 | 1 | | | | |
| 19 | 3 | 4,5 | 1 | | | | |
| 20 | 3 | 0-2 | 1 | | | | |
| 21 | 3 | 3~5 | 1 | | | | |
| 22 | 3 | 0-3 | 1 | | | | |
| 23 | 1 | 13 | 1 | | | | |
| 24 | 1 | 25 | 1 | | | | |
| 25 | 1 | 13,25 | 1 | | | | |
| 26 | 1 | 0,13,25 | 1 | | | | |
| 27 | 1 | 12,13,24,25 | 1 | | | | |
| 28 | 2 | 13 | 1 | | | | |
| 29 | 2 | 25 | 1 | | | | |
| 30 | 2 | 13,25 | 1 | | | | |
| 31 | 2 | 0,13,25 | 1 | | | | |
| 32 | 2 | 12,13,24,25 | 1 | | | | |
| 33 | 2 | 15 | 1 | | | | |

(continued)

| One codeword (one codeword): Codeword 0 enabled, Codeword 1 disabled | | | | Two codewords (two codewords) Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 34 | 2 | 27 | 1 | | | | |
| 35 | 2 | 15,27 | 1 | | | | |
| 36 | 2 | 2,15,27 | 1 | | | | |
| 37 | 2 | 14,15,26,27 | 1 | | | | |
| 38 | 3 | 13 | 1 | | | | |
| 39 | 3 | 25 | 1 | | | | |
| 40 | 3 | 13,25 | 1 | | | | |
| 41 | 3 | 0,13,25 | 1 | | | | |
| 42 | 3 | 12,13,24,25 | 1 | | | | |
| 43 | 3 | 15 | 1 | | | | |
| 44 | 3 | 27 | 1 | | | | |
| 45 | 3 | 15,27 | 1 | | | | |
| 46 | 3 | 2,15,27 | 1 | | | | |
| 47 | 3 | 14,15,26,27 | 1 | | | | |
| 48 | 3 | 17 | 1 | | | | |
| 49 | 3 | 29 | 1 | | | | |
| 50 | 3 | 17,29 | 1 | | | | |
| 51 | 3 | 4,17,29 | 1 | | | | |
| 52 | 3 | 16,17,28,29 | 1 | | | | |
| 53 | 3 | 12 | 1 | | | | |
| 54 | 3 | 14 | 1 | | | | |
| 55 | 3 | 16 | 1 | | | | |
| 56 | 3 | 26 | 1 | | | | |
| 57 | 3 | 28 | 1 | | | | |
| 58 | 3 | 12,13 | 1 | | | | |
| 59 | 3 | 14,15 | 1 | | | | |
| 60 | 3 | 16,17 | 1 | | | | |
| 61 | 3 | 24,25 | 1 | | | | |
| 62 | 3 | 26,27 | 1 | | | | |
| 63 | 3 | 28,29 | 1 | | | | |
| 64 | 3 | 0 | 2 | | | | |
| 65 | 3 | 1 | 2 | | | | |
| 66 | 3 | 2 | 2 | | | | |
| 67 | 3 | 3 | 2 | | | | |

(continued)

| One codeword (one codeword): | | | | Two codewords (two codewords) | | | |
|---|---|---|---|---|---|---|---|
| Codeword 0 enabled, | | | | Codeword 0 enabled, | | | |
| Codeword 1 disabled | | | | Codeword 1 enabled | | | |
| Value | Number of DMRS CDM group(s) without data | DMRS port(s) | Number of front-load symbols | Value | Number of DMRS CDM group(s) without data | DMRS port(s) | Number of front-load symbols |
| 68 | 3 | 4 | 2 | | | | |
| 69 | 3 | 5 | 2 | | | | |
| 70 | 3 | 6 | 2 | | | | |
| 71 | 3 | 7 | 2 | | | | |
| 72 | 3 | 8 | 2 | | | | |
| 73 | 3 | 9 | 2 | | | | |
| 74 | 3 | 10 | 2 | | | | |
| 75 | 3 | 11 | 2 | | | | |
| 76 | 3 | 0,1 | 2 | | | | |
| 77 | 3 | 2,3 | 2 | | | | |
| 78 | 3 | 4,5 | 2 | | | | |
| 79 | 3 | 6,7 | 2 | | | | |
| 80 | 3 | 8,9 | 2 | | | | |
| 81 | 3 | 10,11 | 2 | | | | |
| 82 | 3 | 0,1,6 | 2 | | | | |
| 83 | 3 | 2,3,8 | 2 | | | | |
| 84 | 3 | 4,5,10 | 2 | | | | |
| 85 | 3 | 0,1,6,7 | 2 | | | | |
| 86 | 3 | 2,3,8,9 | 2 | | | | |
| 87 | 3 | 4,5,10,11 | 2 | | | | |
| 88 | 1 | 0 | 2 | | | | |
| 89 | 1 | 1 | 2 | | | | |
| 90 | 1 | 6 | 2 | | | | |
| 91 | 1 | 7 | 2 | | | | |
| 92 | 1 | 0,1 | 2 | | | | |
| 93 | 1 | 6,7 | 2 | | | | |
| 94 | 2 | 0,1 | 2 | | | | |
| 95 | 2 | 2,3 | 2 | | | | |
| 96 | 2 | 6,7 | 2 | | | | |
| 97 | 2 | 8,9 | 2 | | | | |
| 98 | 1 | 13 | 2 | | | | |
| 99 | 1 | 25 | 2 | | | | |
| 100 | 1 | 13,25 | 2 | | | | |
| 101 | 1 | 0,13,25 | 2 | | | | |

(continued)

| One codeword (one codeword): Codeword 0 enabled, Codeword 1 disabled | | | | Two codewords (two codewords) Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 102 | 1 | 12,13,24,25 | 2 | | | | |
| 103 | 2 | 13 | 2 | | | | |
| 104 | 2 | 25 | 2 | | | | |
| 105 | 2 | 13,25 | 2 | | | | |
| 106 | 2 | 0,13,25 | 2 | | | | |
| 107 | 2 | 12,13,24,25 | 2 | | | | |
| 108 | 2 | 15 | 2 | | | | |
| 109 | 2 | 27 | 2 | | | | |
| 110 | 2 | 15,27 | 2 | | | | |
| 111 | 2 | 2,15,27 | 2 | | | | |
| 112 | 2 | 14,15,26,27 | 2 | | | | |
| 113 | 3 | 13 | 2 | | | | |
| 114 | 3 | 25 | 2 | | | | |
| 115 | 3 | 13,25 | 2 | | | | |
| 116 | 3 | 0,13,25 | 2 | | | | |
| 117 | 3 | 12,13,24,25 | 2 | | | | |
| 118 | 3 | 15 | 2 | | | | |
| 119 | 3 | 27 | 2 | | | | |
| 120 | 3 | 15,27 | 2 | | | | |
| 121 | 3 | 2,15,27 | 2 | | | | |
| 122 | 3 | 14,15,26,27 | 2 | | | | |
| 123 | 3 | 17 | 2 | | | | |
| 124 | 3 | 29 | 2 | | | | |
| 125 | 3 | 17,29 | 2 | | | | |
| 126 | 3 | 4,17,29 | 2 | | | | |
| 127 | 3 | 16,17,28,29 | 2 | | | | |

Implementation 2:

Table 19

| One codeword: Codeword 0 enabled, Codeword 1 disabled | | | | Two codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6-63 | Reserved | Reserved | Reserved |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0,1 | 1 | | | | |
| 18 | 3 | 2,3 | 1 | | | | |
| 19 | 3 | 4,5 | 1 | | | | |
| 20 | 3 | 0-2 | 1 | | | | |
| 21 | 3 | 3~5 | 1 | | | | |
| 22 | 3 | 0-3 | 1 | | | | |
| 23 | 3 | 13 | 1 | | | | |
| 24 | 3 | 25 | 1 | | | | |
| 25 | 3 | 13,25 | 1 | | | | |
| 26 | 3 | 0,13,25 | 1 | | | | |
| 27 | 3 | 12,13,24,25 | 1 | | | | |
| 28 | 3 | 15 | 1 | | | | |
| 29 | 3 | 27 | 1 | | | | |
| 30 | 3 | 15,27 | 1 | | | | |
| 31 | 3 | 2,15,27 | 1 | | | | |
| 32 | 3 | 14,15,26,27 | 1 | | | | |
| 33 | 3 | 17 | 1 | | | | |
| 34 | 3 | 29 | 1 | | | | |

(continued)

| One codeword: Codeword 0 enabled, Codeword 1 disabled | | | | Two codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 35 | 3 | 17,29 | 1 | | | | |
| 36 | 3 | 4,17,29 | 1 | | | | |
| 37 | 3 | 16,17,28,29 | 1 | | | | |
| 38 | 3 | 12 | 1 | | | | |
| 39 | 3 | 14 | 1 | | | | |
| 40 | 3 | 16 | 1 | | | | |
| 41 | 3 | 26 | 1 | | | | |
| 42 | 3 | 28 | 1 | | | | |
| 43 | 3 | 12,13 | 1 | | | | |
| 44 | 3 | 14,15 | 1 | | | | |
| 45 | 3 | 16,17 | 1 | | | | |
| 46 | 3 | 24,25 | 1 | | | | |
| 47 | 3 | 26,27 | 1 | | | | |
| 48 | 3 | 28,29 | 1 | | | | |
| 49 | 3 | 0 | 2 | | | | |
| 50 | 3 | 1 | 2 | | | | |
| 51 | 3 | 2 | 2 | | | | |
| 52 | 3 | 3 | 2 | | | | |
| 53 | 3 | 4 | 2 | | | | |
| 54 | 3 | 5 | 2 | | | | |
| 55 | 3 | 6 | 2 | | | | |
| 56 | 3 | 7 | 2 | | | | |
| 57 | 3 | 8 | 2 | | | | |
| 58 | 3 | 9 | 2 | | | | |
| 59 | 3 | 10 | 2 | | | | |
| 60 | 3 | 11 | 2 | | | | |
| 61 | 3 | 0,1 | 2 | | | | |
| 62 | 3 | 2,3 | 2 | | | | |
| 63 | 3 | 4,5 | 2 | | | | |
| 64 | 3 | 6,7 | 2 | | | | |
| 65 | 3 | 8,9 | 2 | | | | |
| 66 | 3 | 10,11 | 2 | | | | |
| 67 | 3 | 0,1,6 | 2 | | | | |
| 68 | 3 | 2,3,8 | 2 | | | | |
| 69 | 3 | 4,5,10 | 2 | | | | |

(continued)

| One codeword: Codeword 0 enabled, Codeword 1 disabled | | | | Two codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 70 | 3 | 0,1,6,7 | 2 | | | | |
| 71 | 3 | 2,3,8,9 | 2 | | | | |
| 72 | 3 | 4,5,10,11 | 2 | | | | |
| 73 | 1 | 0 | 2 | | | | |
| 74 | 1 | 1 | 2 | | | | |
| 75 | 1 | 6 | 2 | | | | |
| 76 | 1 | 7 | 2 | | | | |
| 77 | 1 | 0,1 | 2 | | | | |
| 78 | 1 | 6,7 | 2 | | | | |
| 79 | 2 | 0,1 | 2 | | | | |
| 80 | 2 | 2,3 | 2 | | | | |
| 81 | 2 | 6,7 | 2 | | | | |
| 82 | 2 | 8,9 | 2 | | | | |
| 83 | 3 | 13 | 2 | | | | |
| 84 | 3 | 25 | 2 | | | | |
| 85 | 3 | 13,25 | 2 | | | | |
| 86 | 3 | 0,13,25 | 2 | | | | |
| 87 | 3 | 12,13,24,25 | 2 | | | | |
| 88 | 3 | 15 | 2 | | | | |
| 89 | 3 | 27 | 2 | | | | |
| 90 | 3 | 15,27 | 2 | | | | |
| 91 | 3 | 2,15,27 | 2 | | | | |
| 92 | 3 | 14,15,26,27 | 2 | | | | |
| 93 | 3 | 17 | 2 | | | | |
| 94 | 3 | 29 | 2 | | | | |
| 95 | 3 | 17,29 | 2 | | | | |
| 96 | 3 | 4,17,29 | 2 | | | | |
| 97 | 3 | 16,17,28,29 | 2 | | | | |
| 98 | 3 | 12 | 2 | | | | |
| 99 | 3 | 14 | 2 | | | | |
| 100 | 3 | 16 | 2 | | | | |
| 101 | 3 | 26 | 2 | | | | |
| 102 | 3 | 28 | 2 | | | | |
| 103 | 3 | 12,13 | 2 | | | | |
| 104 | 3 | 14,15 | 2 | | | | |

(continued)

| One codeword: Codeword 0 enabled, Codeword 1 disabled | | | | Two codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 105 | 3 | 16,17 | 2 | | | | |
| 106 | 3 | 24,25 | 2 | | | | |
| 107 | 3 | 26,27 | 2 | | | | |
| 108 | 3 | 28,29 | 2 | | | | |
| 109 | 1 | 13,25,19 | 2 | | | | |
| 110 | 1 | 13,25,19,31 | 2 | | | | |
| 111 | 2 | 13,25,19 | 2 | | | | |
| 112 | 2 | 13,25,19,31 | 2 | | | | |
| 113 | 2 | 14,26,20 | 2 | | | | |
| 114 | 2 | 14,26,20,32 | 2 | | | | |
| 115 | 3 | 13,25,19 | 2 | | | | |
| 116 | 3 | 13,25,19,31 | 2 | | | | |
| 117 | 3 | 14,26,20 | 2 | | | | |
| 118 | 3 | 14,26,20,32 | 2 | | | | |
| 119 | 3 | 15,27,21 | 2 | | | | |
| 120 | 3 | 15,27,21,33 | 2 | | | | |
| 121-127 | Reserved | Reserved | 2 | | | | |

It should be noted that the solution in this embodiment of this application mainly focuses on a value of "a group of port index values" and a value of "a quantity of CDM groups without data". In Tables 14 to 19, a plurality of values (value) are set, and each value (value) corresponds to a value of "a group of port index values" and a value of "a quantity of CDM groups without data" (which may alternatively be referred to as "a quantity of CDM groups that do not carry data"). The plurality of values (value) may be equivalent to indexes or sorting values. In actual application, the indexes or the sorting values may be swapped according to an actual situation, or sequences of rows in Tables 14 to 19 may be swapped, and may not depend on values value. For example, a value (value) corresponding to each row in Tables 14 to 19 may be randomly swapped, and the value of "a group of port index values" and the corresponding value of "a quantity of CDM groups without data" in each row are fixed and are not swapped. Alternatively, a value (value) corresponding to each row is not swapped, and the value of "a group of port index values" in each row and the value of "a quantity of CDM groups without data" should be simultaneously swapped in a bundling form. For example, Table 14 is used as an example. Currently, values (value) 12 to 17 in the table may be correspondingly swapped with 21 to 26, and values (value) 18 to 26 in the table may be correspondingly swapped with 12 to 20. In the foregoing swapping manner, it may be understood that a value of "a group of port index values" and a value of "a quantity of CDM groups without data" corresponding to each value in the table do not change. Only sequences of the value of "a group of port index values" and the value of "a quantity of CDM groups without data" corresponding to the value in the table change. An essential technical feature protected in this application is not affected. Further, for example, all values of "a group of port index values" and corresponding values of "a quantity of CDM groups without data" shown in Table 14 may be written into content shown in Table 14-1 in a bundling form (that is, a correspondence between a value of "a group of port index values" in each row in Table 14 and a corresponding value of "a quantity of CDM groups without data" remain unchanged) by swapping locations. It may be understood that, technical essence that can be implemented in Table 14-1 is completely the same as that in Table 14, and Table 14-1 is obtained only by swapping values of "a group of port index values" and values of "a quantity of CDM groups without data" corresponding to different values (value) in Table 14. A specific swapping manner may include: Values of "a group of port index values" and values of "a quantity of CDM groups without data" corresponding to values 12 to 17 in Table 14 are values of "a group of port index values" and values of "a quantity of CDM groups without data" corresponding to values 21 to 26 in Table 14-1. Values of "a group of port index values" and values of "a quantity of CDM groups without data" corresponding to values 18 and 19 in Table 14 are values of "a group of port index values" and values of "a quantity of CDM groups without data" corresponding to values 12 and 13 in Table 14-1. Values of "a group of port index values" and values of "a quantity of CDM groups without data" corresponding to values 20 to 23 in Table 14 are values of "a group of port index values" and values of "a quantity of CDM groups without data" corresponding to values 15 to 18 in Table 14-1. A value of "a group of port index values" and a value of "a quantity of CDM groups without data" corresponding to a value 24 in Table 14 are a value of "a group of port index values" and a value of "a quantity of CDM groups without data" corresponding to a value 14 in Table 14-1. Values of "a group of port index values" and values of "a quantity of CDM groups without data" corresponding to values 25 and 26 in Table 14 are values of "a group of port index values" and values of "a quantity of CDM groups without data" corresponding to values 19 and 20 in Table 14-1.

Table 14-1

| One codeword: Codeword 0 enabled, Codeword 1 disabled (one codeword: | | |
|---|---|---|
| Codeword 0 enabled, | | |
| Codeword 1 disabled) | | |
| Value (Value) | Quantity of CDM groups without data (Number of DMRS CDM group(s) without data) | DMRS port index DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 1 | 8 |
| 13 | 1 | 9 |
| 14 | 1 | 8,9 |
| 15 | 2 | 8 |
| 16 | 2 | 9 |
| 17 | 2 | 10 |
| 18 | 2 | 11 |
| 19 | 2 | 8,9 |
| 20 | 2 | 10,11 |
| 21 | 1 | 0,1,8 |
| 22 | 1 | 0,1,8,9 |
| 23 | 2 | 0,1,8 |
| 24 | 2 | 0,1,8,9 |
| 25 | 2 | 2,3,10 |
| 26 | 2 | 2,3,10,11 |

(continued)

| One codeword: Codeword 0 enabled, Codeword 1 disabled (one codeword: Codeword 0 enabled, Codeword 1 disabled) | | |
|---|---|---|
| Value (Value) | Quantity of CDM groups without data (Number of DMRS CDM group(s) without data) | DMRS port index DMRS port(s) |
| 27-31 | Reserved | Reserved |

The following further describes in detail the communication method provided in the foregoing solutions of this application by using several specific embodiments.

Specific embodiment 1

In the specific example 1, an example in which the network device is a base station is used to describe how the base station flexibly indicates DMRS ports (an R15 port and an R18 port) to one or more terminal devices (UE), to ensure compatibility and maximize a quantity of combination ports in a configuration pair.

The R15 port may be represented as a legacy DMRS port, and the R18 port may be understood as an increased DMRS port. FD-OOC2 indicates that frequency domain cover codes corresponding to a port on two adjacent subcarriers in a same CDM group are orthogonal, FD-OOC4 indicates that frequency domain cover codes corresponding to a port on four adjacent subcarriers in a same CDM group are orthogonal, and FD-OOC6 indicates that frequency domain cover codes corresponding to a port on six adjacent subcarriers in a same CDM group are orthogonal.

**(1) For a double-symbol DMRS of the configuration type 1:**

Pairing on one CDM group may include the following several cases:
**Case 1:** If a total quantity of streams transmitted by a base station is 1, FD-OCC2 ports are preferentially used (that is, time-frequency cover codes corresponding to two adjacent subcarriers may be orthogonal), to ensure a channel estimation capability.

That is, the base station may indicate P0 to UE 1, and indicate P1 to UE 2.

**Case 2:** If a total quantity of streams transmitted by the base station is 2, FD-OCC2 ports are preferentially used (that is, time-frequency cover codes corresponding to two adjacent subcarriers may be orthogonal), to ensure a channel estimation capability. The following sub-cases may be included:

Case 2.1: The base station may indicate P0 to the UE 1, and indicate P1 to the UE 2.
Case 2.2: The base station indicates P0 and P1 to the UE 1 (that is, the base station indicates two R15 ports to same UE).

**Case 3:** If a total quantity of streams transmitted by the base station is 3, the R15 port and the R18 port are used together. A multiplex capability of the R15 is preferentially ensured and a quantity of multiplexed ports is increased. The following sub-cases may be included:
Case 3.1: The base station may indicate P0 to the UE 1, indicate P25 to the UE 2, and indicate P8 to UE 3.

Alternatively, the base station may indicate P1 to the UE 1, indicate P24 to the UE 2, and indicate Pn1 to the UE 3.

Case 3.2: The base station indicates P0 to the UE 1, and indicates P25 and P8 to the UE 2.

Alternatively, the base station indicates P1 to the UE 1, and indicates P24 and Pn1 to the UE 2.

Case 3.3: The base station indicates P8 to the UE 1, indicates P24 to the UE 2, and indicates P25 to the UE 2.

**The base station indicates P9 to the UE 1, indicates P24 to the UE 2, and indicates P25 to the UE 2.**

**Case 4:** If a total quantity of streams transmitted by the base station is 4, only FD-OCC4 ports are used (that is, time-frequency cover codes corresponding to four adjacent subcarriers may be orthogonal). The following sub-cases may be included:

Case 4.1: The base station may indicate P8 to the UE 1, indicate P9 to the UE 2, indicate P24 to the UE 3 (resource mapping is the same as P0), and indicate P25 to UE 4 (resource mapping is the same as P1).
Case 4.2: The base station indicates P24 and P25 to the UE 1, indicates P8 to the UE 2, and indicates P9 to the UE 3.

Alternatively, the base station indicates P8 and P9 to the UE 1, indicates P24 to the UE 2, and indicates P25 to the UE 3.

In Case 4.2, two streams use FD-OCC2 ports to ensure channel estimation performance.

Case 4.3: The base station indicates P24 to the UE 1, and indicates P25, P8, and P9 to the UE 2.

Alternatively, the base station indicates P25 to the UE 1, and indicates P24, P8, and P9 to the UE 2.

Case 4.4: The base station simultaneously indicates P24, P25, P8, and P9 to the UE 1.

That is, the base station indicates, to same UE, four ports: P24, P25, P8, and P9.

Case 4.5: The base station indicates P24 and P25 to the UE 1, and indicates P8 and P9 to the UE 2.

In this case 4.5, every two streams use FD-OCC2 ports to ensure channel estimation performance.

It should be noted that a time-frequency resource and a sequence corresponding to P24 are the same as a time-frequency resource and a sequence corresponding to P0, and a time-frequency resource and a sequence corresponding to P25 are the same as a time-frequency resource and a sequence corresponding to P1.

**(2) For a double-symbol DMRS of the configuration type 2:**

Pairing on one CDM group may include the following several cases:
**Case 1:** If a total quantity of streams transmitted by the base station is 1, FD-OCC2 ports are preferentially used (that is, time-frequency cover codes corresponding to two adjacent subcarriers may be orthogonal), to ensure a channel estimation capability.

That is, the base station may indicate P0 to UE 1, and indicate P1 to UE 2.

**Case 2:** If a total quantity of streams transmitted by the base station is 2, FD-OCC2 ports are preferentially used (that is, time-frequency cover codes corresponding to two adjacent subcarriers may be orthogonal), to ensure a channel estimation capability. The following sub-cases may be included:

Case 2.1: The base station may indicate P0 to the UE 1, and indicate P1 to the UE 2.
Case 2.2: The base station indicates P0 and P1 to the UE 1.

**Case 3:** If a total quantity of streams transmitted by the base station is 3, the R15 port and the R18 port are used together. A multiplexing capability of the R15 is preferentially ensured and a quantity of multiplexed ports is increased. The following sub-cases may be included:
Case 3.1: The base station may indicate P0 to the UE 1, indicate P25 to the UE 2, and indicate P13 to UE 3.

Alternatively, the base station may indicate P1 to the UE 1, indicate P24 to the UE 2, and indicate P12 to the UE 3.

Case 3.2: The base station indicates P0 to the UE 1, and indicates P25 and P13 to the UE 2.

Alternatively, the base station indicates P1 to the UE 1, and indicates P24 and P12 to the UE 2.

Case 3.3: The base station indicates P13 to the UE 1, indicates P24 to the UE 2, and indicates P25 to the UE 2.

**Case 4:** If a total quantity of streams transmitted by the base station is 4, only FD-OCC4 ports are used (that is, time-frequency cover codes corresponding to four adjacent subcarriers may be orthogonal). The following sub-cases may be included:

Case 4.1: The base station may indicate P12 to the UE 1, indicate P13 to the UE 2, indicate P24 to the UE 3, and indicate P25 to UE 4 (resource mapping is the same as P1).
Case 4.2: The base station indicates P24 and P25 to the UE 1, indicates P12 to the UE 2, and indicates P13 to the UE 3.

Alternatively, the base station indicates P12 and P13 to the UE 1, indicates P24 to the UE 2, and indicates P25 to the UE 3.

In Case 4.2, two streams use FD-OCC2 ports to ensure channel estimation performance.

Case 4.3: The base station indicates P12 to the UE 1, and indicates P13, P24, and P25 to the UE 2.

Alternatively, the base station indicates P13 to the UE 1, and indicates P12, P24, and P25 to the UE 2.

Alternatively, the base station indicates P24 to the UE 1, and indicates P12, P13, and P25 to the UE 2.

Alternatively, the base station indicates P25 to the UE 1, and indicates P12, P13, and P24 to the UE 2.

Case 4.4: The base station simultaneously indicates P24, P25, P12, and P13 to the UE 1.

That is, the base station indicates, to same UE, four ports: P24, P25, P12, and P13.

Case 4.5: The base station indicates P24 and P25 to the UE 1, and indicates P12 and P13 to the UE 2.

In Case 4.5, every two streams use FD-OCC2 ports to ensure channel estimation performance.

It should be noted that a time-frequency resource and a sequence corresponding to P24 are the same as a time-frequency resource and a sequence corresponding to P0, and a time-frequency resource and a sequence corresponding to P25 are the same as a time-frequency resource and a sequence corresponding to P1.

It should be noted that the foregoing terminal devices UE 1, UE 2, UE 3, and UE 4 are only used to distinguish between different terminal devices, and corresponding ports used by the terminal devices are not limited. P0, P1, ... all represent port numbers corresponding to DMRS ports. For example, P0 represents a DMRS port number 1 or a port index value 1, and P1 represents a DMRS port number 1 or a port index value 1.

In each of the foregoing cases, for how the base station specifically indicates a corresponding port to the UE, refer to the manners described in steps S501 and S502 shown in FIG. 5. Details are not described herein again.

According to the specific embodiment 1, the base station flexibly pairs an R15 port and an R18 port for use based on the total quantity of transmitted streams, and indicates the R15 port and the R18 port to the terminal device. This can ensure that the terminal device achieves an R15 DMRS channel estimation capability, and can ensure compatibility and maximize a quantity of combination ports in a configuration pair.

The foregoing mainly describes the solutions provided in embodiments of this application from a perspective of interaction between communication apparatuses. It may be understood that, to implement the foregoing functions, the network device and the terminal device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the network device and the terminal device based on the foregoing method examples. For example, division into each functional unit may be based on each corresponding function, or two or more than two functions may be integrated into one unit. The integrated unit may be implemented in a form of hardware, or may be implemented in a form of a software functional unit.

When the integrated unit is used, FIG. 6 is a possible example block diagram of an apparatus according to an embodiment of this application. As shown in FIG. 6, the apparatus 600 may include a processing unit 602 and a communication unit 603. The processing unit 602 is configured to control and manage actions of the apparatus 600. The communication unit 603 is configured to support the apparatus 600 in communicating with another device. Optionally, the communication unit 603 is also referred to as a transceiver unit, and may include a receiving unit and/or a sending unit, which are respectively configured to perform a receiving operation and a sending operation. The apparatus 600 may further include a storage unit 601, configured to store program code and/or data of the apparatus 600.

The apparatus 600 may be the network device in the foregoing embodiments. The processing unit 602 may support the apparatus 600 in performing actions of the network device in the foregoing method examples. Alternatively, the processing unit 602 mainly performs an internal action of the network device in the method examples, and the communication unit 603 may support communication between the apparatus 600 and another device.

For example, in an embodiment, the communication unit 603 is configured to: send first indication information to a terminal device, and send second indication information to the terminal device.

The apparatus 600 may be the terminal device in the foregoing embodiments. The processing unit 602 may support the apparatus 600 in performing actions of the terminal device in the foregoing method examples. Alternatively, the processing unit 602 mainly performs an internal action of the terminal device in the method examples, and the communication unit 603 may support communication between the apparatus 600 and another device.

For example, in an embodiment, the communication unit 603 is configured to: receive first indication information from a network device, and receive second indication information from the network device.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

For example, a unit in any one of the foregoing apparatuses may be one or more integrated circuits configured to implement the foregoing method, for example, one or more application-specific integrated circuits (application-specific integrated circuit, ASIC), one or more microprocessors (digital signal processor, DSP), or one or more field programmable gate arrays (field programmable gate array, FPGA), or a combination of at least two of these integrated circuit forms. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 7 is a diagram of a structure of a network device according to an embodiment of this application. The network device (or a base station) may be used in the communication system shown in FIG. 1, to perform a function of the network device in the foregoing method embodiments. As shown in FIG. 7, a network device 700 may include one or more DUs 701 and one or more CUs 702. Part 703 is a diagram of connection and communication between a CU and a DU. The DU 701 may include at least one antenna 7011, at least one radio frequency unit 7012, at least one processor 7013, and at least one memory 7014. The DU 701 is mainly configured to receive/send a radio frequency signal, perform conversion between a radio frequency signal and a baseband signal, and perform partial baseband processing. The CU 702 may include at least one processor 7022 and at least one memory 7021.

The CU 702 is mainly configured to: perform baseband processing, control the network device, and the like. The DU 701 and the CU 702 may be physically disposed together, or may be physically disposed separately, namely, a distributed base station. The CU 702 is a control center of the network device, may also be referred to as a processing unit, and is mainly configured to complete a baseband processing function. For example, the CU 702 may be configured to control the network device to perform the operation procedures related to the network device in the foregoing method embodiments.

In addition, optionally, the network device 700 may include one or more radio frequency units, one or more DUs, and one or more CUs. The DU may include at least one processor 7013 and at least one memory 7014, the radio frequency unit may include at least one antenna 7011 and at least one radio frequency unit 7012, and the CU may include at least one processor 7022 and at least one memory 7021.

In an example, the CU 702 may include one or more boards, and a plurality of boards may jointly support a radio access network (for example, a 5G network) of a single access standard, or may separately support radio access networks (such as an LTE network, a 5G network, or another network) of different access standards. The memory 7021 and the processor 7022 may serve one or more boards. In other words, a memory and a processor may be disposed on each board. Alternatively, a plurality of boards may share a same memory and a same processor. In addition, a necessary circuit may further be disposed on each board. The DU 701 may include one or more boards, and a plurality of boards may jointly support a radio access network (for example, a 5G network) of a single access standard, or may separately support radio access networks (such as an LTE network, a 5G network, or another network) of different access standards. The memory 7014 and the processor 7013 may serve one or more boards. In other words, a memory and a processor may be disposed on each board. Alternatively, a plurality of boards may share a same memory and a same processor. In addition, a necessary circuit may further be disposed on each board.

The network device shown in FIG. 7 can implement processes related to the network device in the foregoing method embodiments. Operations and/or functions of the modules in the network device shown in FIG. 7 are respectively intended to implement corresponding procedures in the foregoing method embodiments. For details, refer to the descriptions in the foregoing method embodiments. To avoid repetition, detailed descriptions are properly omitted herein.

FIG. 8 is a diagram of a structure of a terminal device according to an embodiment of this application. The terminal device may be used in the communication system shown in FIG. 1, to implement operations of the terminal device in the foregoing embodiments. As shown in FIG. 8, the terminal device includes an antenna 810, a radio frequency part 820, and a signal processing part 830. The antenna 810 is connected to the radio frequency part 820. In a downlink direction, the radio frequency part 820 receives, through the antenna 810, information sent by a network device (for example, a network device), and sends, to the signal processing part 830 for processing, the information sent by the network device. In an uplink direction, the signal processing part 830 processes information from the terminal device, and sends the information to the radio frequency part 820. The radio frequency part 820 processes the information from the terminal device, and then sends the processed information to the network device through the antenna 810.

The signal processing part 830 may include a modem subsystem, configured to implement processing of data at each communication protocol layer. The signal processing part 830 may further include a central processing subsystem, configured to implement processing of an operating system and an application layer of the terminal device. In addition, the signal processing part 830 may further include another subsystem, for example, a multimedia subsystem or a peripheral subsystem. The multimedia subsystem is configured to control a camera, a screen display, and the like of the terminal device, and the peripheral subsystem is configured to implement a connection to another device. The modem subsystem may be a chip that is separately disposed.

The modem subsystem may include one or more processing elements 831, for example, include a main control CPU and another integrated circuit. In addition, the modem subsystem may further include a storage element 832 and an interface circuit 833. The storage element 832 is configured to store data and a program. However, the program used to perform the methods performed by the terminal device in the foregoing methods may not be stored in the storage element 832, but is stored in a memory outside the modem subsystem, and is loaded and used by the modem subsystem when to be used. The interface circuit 833 is configured to communicate with another subsystem.

The modem subsystem may be implemented by a chip. The chip includes at least one processing element and an interface circuit. The processing element is configured to perform the steps of any method performed by the foregoing terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the method performed by the terminal device in the foregoing method embodiment. The storage element may be a storage element whose processing element is located on a same chip, that is, an on-chip storage element.

In another implementation, the program used to perform the method performed by the terminal device in the foregoing method may be in a storage element located on a different chip from the processing element, that is, an off-chip storage element. In this case, the processing element invokes or loads the program from the off-chip storage element to the on-chip storage element, to invoke and perform the method performed by the terminal device in the foregoing method embodiment.

In still another implementation, units of the terminal device that implement the steps in the foregoing method may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units of the terminal device that implement the steps in the foregoing methods may be integrated together, and implemented in a form of SoC. The SoC chip is configured to implement the foregoing methods. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in the processor element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 6. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of the integrated circuit forms. The storage element may be implemented by using a memory, and a function of the storage element may be the same as a function of the storage unit described in FIG. 6. The storage element may be a memory, or may be a general name of a plurality of memories.

The terminal device shown in FIG. 8 can implement processes related to the terminal device in the foregoing method embodiments. Operations and/or functions of modules in the terminal device shown in FIG. 8 are respectively intended to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, A and B, A and C, B and C, or A, B, and C. **In** addition, unless otherwise specified, ordinal numbers such as "first" and "second" in embodiments of this application are used to distinguish between a plurality of obj ects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, comprising:

   receiving, by a terminal device, first indication information from a network device, wherein the first indication information indicates a demodulation reference signal type;
   receiving, by the terminal device, second indication information from the network device, wherein the second indication information indicates a first value in a plurality of values comprised in a first set, each value in the first set corresponds to a group of port index values, the first set is associated with the demodulation reference signal type, a port corresponding to the group of port index values belongs to one or more of the following: a first port set, a second port set, and a third port set, and a time-frequency resource and a sequence corresponding to a port in the third port set are the same as time-frequency resources and sequences corresponding to a part or all of ports in the first port set; and
   receiving, by the terminal device, a demodulation reference signal from the network device based on a time-frequency resource corresponding to the group of port index values, wherein the group of port index values is associated with the first value.

2. The method according to claim 1, wherein each of the plurality of values further corresponds to one or more of the following:
   a quantity of CDM groups without data, and a quantity of front-load symbols for the demodulation reference signal.

3. The method according to claim 1 or 2, wherein the plurality of values comprise the following three groups of values: a port comprised in a port index value corresponding to a value in a first group belongs to the first port set; a port comprised in a port index value corresponding to a value in a second group belongs to the second port set and the third port set; and a port comprised in a port index value corresponding to a value in the third group belongs to the second port set.

4. The method according to claim 3, wherein when the first indication information indicates that the demodulation reference signal type is Type1 and a maximum length maxlength is 1, the plurality of values comprise only the three groups of values.

5. The method according to claim 3 or 4, wherein ports comprised in a group of port index values corresponding to each value in the second group and the third group belong to a same CDM group.

6. The method according to any one of claims 3 to 5, wherein
when the second group and the third group comprise at least one target value, and a quantity of CDM groups without data corresponding to the target value is 1, ports comprised in a group of port index values corresponding to the target value belong to a first CDM group.

7. The method according to claim 6, wherein

the at least one target value in the second group corresponds to groups of port index values {0, 1, 8} and {0, 1, 8, 9}; and
the at least one target value in the third group corresponds to groups of port index values {8}, {9}, and {8, 9}.

8. The method according to any one of claims 3 to 5, wherein
when the second group and the third group comprise at least one target value, and a port comprised in a group of port index values corresponding to the target value belongs to a first CDM group or a second CDM group, a quantity of CDM groups without data corresponding to the target value is 2.

9. The method according to claim 8, wherein when a port comprised in the group of port index values corresponding to the target value belongs to the first CDM group,

the at least one target value in the second group corresponds to groups of port index values {0, 1, 8} and {0, 1, 8, 9}; and
the at least one target value in the third group corresponds to groups of port index values {8}, {9}, and {8, 9}.

10. The method according to claim 8, wherein when a port comprised in the group of port index values corresponding to the target value belongs to the second CDM group,

the at least one target value in the second group corresponds to groups of port index values {2, 3, 10} and {2, 3, 10, 11}; and
the at least one target value in the third group corresponds to groups of port index values {10}, {11}, and {10, 11}.

11. The method according to claim 3, wherein a quantity of ports comprised in a group of port index values corresponding to each value in the second group is greater than 2.

12. The method according to claim 3 or 11, wherein a quantity of ports comprised in a group of port index values corresponding to each value in the second group is 3 or 4.

13. The method according to claim 12, wherein

values 12, 14, and 16 in the second group correspond to groups of port index values {0, 1, 8}, {0, 1, 8}, and {2, 3, 10}, respectively; and
values 13, 15, and 17 in the second group correspond to groups of port index values {0, 1, 8, 9}, {0, 1, 8, 9}, and {2, 3, 10, 11}, respectively.

14. The method according to claim 3 or 11, wherein when the first value is a value in the second group, a quantity of ports from the third port set is greater than or equal to a quantity of ports from the second port set in the group of port index values corresponding to the first value.

15. The method according to claim 14, wherein when a quantity of ports comprised in the group of port index values corresponding to the first value is an odd number, the quantity of ports from the third port set is greater than the quantity of ports from the second port set in the group of port index values; and
when the quantity of ports comprised in the group of port index values corresponding to the first value is an even number, the quantity of ports from the third port set is equal to the quantity of ports from the second port set in the group of port index values.

**16.** The method according to claim 14 or 15, wherein

the first values 12, 14, and 16 correspond to groups of port index values {0, 1, 8}, {0, 1, 8}, and {2, 3, 10}, respectively; and
the first values 13, 15, and 17 correspond to groups of port index values {0, 1, 8, 9}, {0, 1, 8, 9}, and {2, 3, 10, 11}, respectively.

**17.** The method according to claim 3, wherein a quantity of groups of port index values corresponding to any value in the third group is less than or equal to 2.

**18.** The method according to claim 3 or 17, wherein a group of port index values corresponding to a value in the third group is determined based on a sum of a group of port index values corresponding to a value in the first group and an offset value, and the offset value is equal to a quantity of ports comprised in the first port set of the demodulation reference signal type.

**19.** The method according to claim 18, wherein ports comprised in a group of port index values corresponding to a value in the first group belong to a same CDM group.

**20.** The method according to claim 18 or 19, wherein

values 0 to 8 in the first group correspond to groups of port index values {0}, {1}, {0, 1}, {0}, {1}, {2}, {3}, {0,1} and {2, 3}, respectively;
values 18 to 26 in the third group correspond to groups of port index values {8}, {9}, {8}, {9}, {10}, {11}, {8, 9}, {8, 9} and {10, 11}, respectively; and
the offset value is equal to 8.

**21.** The method according to any one of claims 3 to 20, wherein the plurality of values correspond to 0 to 26, all values in the first group correspond to 0 to 11, all values in the second group correspond to 12 to 17, and all values in the third group correspond to 18 to 26.

**22.** The method according to any one of claims 3 to 21, wherein

when the first value is 0, the corresponding group of port index values is 0, and a corresponding quantity of CDM groups without data is 1;
when the first value is 1, the corresponding group of port index values is 1, and a corresponding quantity of CDM groups without data is 1;
when the first value is 2, the corresponding group of port index values is 0 and 1, and a corresponding quantity of CDM groups without data is 1;
when the first value is 3, the corresponding group of port index values is 0, and a corresponding quantity of CDM groups without data is 2;
when the first value is 4, the corresponding group of port index values is 1, and a corresponding quantity of CDM groups without data is 2;
when the first value is 5, the corresponding group of port index values is 2, and a corresponding quantity of CDM groups without data is 2;
when the first value is 6, the corresponding group of port index values is 3, and a corresponding quantity of CDM groups without data is 2;
when the first value is 7, the corresponding group of port index values is 0 and 1, and a corresponding quantity of CDM groups without data is 2;
when the first value is 8, the corresponding group of port index values is 2 and 3, and a corresponding quantity of CDM groups without data is 2;
when the first value is 9, the corresponding group of port index values is 0-2, and a corresponding quantity of CDM groups without data is 2;
when the first value is 10, the corresponding group of port index values is 0-3, and a corresponding quantity of CDM groups without data is 2;
when the first value is 11, the corresponding group of port index values is 0, 2, and a corresponding quantity of CDM groups without data is 2;
when the first value is 12, the corresponding group of port index values is 0, 1, and 8, and a corresponding quantity of CDM groups without data is 1;
when the first value is 13, the corresponding group of port index values is 0, 1, 8, and 9, and a corresponding quantity of CDM groups without data is 1;
when the first value is 14, the corresponding group of port index values is 0, 1, and 8, and a corresponding quantity of CDM groups without data is 2;
when the first value is 15, the corresponding group of port index values is 0, 1, 8, and 9, and a corresponding quantity of CDM groups without data is 2;
when the first value is 16, the corresponding group of port index values is 2, 3, and 10, and a corresponding quantity of CDM groups without data is 2;
when the first value is 17, the corresponding group of port index values is 2, 3, 10, and 11, and a corresponding quantity of CDM groups without data is 2;
when the first value is 18, the corresponding group of port index values is 8, and a corresponding quantity of CDM groups without data is 1;
when the first value is 19, the corresponding group of port index values is 9, and a corresponding quantity of CDM groups without data is 1;
when the first value is 20, the corresponding group of port index values is 8, and a corresponding quantity of CDM groups without data is 2;
when the first value is 21, the corresponding group of port index values is 9, and a corresponding quantity of CDM groups without data is 2;
when the first value is 22, the corresponding group of port index values is 10, and a corresponding quantity of CDM groups without data is 2;
when the first value is 23, the corresponding group of port index values is 11, and a corresponding quantity of CDM groups without data is 2;
when the first value is 24, the corresponding group of port index values is 8 and 9, and a corresponding quantity of CDM groups without data is 1;
when the first value is 25, the corresponding group of port index values is 8 and 9, and a corresponding quantity of CDM groups without data is 2; and
when the first value is 26, the corresponding group of port index values is 10 and 11, and a corresponding quantity of CDM groups without data is 2.

**23.** The method according to claim 1, wherein the method further comprises:
receiving, by the terminal device, fourth indication information from the network device, wherein the fourth indication information indicates that an enhanced DMRS type is configured.

**24.** The method according to claim 23, wherein the fourth indication information is comprised in a same radio resource control RRC message as the first indication information.

**25.** The method according to claim 1, wherein length 2 frequency domain cover code sequences corresponding to a first port and a fourth port are orthogonal, the first port and the fourth port belong to the first port set or the third port set, and the length 2 frequency domain cover code sequence comprises corresponding frequency domain cover code sequences on two consecutive subcarriers in a CDM group.

**26.** The method according to claim 25, wherein the length 2 frequency domain cover code sequences corresponding to the first port and the fourth port are orthogonal, and satisfy the following formula:

$$\boldsymbol{W}_{1,f}^{\mathrm{H}}\boldsymbol{W}_{4,f} = 0,$$

wherein $\boldsymbol{W}_{\boldsymbol{1},\boldsymbol{f}} = \begin{bmatrix} W_{1,1} \\ W_{1,2} \end{bmatrix}$ represents a first frequency domain cover code sequence corresponding to the first port, $\boldsymbol{W}_{\boldsymbol{4},\boldsymbol{f}} = \begin{bmatrix} W_{4,1} \\ W_{4,2} \end{bmatrix}$ represents a fourth frequency domain cover code sequence corresponding to the fourth port, and $f$ represents a frequency domain location.

**27.** The method according to claim 1, wherein length 4 frequency domain cover code sequences corresponding to a second port and a third port are orthogonal, the second port and the third port belong to the second port set and/or the third port set, and the length 4 frequency domain cover code sequence comprises corresponding frequency domain cover codes on four consecutive subcarriers in a CDM group.

**28.** The method according to claim 27, wherein the length 4 frequency domain cover code sequences corresponding to the second port and the third port are orthogonal, and satisfy the following formula:

$$\boldsymbol{W}_{2,f}^{\mathrm{H}}\boldsymbol{W}_{3,f} = 0,$$

wherein $\boldsymbol{W}_{2,f} = \begin{bmatrix} W_{2,1} \\ W_{2,2} \\ W_{2,3} \\ W_{2,4} \end{bmatrix}$ represents a second frequency domain cover code sequence corresponding to the second port, $\boldsymbol{W}_{3,f} = \begin{bmatrix} W_{3,1} \\ W_{3,2} \\ W_{3,3} \\ W_{3,4} \end{bmatrix}$ represents a third frequency domain cover code sequence corresponding to the third port, and *f* represents a frequency domain location.

**29.** The method according to claim 1, wherein length 6 frequency domain cover code sequences corresponding to a second port and a third port are orthogonal, the second port and the third port belong to the second port set and/or the third port set, and the length 6 frequency domain cover code comprises corresponding frequency domain cover codes on six consecutive subcarriers in a CDM group.

**30.** The method according to claim 29, wherein the length 6 frequency domain cover code sequences corresponding to the second port and the third port are orthogonal, and satisfy the following formula:

$$\boldsymbol{W}_{2,f}^{\mathrm{H}}\boldsymbol{W}_{3,f} = 0,$$

wherein $\boldsymbol{W}_{2,f} = \begin{bmatrix} W_{2,1} \\ W_{2,2} \\ W_{2,3} \\ W_{2,4} \\ W_{2,5} \\ W_{2,6} \end{bmatrix}$ represents a second frequency domain cover code sequence corresponding to the second port, $\boldsymbol{W}_{3,f} = \begin{bmatrix} W_{3,1} \\ W_{3,2} \\ W_{3,3} \\ W_{3,4} \\ W_{3,5} \\ W_{3,6} \end{bmatrix}$ represents a third frequency domain cover code sequence corresponding to the third port, and *f* represents a frequency domain location.

**31.** The method according to claim 1 or 25, wherein the first group of port index values comprises an index value of a fifth port, and frequency domain cover codes corresponding to the fifth port and a sixth port are non-orthogonal on adjacent subcarriers in a same CDM group; and
the fifth port belongs to the first port set, and the sixth port belongs to the second port set.

**32.** The method according to claim 31, wherein the frequency domain cover code sequences corresponding to the fifth port and the sixth port are non-orthogonal on adjacent subcarriers in the same CDM group, and satisfy the following formula:

$$\boldsymbol{W}_5^{\mathrm{H}}\boldsymbol{W}_6 \neq 0,$$

wherein $\boldsymbol{W}_5$ represents a fifth frequency domain cover code sequence corresponding to the fifth port, and $\boldsymbol{W}_6$ represents a sixth frequency domain cover code sequence corresponding to the sixth port.

**33.** The method according to claim 1 or 25, wherein the first group of port index values comprises an index value of a seventh port, and frequency domain cover codes corresponding to the sixth port and the seventh port are non-orthogonal on adjacent subcarriers in a same CDM group; and
the sixth port belongs to the second port set, and the seventh port belongs to the third port set.

**34.** The method according to claim 33, wherein the frequency domain cover code sequences corresponding to the sixth port and the seventh port are non-orthogonal on adjacent subcarriers in a same CDM group, and satisfy the following formula:

$$\boldsymbol{W}_6^{\mathrm{H}}\boldsymbol{W}_7 \neq 0,$$

wherein
$\boldsymbol{W}_6$ represents a sixth frequency domain cover code sequence corresponding to the sixth port, and $\boldsymbol{W}_7$ represents a seventh frequency domain cover code sequence corresponding to the seventh port.

**35.** The method according to claim 31 or 33, wherein the fifth port in the first port set and the seventh port in the third port set correspond to same frequency domain orthogonal cover code sequences on all subcarriers, and a time-frequency resource and a sequence of the fifth port are the same as a time-frequency resource and a sequence of the seventh port.

**36.** The method according to claim 1 or 25, wherein if the first group of port index values comprises an index value of an eighth port and an index value of a ninth port, length 4 frequency domain cover code sequences or length 6 frequency domain cover code sequences corresponding to the eighth port and the ninth port are orthogonal, and length 2 frequency domain cover code sequences corresponding to the eighth port and the ninth port are non-orthogonal;

length 2 frequency domain cover code sequences corresponding to the eighth port and a tenth port are orthogonal, and length 2 frequency domain cover code sequences corresponding to the ninth port and the tenth port are orthogonal; and
the eighth port belongs to the second port set, the ninth port belongs to the third port set, the tenth port belongs to the first port set, and the eighth port, the ninth port, and the tenth port are all in a same CDM group.

**37.** The method according to claim 36, wherein the length 4 frequency domain cover code sequences corresponding to the eighth port and the ninth port are orthogonal, and satisfy the following formula:

$$\boldsymbol{W}_{8,f}^{\mathrm{H}}\boldsymbol{W}_{9,f} = 0,$$

wherein $\boldsymbol{W}_{8,f} = \begin{bmatrix} W_{8,1} \\ W_{8,2} \\ W_{8,3} \\ W_{8,4} \end{bmatrix}$ represents an eighth frequency domain cover code sequence corresponding to the

eighth port, $$\boldsymbol{W}_{9,f} = \begin{bmatrix} W_{9,1} \\ W_{9,2} \\ W_{9,3} \\ W_{9,4} \end{bmatrix}$$ represents a ninth frequency domain cover code sequence corresponding to the ninth port, and *f* represents a frequency domain location.

**38.** The method according to claim 36, wherein the length 6 frequency domain cover code sequences corresponding to the eighth port and the ninth port are orthogonal, and satisfy the following formula:

$$\boldsymbol{W}_{8,f}^{\mathrm{H}} \boldsymbol{W}_{9,f} = 0,$$

wherein $$\boldsymbol{W}_{8,f} = \begin{bmatrix} W_{8,1} \\ W_{8,2} \\ W_{8,3} \\ W_{8,4} \\ W_{8,5} \\ W_{8,6} \end{bmatrix}$$ represents an eighth frequency domain cover code sequence corresponding to the eighth port, $$\boldsymbol{W}_{9,f} = \begin{bmatrix} W_{9,1} \\ W_{9,2} \\ W_{9,3} \\ W_{9,4} \\ W_{9,5} \\ W_{9,6} \end{bmatrix}$$ represents a ninth frequency domain cover code sequence corresponding to the ninth port, and *f* represents a frequency domain location.

**39.** The method according to claim 36, wherein the length 2 frequency domain cover code sequences corresponding to the eighth port and the ninth port are non-orthogonal, and satisfy the following formula:

$$\boldsymbol{W}_{8,f}^{\mathrm{H}} \boldsymbol{W}_{9,f} \neq 0,$$

wherein $\boldsymbol{W}_{8,f} = \begin{bmatrix} W_{8,1} \\ W_{8,2} \end{bmatrix}$ represents an eighth frequency domain cover code sequence corresponding to the eighth port, $\boldsymbol{W}_{9,f} = \begin{bmatrix} W_{9,1} \\ W_{9,2} \end{bmatrix}$ represents a ninth frequency domain cover code sequence corresponding to the ninth port, and *f* represents a frequency domain location.

**40.** The method according to claim 36, wherein the length 2 frequency domain cover code sequences corresponding to the eighth port and the tenth port are orthogonal, and satisfy the following formula:

$$\boldsymbol{W}_{8,f}^{\mathrm{H}} \boldsymbol{W}_{10,f} = 0,$$

wherein $\boldsymbol{W}_{8,f} = \begin{bmatrix} W_{8,1} \\ W_{8,2} \end{bmatrix}$ represents an eighth frequency domain cover code sequence corresponding to the eighth port, $\boldsymbol{W}_{10,f} = \begin{bmatrix} W_{10,1} \\ W_{10,2} \end{bmatrix}$ represents a tenth frequency domain cover code sequence corresponding to the tenth port, and *f* represents a frequency domain location.

**41.** The method according to claim 36, wherein the length 2 frequency domain cover code sequences corresponding to the ninth port and the tenth port are orthogonal, and satisfy the following formula:

$$\boldsymbol{W}_{9,f}^{\mathrm{H}}\boldsymbol{W}_{10,f} = 0,$$

wherein $\boldsymbol{W}_{9,f} = \begin{bmatrix} W_{9,1} \\ W_{9,2} \end{bmatrix}$ represents a ninth frequency domain cover code sequence corresponding to the ninth port, $\boldsymbol{W}_{10,f} = \begin{bmatrix} W_{10,1} \\ W_{10,2} \end{bmatrix}$ represents a tenth frequency domain cover code sequence corresponding to the tenth port, and *f* represents a frequency domain location.

**42.** The method according to claim 1 or 25, wherein if the first group of port index values comprises an index value of an eleventh port and an index value of a twelfth port, length 4 frequency domain cover code sequences corresponding to the eleventh port and the twelfth port are orthogonal, and length 2 frequency domain cover code sequences corresponding to the eleventh port and the twelfth port are orthogonal;

a length 4 frequency domain cover code sequence corresponding to the eleventh port is separately orthogonal to length 4 frequency domain cover code sequences corresponding to a thirteenth port and a fourteenth port, and a length 4 frequency domain cover code sequence corresponding to the twelfth port is separately orthogonal to the length 4 frequency domain cover code sequences corresponding to the thirteenth port and the fourteenth port; and

the eleventh port, the twelfth port, the thirteenth port, and the fourteenth port belong to the second port set or the third port set.

**43.** The method according to claim 42, wherein the length 4 frequency domain cover code sequences corresponding to the eleventh port and the twelfth port are orthogonal, and satisfy the following formula:

$$\boldsymbol{W}_{11,f}^{\mathrm{H}}\boldsymbol{W}_{12,f} = 0,$$

wherein $\boldsymbol{W}_{11,f} = \begin{bmatrix} W_{11,1} \\ W_{11,2} \\ W_{11,3} \\ W_{11,4} \end{bmatrix}$ represents an eleventh frequency domain cover code sequence corresponding to the eleventh port, $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the twelfth port, and *f* represents a frequency domain location.

**44.** The method according to claim 42, wherein the length 2 frequency domain cover code sequences corresponding to the eleventh port and the twelfth port are orthogonal, and satisfy the following formula:

$$\boldsymbol{W}_{11,f}^{\mathrm{H}}\boldsymbol{W}_{12,f} = 0,$$

wherein $\boldsymbol{W}_{11,f} = \begin{bmatrix} W_{11,1} \\ W_{11,2} \end{bmatrix}$ represents an eleventh frequency domain cover code sequence corresponding to the

eleven port, $\boldsymbol{W}_{12,f} = \begin{bmatrix} W_{12,1} \\ W_{12,2} \end{bmatrix}$ represents a twelfth frequency domain cover code sequence corresponding to the twelfth port, and *f* represents a frequency domain location.

**45.** The method according to claim 42, wherein the length 4 frequency domain cover code sequences corresponding to the eleventh port and the thirteenth port are orthogonal, and satisfy the following formula:

$$\boldsymbol{W}_{12,f}^{\mathrm{H}} \boldsymbol{W}_{13,f} = 0,$$

wherein $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the twelfth port, $\boldsymbol{W}_{13,f} = \begin{bmatrix} W_{13,1} \\ W_{13,2} \\ W_{13,3} \\ W_{13,4} \end{bmatrix}$ represents a thirteenth frequency domain cover code sequence corresponding to the thirteenth port, and *f* represents a frequency domain location.

**46.** The method according to claim 42, wherein the length 4 frequency domain cover code sequences corresponding to the eleventh port and the fourteenth port are orthogonal, and satisfy the following formula:

$$\boldsymbol{W}_{11,f}^{\mathrm{H}} \boldsymbol{W}_{14,f} = 0,$$

wherein $\boldsymbol{W}_{11,f} = \begin{bmatrix} W_{8,1} \\ W_{8,2} \\ W_{8,3} \\ W_{8,4} \end{bmatrix}$ represents an eleventh frequency domain cover code sequence corresponding to the eleventh port, $\boldsymbol{W}_{14,f} = \begin{bmatrix} W_{14,1} \\ W_{14,2} \\ W_{14,3} \\ W_{14,4} \end{bmatrix}$ represents a fourteenth frequency domain cover code sequence corresponding to the fourteenth port, and *f* represents a frequency domain location.

**47.** The method according to claim 42, wherein the length 4 frequency domain cover code sequences corresponding to the twelfth port and the thirteenth port are orthogonal, and satisfy the following formula:

$$\boldsymbol{W}_{8,f}^{\mathrm{H}} \boldsymbol{W}_{9,f} = 0,$$

wherein $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the

twelfth port, $\boldsymbol{W}_{13,f} = \begin{bmatrix} W_{13,1} \\ W_{13,2} \\ W_{13,3} \\ W_{13,4} \end{bmatrix}$ represents a thirteenth frequency domain cover code sequence corresponding to the thirteenth port, and $f$ represents a frequency domain location.

**48.** The method according to claim 42, wherein the length 4 frequency domain cover code sequences corresponding to the twelfth port and the fourteenth port are orthogonal, and satisfy the following formula:

$$\boldsymbol{W}_{12,f}^{\mathrm{H}} \boldsymbol{W}_{14,f} = 0,$$

wherein $\boldsymbol{W}_{12,f} = \begin{bmatrix} W_{12,1} \\ W_{12,2} \\ W_{12,3} \\ W_{12,4} \end{bmatrix}$ represents a twelfth frequency domain cover code sequence corresponding to the twelfth port, $\boldsymbol{W}_{14,f} = \begin{bmatrix} W_{14,1} \\ W_{14,2} \\ W_{14,3} \\ W_{14,4} \end{bmatrix}$ represents a fourteenth frequency domain cover code sequence corresponding to the fourteenth port, and $f$ represents a frequency domain location.

**49.** The method according to any one of claims 25 to 48, wherein $W_{n,f}$ is $w_f(k')$ in a first time-frequency resource mapping rule, $n$ is a port index value, and the first time-frequency resource mapping rule satisfies the following formula:

$$\begin{aligned} &a_{k,l}^{(p,\mu)} = \beta_{PDSCH}^{DMRS} w_f(k') w_t(l') r(2n+k') \\ &k = \begin{cases} 4n+2k'+\Delta & Type1 \\ 6n+k'+\Delta & Type2 \end{cases}; \\ &k' = 0,1; \\ &l = \bar{l} + l'; \\ &n = 0,1,...; \\ &l' = 0,1; \end{aligned} ,$$

wherein

$p$ is a port index value, $\mu$ is a subcarrier spacing parameter, $a_{k,l}^{(p,\mu)}$ is a demodulation reference signal DMRS symbol corresponding to a demodulation reference signal DMRS port p mapped to a resource element RE with an index $(k,l)_{p,\mu}$, $\beta_{PDSCH}^{DMRS}$ is a power scaling factor or a power control factor, $w_t(l')$ is a time domain cover code sequence element corresponding to a time domain symbol with an index $l'$, $w_f(k')$ is a frequency domain cover code sequence element corresponding to a subcarrier with an index $k'$, $m = 2n + k'$, $n$ is the $n^{th}$ element in a reference signal sequence, $l$ represents an index of an O orthogonal frequency division multiplexing FDM symbol comprised in a slot, $\bar{l}$ is a symbol index of a start time domain symbol occupied by the DMRS symbol or a symbol index of a reference time domain symbol, and $\Delta$ is a subcarrier offset factor.

**50.** A communication method, comprising:

sending, by a network device, first indication information to a terminal device, wherein the first indication information indicates a demodulation reference signal type;
sending, by the network device, second indication information to the terminal device, wherein the second indication information indicates a first value in a plurality of values comprised in a first set, each value in the first set corresponds to a group of port index values, the first set is associated with the demodulation reference signal, a port corresponding to the group of port index values belongs to one or more of the following: a first port set, a second port set, and a third port set, and a time-frequency resource and a sequence corresponding to a port in the third port set are the same as time-frequency resources and sequences corresponding to a part or all of ports in the first port set; and
sending, by the network device, a demodulation reference signal to the terminal device based on a time-frequency resource corresponding to a first group of port index values, wherein the first group of port index values is associated with the first value.

**51.** The method according to claim 50, wherein if the first group of port index values comprises an index value of a fifth port, the network device determines that a sixth port is not indicated to another terminal device; and
the fifth port belongs to the first port set, the sixth port belongs to the second port set, and frequency domain cover code sequences corresponding to the fifth port and the sixth port are non-orthogonal on adjacent subcarriers in a same CDM group.

**52.** The method according to claim 50, wherein if the first group of port index values comprises an index value of a seventh port, the network device indicates a sixth port to another terminal device; and
the sixth port belongs to the second port set, the seventh port belongs to the third port set, and frequency domain cover code sequences corresponding to the sixth port and the seventh port are non-orthogonal on adjacent subcarriers in a same CDM group.

**53.** A communication apparatus, comprising a module or a unit configured to perform the method according to any one of claims 1 to 49, or comprising a module or a unit configured to perform the method according to any one of claims 50 to 52.

**54.** A communication apparatus, comprising a processor, wherein the processor is coupled to a memory, and the memory stores a computer program; and the processor is configured to invoke the computer program in the memory, to enable the communication apparatus to perform the method according to any one of claims 1 to 52.

**55.** A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 52 by using a logic circuit or by executing code instructions.

**56.** A computer-readable storage medium, wherein the storage medium stores a computer program or instructions, and when the computer program or the instructions are executed by a computer, the method according to any one of claims 1 to 52 is implemented.

**57.** A computer program product, wherein when a computer reads and executes the computer program product, the computer is enabled to perform the method according to any one of claims 1 to 52.

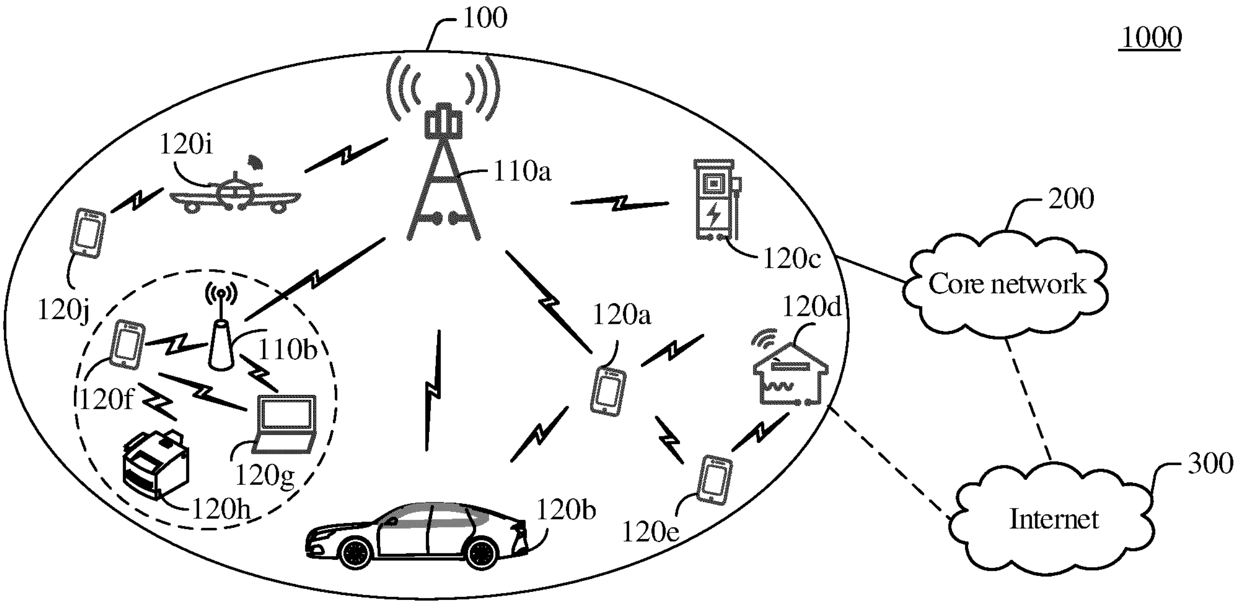
100
1000
120i
110a
120c
200
Core network
120j
120d
120a
110b
120f
120g
120h
120b
120e
300
Internet

FIG. 1

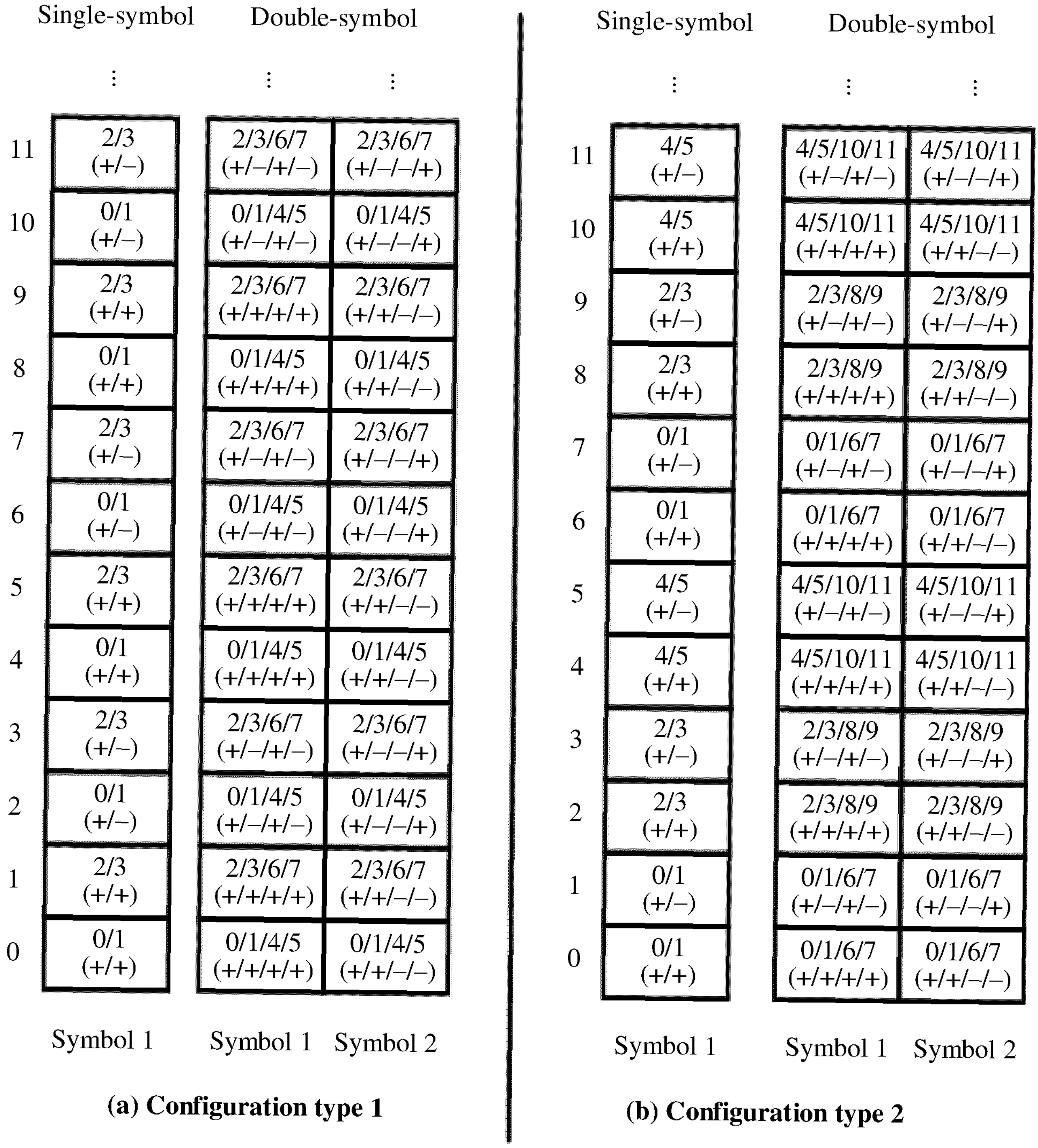
Single-symbol
Double-symbol
11
2/3 (+/–)
2/3/6/7 (+/–/+/–)
2/3/6/7 (+/–/–/+)
10
0/1 (+/–)
0/1/4/5 (+/–/+/–)
0/1/4/5 (+/–/–/+)
9
2/3 (+/+)
2/3/6/7 (+/+/+/+)
2/3/6/7 (+/+/–/–)
8
0/1 (+/+)
0/1/4/5 (+/+/+/+)
0/1/4/5 (+/+/–/–)
7
2/3 (+/–)
2/3/6/7 (+/–/+/–)
2/3/6/7 (+/–/–/+)
6
0/1 (+/–)
0/1/4/5 (+/–/+/–)
0/1/4/5 (+/–/–/+)
5
2/3 (+/+)
2/3/6/7 (+/+/+/+)
2/3/6/7 (+/+/–/–)
4
0/1 (+/+)
0/1/4/5 (+/+/+/+)
0/1/4/5 (+/+/–/–)
3
2/3 (+/–)
2/3/6/7 (+/–/+/–)
2/3/6/7 (+/–/–/+)
2
0/1 (+/–)
0/1/4/5 (+/–/+/–)
0/1/4/5 (+/–/–/+)
1
2/3 (+/+)
2/3/6/7 (+/+/+/+)
2/3/6/7 (+/+/–/–)
0
0/1 (+/+)
0/1/4/5 (+/+/+/+)
0/1/4/5 (+/+/–/–)
Symbol 1
Symbol 1
Symbol 2
(a) Configuration type 1
Single-symbol
Double-symbol
11
4/5 (+/–)
4/5/10/11 (+/–/+/–)
4/5/10/11 (+/–/–/+)
10
4/5 (+/+)
4/5/10/11 (+/+/+/+)
4/5/10/11 (+/+/–/–)
9
2/3 (+/–)
2/3/8/9 (+/–/+/–)
2/3/8/9 (+/–/–/+)
8
2/3 (+/+)
2/3/8/9 (+/+/+/+)
2/3/8/9 (+/+/–/–)
7
0/1 (+/–)
0/1/6/7 (+/–/+/–)
0/1/6/7 (+/–/–/+)
6
0/1 (+/+)
0/1/6/7 (+/+/+/+)
0/1/6/7 (+/+/–/–)
5
4/5 (+/–)
4/5/10/11 (+/–/+/–)
4/5/10/11 (+/–/–/+)
4
4/5 (+/+)
4/5/10/11 (+/+/+/+)
4/5/10/11 (+/+/–/–)
3
2/3 (+/–)
2/3/8/9 (+/–/+/–)
2/3/8/9 (+/–/–/+)
2
2/3 (+/+)
2/3/8/9 (+/+/+/+)
2/3/8/9 (+/+/–/–)
1
0/1 (+/–)
0/1/6/7 (+/–/+/–)
0/1/6/7 (+/–/–/+)
0
0/1 (+/+)
0/1/6/7 (+/+/+/+)
0/1/6/7 (+/+/–/–)
Symbol 1
Symbol 1
Symbol 2
(b) Configuration type 2

FIG. 2

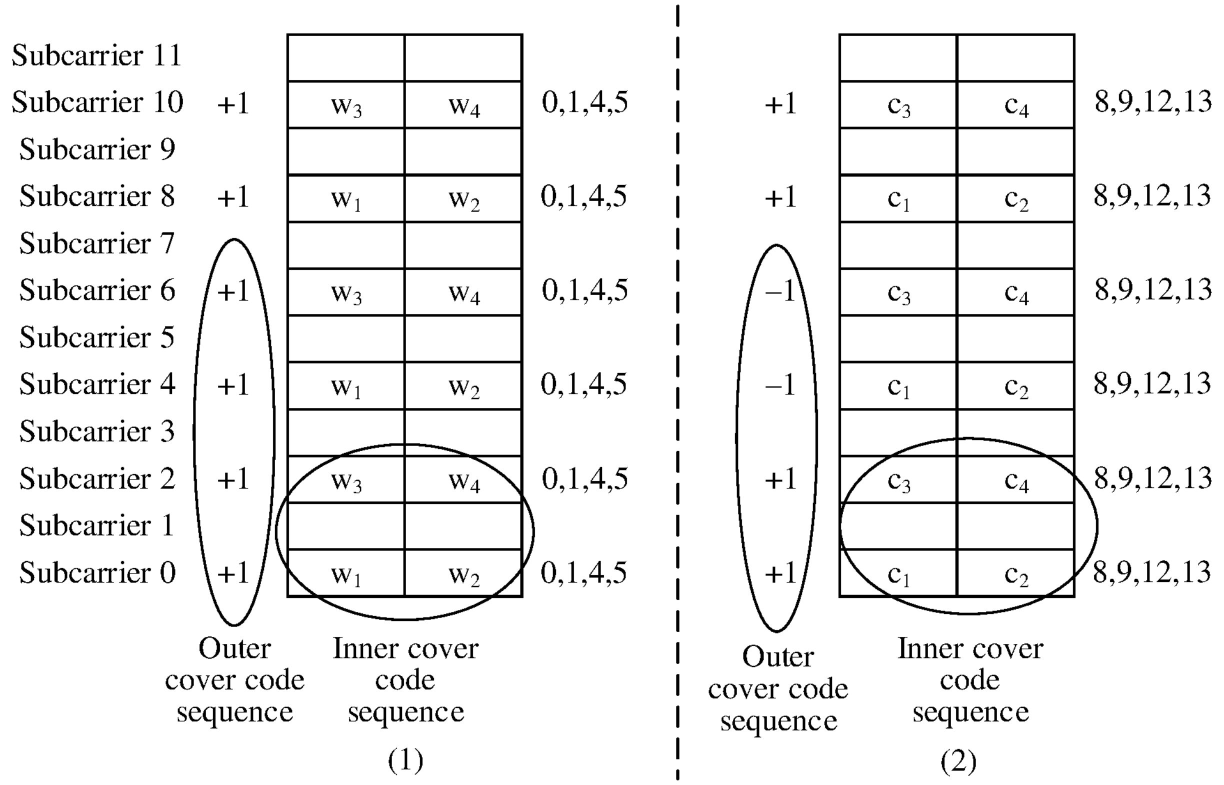
Subcarrier 11
Subcarrier 10
Subcarrier 9
Subcarrier 8
Subcarrier 7
Subcarrier 6
Subcarrier 5
Subcarrier 4
Subcarrier 3
Subcarrier 2
Subcarrier 1
Subcarrier 0
+1
+1
+1
+1
+1
+1
w3 w4 0,1,4,5
w1 w2 0,1,4,5
w3 w4 0,1,4,5
w1 w2 0,1,4,5
w3 w4 0,1,4,5
w1 w2 0,1,4,5
Outer cover code sequence
Inner cover code sequence
(1)
+1
+1
−1
−1
+1
+1
c3 c4 8,9,12,13
c1 c2 8,9,12,13
c3 c4 8,9,12,13
c1 c2 8,9,12,13
c3 c4 8,9,12,13
c1 c2 8,9,12,13
Outer cover code sequence
Inner cover code sequence
(2)

FIG. 3

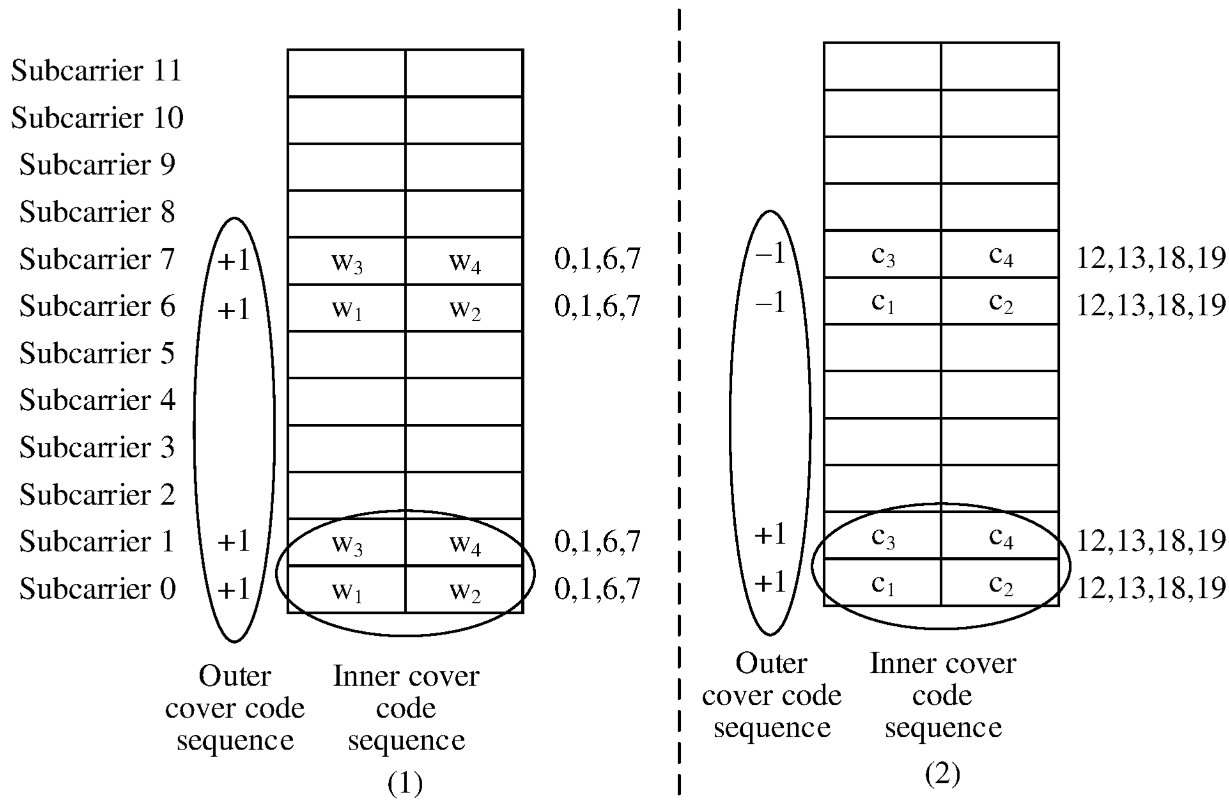
Subcarrier 11
Subcarrier 10
Subcarrier 9
Subcarrier 8
Subcarrier 7
Subcarrier 6
Subcarrier 5
Subcarrier 4
Subcarrier 3
Subcarrier 2
Subcarrier 1
Subcarrier 0
+1
+1
+1
+1
w3 w4 0,1,6,7
w1 w2 0,1,6,7
w3 w4 0,1,6,7
w1 w2 0,1,6,7
Outer cover code sequence
Inner cover code sequence
(1)
−1
−1
+1
+1
c3 c4 12,13,18,19
c1 c2 12,13,18,19
c3 c4 12,13,18,19
c1 c2 12,13,18,19
Outer cover code sequence
Inner cover code sequence
(2)

FIG. 4

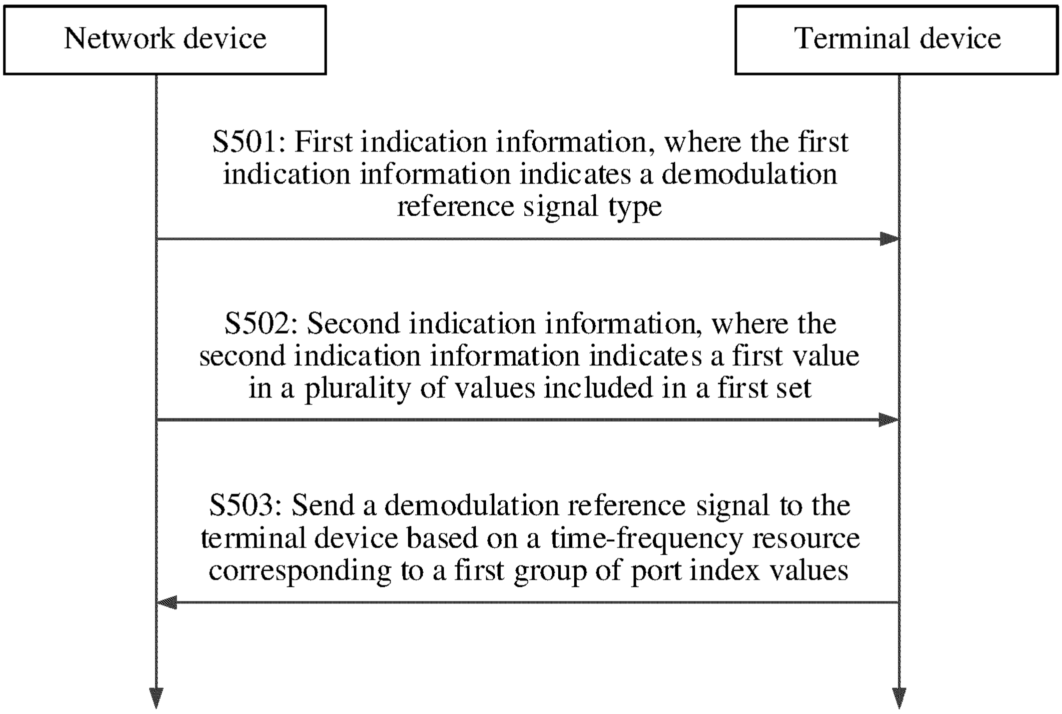
Network device
Terminal device
S501: First indication information, where the first indication information indicates a demodulation reference signal type
S502: Second indication information, where the second indication information indicates a first value in a plurality of values included in a first set
S503: Send a demodulation reference signal to the terminal device based on a time-frequency resource corresponding to a first group of port index values

FIG. 5

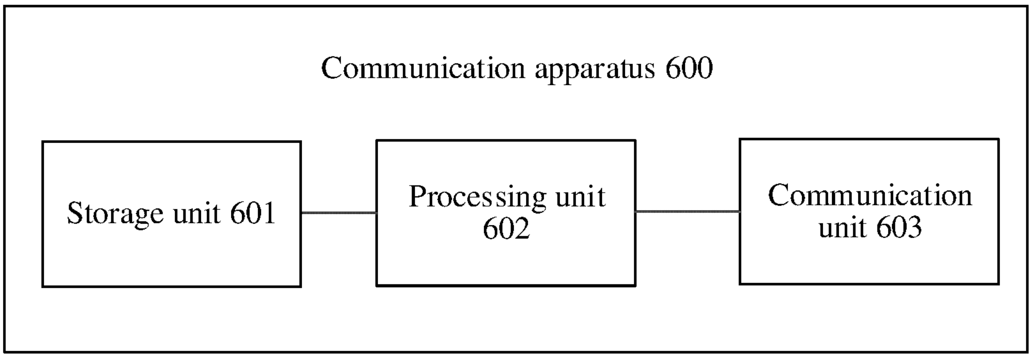
Communication apparatus 600
Storage unit 601
Processing unit 602
Communication unit 603

FIG. 6

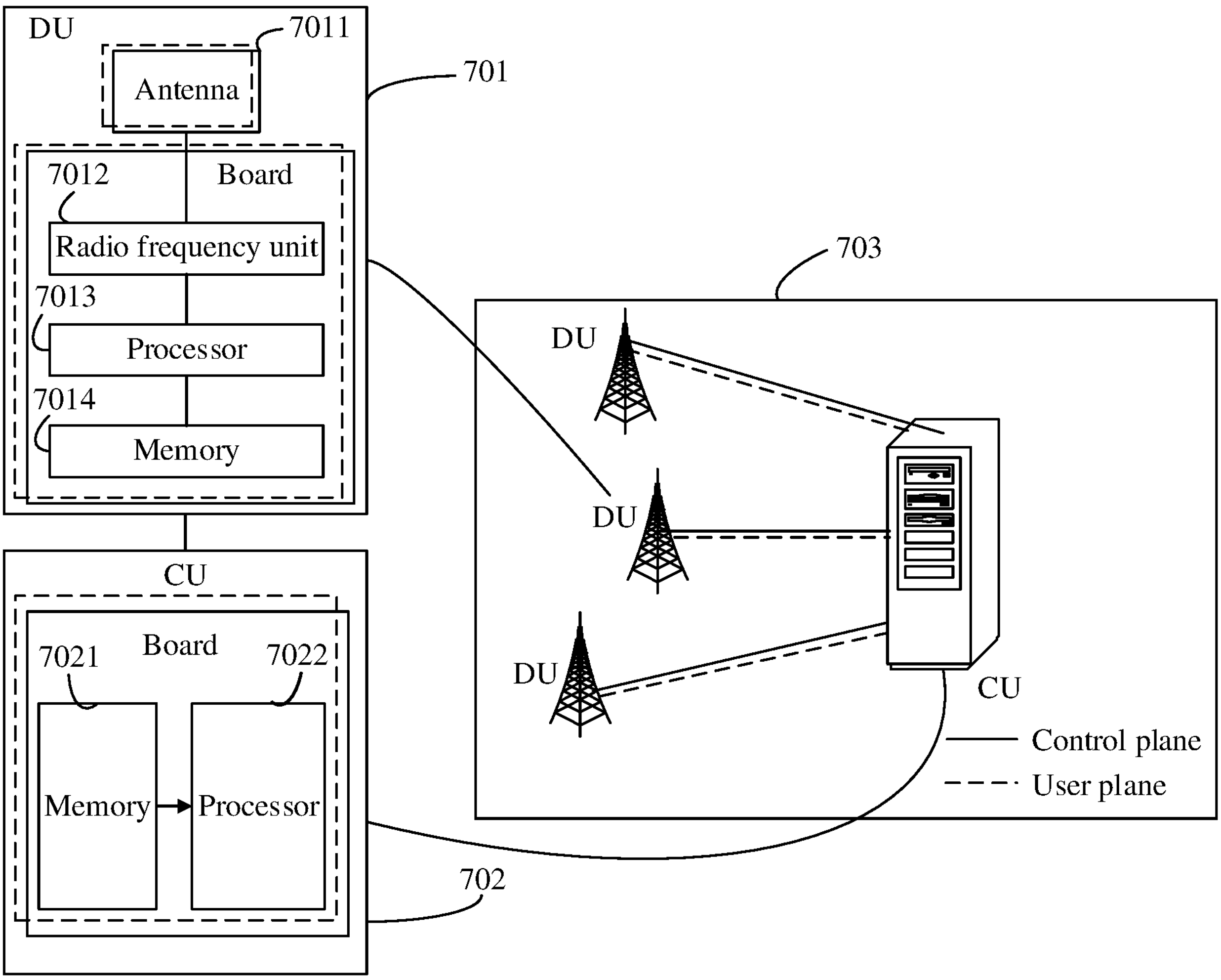
DU
7011
Antenna
701
7012
Board
Radio frequency unit
7013
Processor
7014
Memory
CU
Board
7021
7022
Memory
Processor
702
703
DU
DU
DU
CU
Control plane
User plane

FIG. 7

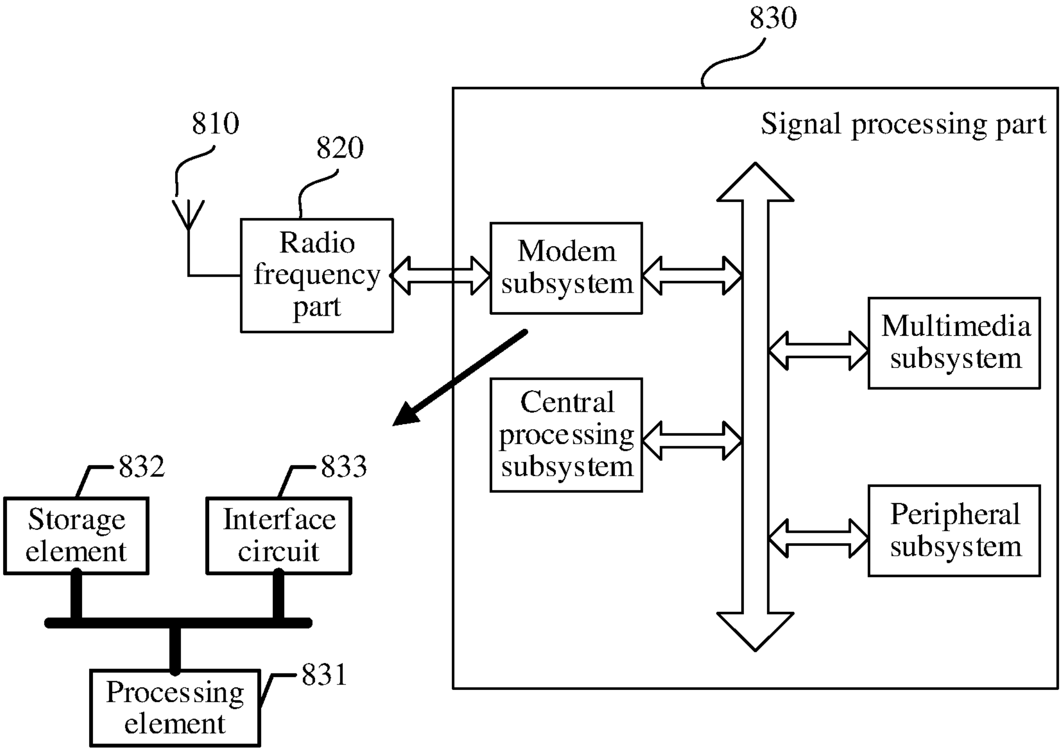
830
Signal processing part
810
820
Radio frequency part
Modem subsystem
Multimedia subsystem
Central processing subsystem
Peripheral subsystem
832
833
Storage element
Interface circuit
Processing element
831

FIG. 8

## INTERNATIONAL SEARCH REPORT

International application No. **PCT/CN2023/109996**

**A. CLASSIFICATION OF SUBJECT MATTER**

H04L5/00(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, DWPI, USTXT, WOTXT, EPTXT, CNKI, 3GPP: 解调参考信号, 端口, 接口, 类型, 索引, 编号, 序号, 分配, 指定, 时频, DMRS, demodulation reference signal, port, interface, type, index, allocation, time frequency.

**C. DOCUMENTS CONSIDERED TO BE RELEVANT**

| Category* | Citation of document, with indication, where appropriate, of the relevant passages | Relevant to claim No. |
|---|---|---|
| A | CN 113225168 A (VIVO COMMUNICATION TECHNOLOGY CO., LTD.) 06 August 2021 (2021-08-06)<br>description, paragraphs [0040]-[0325] | 1-46, 48-57 |
| A | CN 110535616 A (BEIJING SPREADTRUM HIGH-TECH COMMUNICATIONS TECHNOLOGY CO., LTD.) 03 December 2019 (2019-12-03)<br>description, paragraphs [0125]-[0248] | 1-46, 48-57 |
| A | CN 111786754 A (TELECOMMUNICATIONS TECHNOLOGY RESEARCH INSTITUTE CO., LTD.) 16 October 2020 (2020-10-16)<br>description, paragraphs [0051]-[0118] | 1-46, 48-57 |
| A | US 2020343989 A1 (SAMSUNG ELECTRONICS CO., LTD.) 29 October 2020 (2020-10-29)<br>description, paragraphs [0030]-[0419] | 1-46, 48-57 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **13 October 2023** | **25 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/109996**

| Patent document cited in search report | Publication date (day/month/year) | Patent family member(s) | Publication date (day/month/year) |
|---|---|---|---|
| CN 113225168 A | 06 August 2021 | CN 113225168 B | 17 February 2023 |
| CN 110535616 A | 03 December 2019 | CN 110535616 B | 06 May 2022 |
| CN 111786754 A | 16 October 2020 | TW 202038643 A | 16 October 2020 |
| | | TW 749502 B1 | 11 December 2021 |
| | | WO 2020199910 A1 | 08 October 2020 |
| US 2020343989 A1 | 29 October 2020 | US 2019068308 A1 | 28 February 2019 |
| | | US 10651963 B2 | 12 May 2020 |
| | | WO 2019039917 A1 | 28 February 2019 |
| | | US 11218241 B2 | 04 January 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202210969483